# EUROPEAN PATENT APPLICATION

(11) **EP 4 838 890 A1**
(43) Date of publication of application: **11.11.2026**
(21) Application number: 24914525.1
(22) Date of filing: 02.01.2024
(51) Int. Cl.: H04N 19/625

(54) **ENCODING METHOD, DECODING METHOD, BITSTREAM, ENCODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WANG, Fan, Dongguan, Guangdong 523860 (CN)
(74) Representative: RGTH
(86) International application number: PCT/CN2024/070155
(87) International publication number: WO 2025/145288

(57) **Abstract**

Disclosed in the present application are an encoding method, a decoding method, a bitstream, an encoder, a decoder, and a storage medium. The method comprises: decoding a bitstream, so as to determine the value of first syntax identifier information; when the first syntax identifier information indicates that a multi-transform combination mode is applied to the current block, determining at least two first transform coefficients of the current block; determining at least two transform cores of the current block, and performing inverse transform on the at least two first transform coefficients respectively on the basis of the at least two transform cores, so as to determine at least two first residual blocks of the current block; and determining a reconstructed block of the current block on the basis of the at least two first residual blocks. In this way, the processing efficiency can be improved, thereby improving the encoding and decoding performance.

## Description

### TECHNICAL FIELD

Embodiments of the present application relate to the field of video encoding and decoding technology, and in particular, to an encoding method, a decoding method, a bitstream, an encoder, a decoder, and a storage medium.

### BACKGROUND

With increasing demands for video display quality, high-resolution videos such as high-definition videos and ultra-high-definition videos have emerged. However, the high-resolution videos typically contain more information, and thus require greater bandwidth. To reduce bandwidth requirements, video coding standards involving video compression have been introduced.

In the video coding standards, a residual block is not directly encoded but generally subjected to transform first. The transform may include low frequency non-separable transform (LFNST) and non-separable primary transform (NSPT), among others. Both LFNST and NSPT have multiple transform kernel sets, and each transform kernel set includes multiple transform kernels. Although multiple transform kernels are available for selection for a transform block, only a single transform kernel is adopted ultimately, and this results in lower processing efficiency for relatively complex residual blocks.

### SUMMARY

Embodiments of the present application provide an encoding method, a decoding method, a bitstream, an encoder, a decoder, and a storage medium, which can improve processing efficiency, thereby enhancing encoding and decoding performance.

The technical solutions of the embodiments of the present application may be implemented as follows.

In a first aspect, the embodiments of the present application provide a decoding method, which is applied to a decoder and includes:
decoding a bitstream to determine a value of first syntax flag information;
in a case where the first syntax flag information indicates that a current block uses a multiple transform combination mode, determining at least two sets of first transform coefficients of the current block;
determining at least two transform kernels of the current block, and performing inverse transform on the at least two sets of first transform coefficients according to the at least two transform kernels respectively, to determine at least two first residual blocks of the current block; and
determining a reconstructed block of the current block according to the at least two first residual blocks.

In a second aspect, the embodiments of the present application provide an encoding method, which is applied to an encoder and includes:
determining a residual block of a current block;
in a case where the current block uses a multiple transform combination mode, determining at least two first residual blocks of the current block according to the residual block of the current block;
determining at least two transform kernels of the current block, and performing transform on the at least two first residual blocks according to the at least two transform kernels respectively, to determine at least two sets of first transform coefficients of the current block; and
encoding the at least two sets of first transform coefficients of the current block, and signalling obtained encoded bits into a bitstream.

In a third aspect, the embodiments of the present application provide a bitstream, which is generated by performing bit encoding on information to be encoded, and the information to be encoded includes at least one of:
at least two sets of first transform coefficients of a current block, at least two transform kernel indices of the current block, at least two feature index numbers of the current block, transform mode flag information of the current block, a value of first syntax flag information, a value of second syntax flag information, or a value of third syntax flag information;
where the value of the first syntax flag information is used to indicate whether a current sequence is allowed to use a multiple transform combination mode, the second syntax flag information is used to indicate an uppermost residual block of at least two first residual blocks, and the value of the third syntax flag information is used to indicate whether a current slice is allowed to use the multiple transform combination mode.

In a fourth aspect, the embodiments of the present application provide an encoder, which includes a first determination unit, a first transform unit, and an encoding unit; where
the first determination unit is configured to: determine a residual block of a current block, and determine at least two first residual blocks of the current block according to the residual block of the current block in a case where the current block uses a multiple transform combination mode;
the first transform unit is configured to: determine at least two transform kernels of the current block, and perform transform on the at least two first residual blocks according to the at least two transform kernels respectively, to determine at least two sets of first transform coefficients of the current block; and
the encoding unit is configured to: encode the at least two sets of first transform coefficients of the current block, and signal obtained encoded bits into a bitstream.

In a fifth aspect, the embodiments of the present application provide an encoder, which includes a first memory and a first processor; where
the first memory is configured to store a computer program executable on the first processor; and
the first processor is configured to perform, when executing the computer program, the method according to the second aspect.

In a sixth aspect, the embodiments of the present application provide a decoder, which includes a decoding unit, a second determination unit, and a second transform unit; where
the decoding unit is configured to: decode a bitstream to determine a value of first syntax flag information;
the second determination unit is configured to: determine at least two sets of first transform coefficients of a current block in a case where the first syntax flag information indicates that the current block uses a multiple transform combination mode;
the second transform unit is configured to: determine at least two transform kernels of the current block, and perform inverse transform on the at least two sets of first transform coefficients according to the at least two transform kernels respectively, to determine at least two first residual blocks of the current block; and
the second determination unit is further configured to: determine a reconstructed block of the current block according to the at least two first residual blocks.

In a seventh aspect, the embodiments of the present application provide a decoder, which includes a second memory and a second processor; where
the second memory is configured to store a computer program executable on the second processor; and
the second processor is configured to perform, when executing the computer program, the method according to the first aspect.

In an eighth aspect, the embodiments of the present application provide a computer-readable storage medium, which has a computer program stored thereon. When the computer program is executed by at least one processor, the method according to the first aspect or the method according to the second aspect is implemented.

The embodiments of the present application provide an encoding method, a decoding method, a bitstream, an encoder, a decoder, and a storage medium. At the encoding side, a residual block of a current block is determined; in a case where the current block uses a multiple transform combination mode, at least two first residual blocks of the current block are determined according to the residual block of the current block; at least two transform kernels of the current block are determined, and transform is performed on the at least two first residual blocks according to the at least two transform kernels respectively, to determine at least two sets of first transform coefficients of the current block; and the at least two sets of first transform coefficients of the current block are encoded, and obtained encoded bits are signalled into a bitstream. At the decoding side, a bitstream is decoded to determine a value of first syntax flag information; in a case where the first syntax flag information indicates that a current block uses a multiple transform combination mode, at least two sets of first transform coefficients of the current block are determined; at least two transform kernels of the current block are determined, and inverse transform is performed on the at least two sets of first transform coefficients according to the at least two transform kernels respectively, to determine at least two first residual blocks of the current block; and a reconstructed block of the current block is determined according to the at least two first residual blocks. In this way, whether at the encoding side or the decoding side, when it is determined that the current block uses the multiple transform combination mode, it is first necessary to determine the at least two transform kernels of the current block. Then, the encoder performs transform on the at least two first residual blocks of the current block according to the at least two transform kernels respectively, while the decoding side performs inverse transform on the at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

### BRIEF DESCRIPTION OF THE DRAWINGS

FIG. 1 is a schematic block diagram of a flowchart of a hybrid coding architecture.
FIG. 2 is a schematic diagram of discrete cosine transform (DCT).
FIG. 3 is a schematic diagram of basis pictures for DCT.
FIG. 4 is a schematic diagram of an encoding and decoding process without LFNST.
FIG. 5 is a schematic diagram of an encoding and decoding process with LFNST.
FIG. 6 is a schematic diagram of a detailed encoding and decoding process with LFNST.
FIG. 7 is a schematic diagram of basis pictures for multiple transform kernel sets.
FIG. 8 is a schematic diagram of basis pictures for NSPT.
FIG. 9 is a schematic diagram of a network architecture of video encoding and decoding provided in an embodiment of the present application.
FIG. 10 is a schematic block diagram of a system composition of an encoder provided in an embodiment of the present application.
FIG. 11 is a schematic block diagram of a system composition of a decoder provided in an embodiment of the present application.
FIG. 12 is a first schematic flowchart of a decoding method provided in an embodiment of the present application.
FIG. 13A is a first schematic diagram of a single texture.
FIG. 13B is a second schematic diagram of a single texture.
FIG. 13C is a first schematic diagram of a combined texture.
FIG. 14A is a third schematic diagram of a single texture.
FIG. 14B is a fourth schematic diagram of a single texture.
FIG. 14C is a second schematic diagram of a combined texture.
FIG. 15 is a second schematic flowchart of a decoding method provided in an embodiment of the present application.
FIG. 16 is a schematic diagram of a partition line for a geometric partitioning mode (GPM).
FIG. 17 is a third schematic flowchart of a decoding method provided in an embodiment of the present application.
FIG. 18A is a schematic diagram of a decoding process of a residual block.
FIG. 18B is a first schematic diagram of a decoding process with two split residual blocks.
FIG. 18C is a second schematic diagram of a decoding process with two split residual blocks.
FIG. 19 is a fourth schematic flowchart of a decoding method provided in an embodiment of the present application.
FIG. 20A is a first schematic flowchart for determining a reconstructed block provided in an embodiment of the present application.
FIG. 20B is a second schematic flowchart for determining a reconstructed block provided in an embodiment of the present application.
FIG. 21 is a fifth schematic flowchart of a decoding method provided in an embodiment of the present application.
FIG. 22 is a first schematic flowchart of an encoding method provided in an embodiment of the present application.
FIG. 23 is a second schematic flowchart of an encoding method provided in an embodiment of the present application.
FIG. 24 is a third schematic flowchart of an encoding method provided in an embodiment of the present application.
FIG. 25 is a schematic diagram of a composition structure of an encoder provided in an embodiment of the present application.
FIG. 26 is a schematic diagram of a specific hardware structure of an encoder provided in an embodiment of the present application.
FIG. 27 is a schematic diagram of a composition structure of a decoder provided in an embodiment of the present application.
FIG. 28 is a schematic diagram of a specific hardware structure of a decoder provided in an embodiment of the present application.
FIG. 29 is a schematic diagram of a composition structure of an encoding and decoding system provided in an embodiment of the present application.

### DETAILED DESCRIPTION

In order to provide a more detailed understanding of features and technical contents in the embodiments of the present application, the implementations of the embodiments of the present application will be described in detail below with reference to the accompanying drawings. The accompanying drawings are for illustrative purposes only and are not intended to limit the embodiments of the present application.

Unless otherwise defined, all technical and scientific terms used herein have the same meanings as commonly understood by a person skilled in the art to which the present application belongs. The terms used herein are only for the purpose of describing the embodiments of the present application and are not intended to limit the present application.

The "some embodiments" involved in the following description describe a subset of all possible embodiments. But it should be understood that "some embodiments" may refer to the same subset or different subsets of all possible embodiments, and can be combined with each other where no conflict arises.

It should further be pointed out that the terms "first/second/third" involved in the embodiments of the present application are only used to distinguish similar objects and do not imply a specific order of the objects. It should be understood that "first/second/third" can, where permissible, be interchanged in terms of their specific order or sequence, so that the embodiments of the present application described herein can be implemented in an order other than that illustrated or described here.

In a video picture, a coding block (CB) is generally represented by a first color component, a second color component, and a third color component. Here, these three color components are respectively a luma component, a blue chroma component, and a red chroma component. Specifically, the luma component is generally denoted by a symbol Y, the blue chroma component is generally denoted by a symbol Cb or U, and the red chroma component is generally denoted by the symbol Cr or V. In this way, the video picture may be represented in a YCbCr format or a YUV format.

Before the embodiments of the present application are further described in detail, the nouns and terms involved in the embodiments of the present application are described first. The nouns and terms involved in the embodiments of the present application are applicable to the following explanations:
H.265/high efficiency video coding (HEVC);
H.266/versatile video coding (VVC);
reference software test platform for VVC (VVC test model, VTM);
platform with enhanced compression performance after VVC (enhanced compression model, ECM);
joint video experts team (JVET);
coding unit (CU);
coding tree unit (CTU);
largest coding unit (LCU);
prediction unit (PU);
transform unit (TU);
merge technology (merge);
skip technology (skip);
discrete cosine transform (DCT);
discrete sine transform (DST);
multiple transform selection (MTS);
rate-distortion optimized quantization (RDOQ);
low frequency non-separable transform (LFNST);
non-separable primary transform (NSPT); and
context-based adaptive binary arithmetic coding (CABAC).

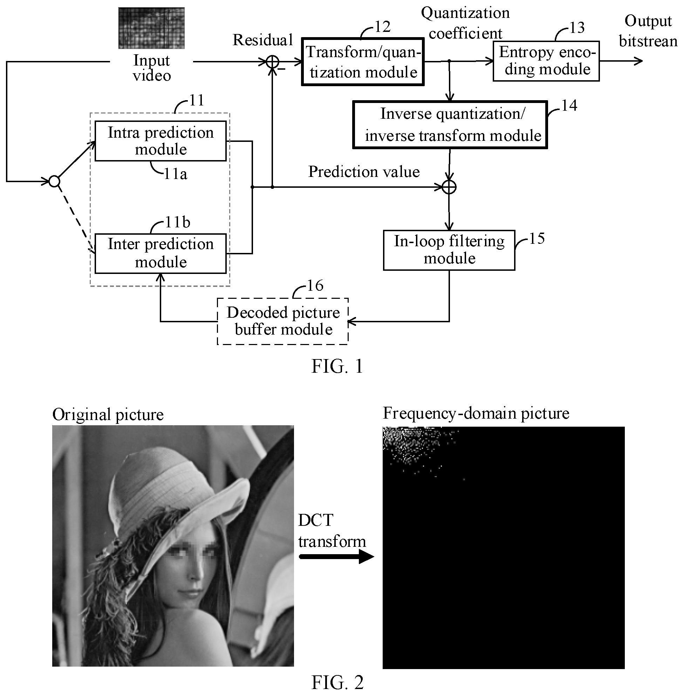

Currently, the general video coding and decoding standards adopt a block-based hybrid coding architecture. Each picture or sub-picture or frame in a video is partitioned into square largest coding units or coding tree units having the same size (e.g., 256×256, 128×128, or 64× 64). Each largest coding unit or coding tree unit can be partitioned into rectangular coding units according to rules. The coding units can be further partitioned into prediction units, transform units, and so on. Specifically, as illustrated in FIG. 1, the hybrid coding architecture includes a prediction module 11, a transform and quantization module 12, an entropy coding module 13, an inverse quantization and inverse transform module 14, an in loop filtering module 15, and a decoded picture buffer module 16. The prediction module 11 may include an intra prediction module 11a and an inter prediction module 11b. The inter prediction module 11b may include a motion estimation module and a motion compensation module. Due to the strong correlation between neighboring samples in a picture of a video, the video encoding and decoding technology utilizes an intra prediction method to eliminate spatial redundancy between neighboring samples. Additionally, due to the strong similarity between adjacent pictures of a video, the video encoding and decoding technology utilizes an inter-picture prediction method to eliminate temporal redundancy between adjacent pictures, thereby improving coding efficiency.

The basic workflow of a video encoder/decoder is as follows. At the encoder side: a picture is partitioned into blocks; intra prediction or inter prediction is applied to a current block to generate a prediction block of the current block; a residual block is obtained by subtracting the prediction block from the original block of the current block; transform and quantization is performed on the residual block to obtain a quantization coefficient matrix; and the quantized coefficient matrix is entropy-encoded and signalled into a bitstream. At the decoder side: intra prediction or inter prediction is applied to a current block to generate a prediction block of the current block; in addition, a bitstream is parsed to obtain a quantization coefficient matrix, and inverse quantization and inverse transform are performed on the quantization coefficient matrix to obtain a residual block; and the residual block is added to the prediction block to obtain a reconstructed block. Reconstructed blocks form a reconstructed picture, and in-loop filtering is performed on the reconstructed picture on a picture basis or a block basis to obtain a decoded picture. The encoder side also needs to perform operations similar to those at the decoder side to obtain the decoded picture. The decoded picture can be used as a reference picture in the inter prediction for subsequent pictures. At the encoder side, if necessary, the determined block partitioning information and mode information or parameter information such as prediction, transform, quantization, entropy encoding and in-loop filtering, need to be signalled into the bitstream. At the decoder side, the same block partitioning information and mode information or parameter information such as prediction, transform, quantization, entropy encoding and in-loop filtering, are determined by parsing the bitstream and analyzing the existing information, which ensures that the decoded picture obtained at the encoder side is identical to that obtained at the decoder side. The decoded picture obtained at the encoder side is also commonly referred to as the reconstructed picture. During prediction, the current block may be partitioned into prediction units, and during transform, the current block may be partitioned into transform units. The partition of the prediction units may be different from the partition of the transform units. The above describes the basic workflow of the video encoder/decoder under the block-based hybrid coding architecture. With the development of technology, some modules or steps in this architecture or this workflow may be optimized. The embodiments of the present application are applied to the basic workflow of the video encoder/decoder under the block-based hybrid coding architecture, but are not limited to this architecture or workflow.

In addition, in the embodiments of the present application, the current block (CB) may refer to a current coding unit, a current prediction unit, or a current transform unit, and so on. Due to the requirement of parallel processing, a picture can be partitioned into slices, and slices within the same picture can be processed in parallel, that is, there is no data dependency between slices. The term "frame" is a common term, and according to the general understanding, one frame refers to one picture. In the embodiments of the present application, the term "frame" may also be replaced with "picture" or "slice" and so on.

The transform technology in the related art will be described in detail below.

During encoding, according to the current general hybrid coding architecture, the prediction is first performed. The prediction adopts spatial or temporal correlation to obtain a picture that is the same as or similar to the current block. For a block, it is possible that the prediction block and the current block are exactly the same, but it is difficult to guarantee this for all blocks in a video, especially for a natural video, or in other words, a video captured by a camera. It is difficult to perfectly predict irregular motion, deformation, occlusion, and changes in illumination in the video. Therefore, in the hybrid coding architecture, a predicted picture is subtracted from an original picture of the current block to obtain a residual picture, or the prediction block is subtracted from the current block to obtain a residual block. The residual block is typically much simpler than the original picture, so prediction can significantly improve the compression efficiency. The residual block is also not directly encoded, but generally subjected to transform first. The transform converts the residual picture from the spatial domain to the frequency domain so as to remove the correlation in the residual picture. After the residual picture is transformed into the frequency domain, since most of the energy is concentrated in the low frequency region, most of the transformed non-zero coefficients are concentrated at the top-left corner. Next, quantization is applied for further compression. Moreover, since the human eye is less sensitive to high frequencies, larger quantization step sizes can be used in high frequency regions.

FIG. 2 is a schematic diagram of DCT transform. As illustrated in FIG. 2, after the DCT transform is performed on the original picture, non-zero coefficients exist only in the top-left region. Certainly, the DCT transform is performed on the entire picture in this example, whereas in video encoding/decoding, a picture is partitioned into blocks for processing, so the transform is also performed on a block basis.

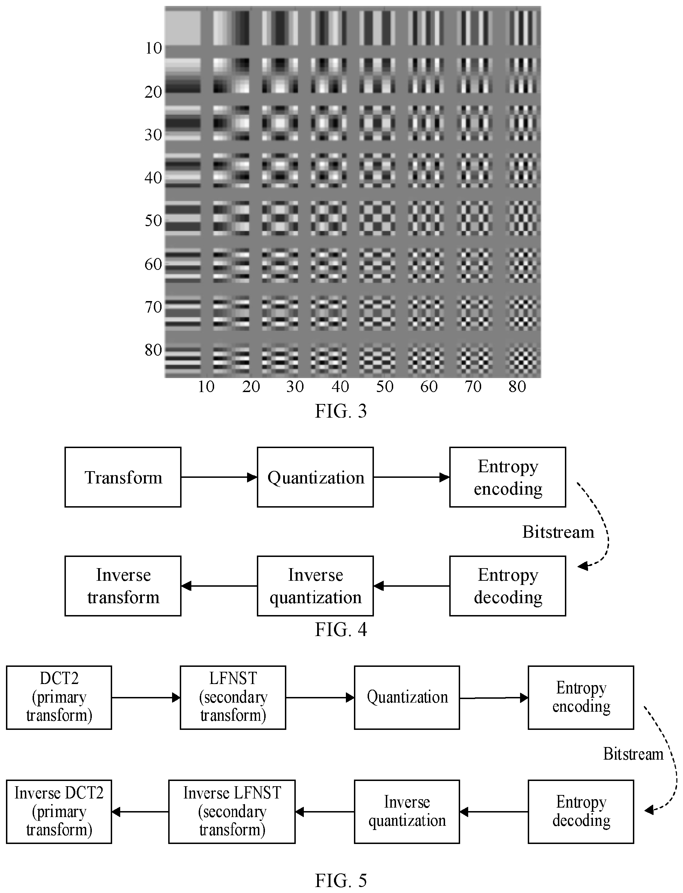

Transform is very useful in general video compression, but not all blocks must undergo a transform. In some cases, the compression effect without transform is better than that with transform. Therefore, in some standards such as VVC, the encoder can choose whether to apply a transform to the current block. Here, DCT2 (DCT-II) is the most commonly used transform in video compression standards, and its basis picture for transform is illustrated in FIG. 3.

In addition, DCT8 (DCT-VIII) and DST7 (DST-VII) may also be used in VVC. The basic formulas for these transforms are listed in Table 1, which shows the basic transform formulas for the N-point input DCT2, DCT8, and DST7.

**Table 1**

| Transform Type | Basis function *Tᵢ*(*j*), *i, j =* 0, 1,..., *N*-1 |
|---|---|
| DCT-II | ${T}_{i} \left(j\right) = {ω}_{0} ⋅ \sqrt{\frac{2}{N}} ⋅ cos \left(\frac{π ⋅ i ⋅ \left(2j+1\right)}{2 N}\right)$ |
| | where, ${ω}_{0} = \left\{\begin{matrix}\sqrt{\frac{2}{N}} & i = 0 \\ 1 & i \neq 0\end{matrix}\right.$ |
| DCT-VIII | ${T}_{i} \left(j\right) = \sqrt{\frac{4}{2 N + 1}} ⋅ cos \left(\frac{π ⋅ \left(2i+1\right) ⋅ \left(2j+1\right)}{4 N + 2}\right)$ |
| DST-VII | ${T}_{i} \left(j\right) = \sqrt{\frac{4}{2 N + 1}} ⋅ sin \left(\frac{π ⋅ \left(2i+1\right) ⋅ \left(j+1\right)}{2 N + 1}\right)$ |

Since pictures are all two-dimensional, directly performing two-dimensional transforms will cause unacceptable computation amount and memory cost for the hardware capabilities at that time. Therefore, the above DCT-II, DCT-VIII and DST-VII transforms adopted in the standard are all implemented in two steps by splitting them into one-dimensional transform in the horizontal direction and one-dimensional transform in the vertical direction. For example, the transform in the horizontal direction is performed first and then the transform in the vertical direction is performed, or the transform in the vertical direction is performed first and then the transform in the horizontal direction is performed.

### (1) Multiple Transform Selection (MTS)

VVC supports transform kernels such as DCT2, DCT8, and DST7. For a block, the encoder can select an appropriate transform kernel and signal an index into a bitstream, and the decoder determines a transform kernel for the inverse transform according to the index. Different transform kernels may be selected for the horizontal direction and the vertical direction, such as DCT8 for the horizontal direction and DST7 for the vertical direction. This technology is generally referred to as MTS.

VVC can use a syntax element mts_idx to determine a transform kernel for primary transform. As shown in Table 2, trTypeHor represents a transform kernel for the horizontal transform, and trTypeVer represents a transform kernel for the vertical transform. In addition, for trTypeHor and trTypeVer, a value of 0 indicates DCT-II transform, a value of 1 indicates DST-VII transform, and a value of 2 indicates DCT-VIII transform.

**Table 2**

| mts_idx | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

### (2) Low frequency non-separable transform (LFNST)

The transform methods described above are effective for textures oriented along horizontal and vertical directions, but they perform less effectively for diagonal textures. Indeed, horizontal textures and vertical textures are the most common, so the above transform methods are very useful for improving compression efficiency. As the demand for higher compression efficiency continues to grow, if diagonal textures can be handled more effectively, compression efficiency can be further improved.

To more effectively handle residuals of diagonal textures, VVC employs the LFNST. The above transforms such as DCT2, DCT8 and DST7 are referred to as primary transforms. At the encoder side in VVC, LFNST is applied after the DCT2 transform and before quantization. At the decoder side in VVC, the LFNST is applied after inverse quantization and before the inverse DCT2 transform.

Because it is applied on the basis of the DCT2 (the primary transform), the LFNST is a secondary transform. FIG. 4 is a schematic diagram of an encoding and decoding process without LFNST (the secondary transform), and FIG. 5 is a schematic diagram of an encoding and decoding process with LFNST (the secondary transform). Certainly, at the encoder side, inverse quantization can be performed directly on the stored quantized coefficients without entropy decoding, because entropy encoding is lossless.

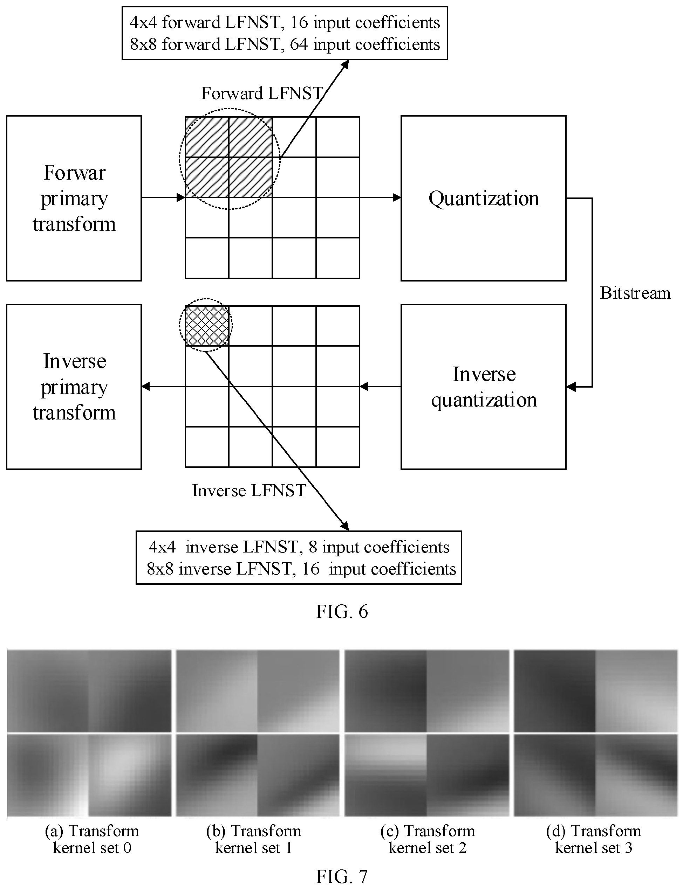

FIG. 6 is a schematic diagram of a detailed encoding and decoding process with LFNST (the secondary transform). As illustrated in FIG. 6, at the encoder side, the process begins with a forward primary transform, followed by the LFNST performing a secondary transform on low-frequency coefficients at the top-left corner after the primary transform. For example, for a 4×4 LFNST, there are 16 input coefficients, and for an 8×8 LFNST, there are 64 input coefficients. The LFNST-transformed coefficients are then quantized, and the quantized coefficients are signalled into the bitstream. At the decoder side, the transform coefficients are obtained by decoding the bitstream and performing inverse quantization. Then, in the inverse LFNST transform, there are 8 input coefficients for a 4×4 inverse LFNST and 16 input coefficients for an 8×8 inverse LFNST. Finally, the inverse primary transform is applied to obtain the residual block.

In other words, at the encoder side, the LFNST performs a secondary transform on the low-frequency coefficients at the top-left corner after the primary transform. The primary transform decorrelates the picture so as to concentrate the energy at the top-left corner. The secondary transform further decorrelates the low-frequency coefficients originating from the primary transform, and the result is visually illustrated in FIG. 6. At the encoder side, 16 coefficients are input to the 4×4 LFNST, and 8 coefficients are output; and 64 coefficients are input to the 8×8 LFNST, and 16 coefficients are output. At the decoder side, 8 coefficients are input to the 4×4 inverse LFNST, and 16 coefficients are output; and 16 coefficients are input to the 8×8 inverse LFNST, and 64 coefficients are output.

FIG. 7 is a schematic diagram of basis pictures for the LFNST in VVC. As can be seen from FIG. 7, there are some obvious diagonal textures. Besides transform kernels optimized for some diagonal textures, the LFNST also includes transform kernels optimized for smooth gradient textures, such as the transform kernel set 0 of the LFNST in VVC.

Angular prediction spreads the reference pixels into the current block as prediction values according to a specified angle, which means that the prediction block exhibits obvious directional textures, and the residual of the current block after angular prediction also exhibits obvious angular characteristics in a statistical sense. Therefore, the transform kernel selected for the LFNST may be bound to the intra prediction mode. That is, once the intra prediction mode is determined, the LFNST can only use a set of transform kernels corresponding to the intra prediction mode.

Specifically, the LFNST in VVC has a total of four sets of transform kernels, with two selectable transform kernels per set. Table 3 lists the correspondences between intra prediction modes and transform kernel sets. It is noted that cross-component prediction modes used for chroma intra prediction are modes 81 to 83, but these modes are not available to the luma intra prediction. The transform kernels of the LFNST can be transposed to allow one transform kernel set to handle more angles. For example, modes 13 to 23 and 45 to 55 both correspond to transform kernel set 2; however, modes 13 to 23 are modes clearly near horizontal, while modes 45 to 55 are modes clearly near vertical.

**Table 3**

| IntraPredMode | Tr. set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

The LFNST in VVC has a total of four sets of transform kernels, and which set is to be used by LFNST is specified according to the intra prediction mode. This approach leverages the correlation between intra prediction mode and the transform kernels of LFNST, thereby reducing the overhead for signaling the selection of LFNST transform kernels in the bitstream. However, whether the current block uses the LFNST, and if the LFNST is applied, whether the first kernel or the second kernel in a set is used, need to be determined according to the bitstream and some conditions.

In the subsequent technological evolution of ECM, the LFNST is further extended. The LFNST has more transform kernel sets, with 35 sets in ECM. The correspondence between the transform kernel set indexes (LFNST set index) and intra prediction modes (Intra pred. mode) is shown in Table 4. Each transform kernel set is more efficient for textures at the corresponding angle. Here, three transform kernels may be selected for each transform kernel set.

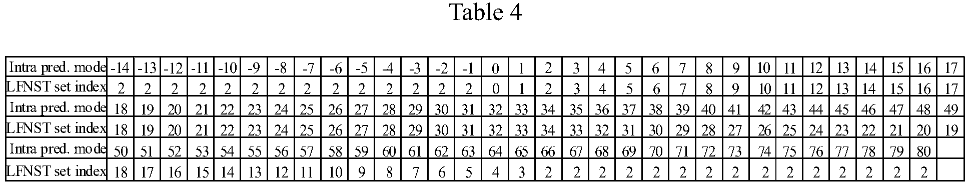

### (3) Non-separable primary transform (NSPT)

The LFNST is a transform that is non-separable in the horizontal direction and the vertical direction, and the DCT2 may be referred to as a primary transform because there is a secondary transform. In this way, the scheme of applying DCT2 first, followed by LFNST, can be considered a compromise solution between performance and complexity, because directly applying a non-separable primary transform is more efficient, but incurs higher complexity, such as greater computing amount and increased storage requirements for the transform kernels.

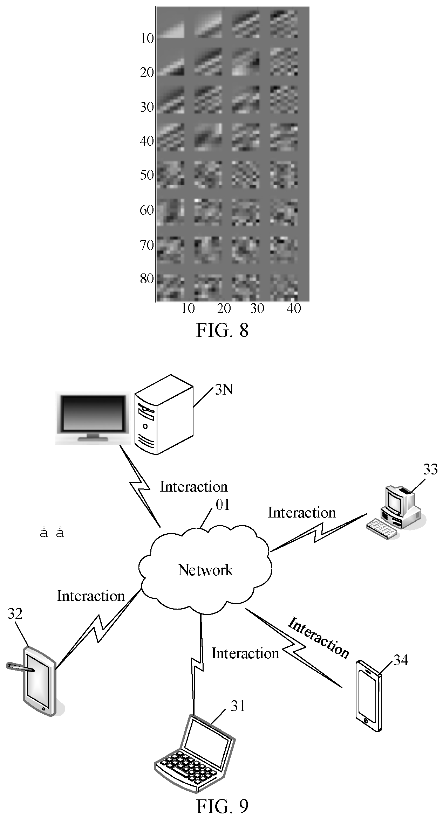

In ECM10, the NSPT can be applied to some small blocks, while larger blocks still use DCT2+LFNST. Examples of small block sizes include 4×4, 4×8, 8×4, 8×8, 4×16, 16×4, 8×16, 16×8, 8×32, and 32×8. In ECM10, the NSPT also matches transform kernel sets based on the intra prediction mode, and for the matching method, reference may be made to the method in the LFNST. Each transform kernel set has three selectable transform kernels. For example, FIG. 8 illustrates an 8×8 basis picture for NSPT in ECM10. FIG. 8 corresponds to inter angular prediction mode 7, and it can be seen that it is more efficient for processing textures at corresponding angle.

It should also be noted that in the embodiments of the present application, the "inverse transform" performed on transform coefficients at the decoder side may also be referred to as "transform" in the standard text. The terms "transform" and "inverse transform" herein correspond to two opposite processes. For example, "transform" converts a value in the spatial domain to a coefficient in the frequency domain, while "inverse transform" converts a coefficient in the frequency domain back to a value in the spatial domain. In addition, if a standard text only specifies the decoding process, the "transform" in the standard text refers to the decoding part, which refers to the "inverse transform" herein. The "inverse transform" performed on transform coefficients at the decoder side may also be referred to as "transform" in the standard text.

It can be seen that the determination path of the residual values or the residual block is very singular. For a transform block, the decoder parses a quantized coefficient block from the bitstream. The size of the quantized coefficient block is identical to that of the transform block. Many positions within the quantized coefficient block may be zero, which is the reason why transform and quantization can improve compression efficiency. Inverse quantization is performed on the quantized coefficient block to obtain a transform coefficient block. Subsequently, inverse transform is performed on the transform coefficient block to obtain the residual block.

The secondary transform LFNST is introduced in VVC. In this case, transforms such as DCT2 are referred to as primary transform. If the current block employs the secondary transform, inverse secondary transform is first performed on the transform coefficient block, and then, inverse primary transform is performed on the obtained transform coefficient block to obtain the residual block; in VVC, DCT2 is used in conjunction with the LFNST. If the current block does not use the secondary transform, inverse primary transform such as DCT2, DCT8 or DST7 is performed on the transform coefficient block, to obtain the residual block. The primary transform in VVC is a separable transform in the horizontal and vertical directions. Which one of DCT2, DCT8 and DST7 is used for the horizontal and vertical directions is determined by MTS. The NSPT is introduced in ECM, and the NSPT is a non-separable primary transform that replaces the combination of DCT2+LFNST for certain block sizes.

Both LFNST and NSPT have multiple transform kernel sets, with each transform kernel set corresponding to a specific texture feature, such as a texture at a particular angle. However, a block can only select one transform kernel from one kernel set, and which specific transform kernel set is selected is matched by the intra prediction mode of the current block. Although multiple transform kernels are available for selection for a transform block, only a single transform kernel is adopted ultimately. If the LFNST is used, it consists of one transform kernel from the LFNST and DCT2.

Based on this, the embodiments of the present application provide an encoding method, which includes: determining a residual block of a current block; in a case where the current block uses a multiple transform combination mode, determining at least two first residual blocks of the current block according to the residual block of the current block; determining at least two transform kernels of the current block, and performing transform on the at least two first residual blocks according to the at least two transform kernels respectively, to determine at least two sets of first transform coefficients of the current block; and encoding the at least two sets of first transform coefficients of the current block, and signalling obtained encoded bits into a bitstream. The embodiments of the present application also provide a decoding method, which includes: decoding a bitstream to determine a value of first syntax flag information; in a case where the first syntax flag information indicates that a current block uses a multiple transform combination mode, determining at least two sets of first transform coefficients of the current block; determining at least two transform kernels of the current block, and performing inverse transform on the at least two sets of first transform coefficients according to the at least two transform kernels respectively, to determine at least two first residual blocks of the current block; and determining a reconstructed block of the current block according to the at least two first residual blocks.

In this way, whether at the encoding side or the decoding side, when it is determined that the current block uses the multiple transform combination mode, it is first necessary to determine the at least two transform kernels of the current block. Then, the encoder performs transform on the at least two first residual blocks of the current block according to the at least two transform kernels respectively, while the decoding side performs inverse transform on the at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

Various embodiments of the present application will be described in detail with reference to the accompanying drawings.

FIG. 9 is a schematic diagram of a network architecture of video encoding and decoding provided in the embodiments of the present application. As illustrated in FIG. 9, the network architecture includes one or more electronic devices 31 to 3N and a communication network 01. The electronic devices 31 to 3N can perform video interaction via the communication network 01. During implementation, the electronic device may be various types of devices with video encoding and decoding capabilities. For example, the electronic device may include a mobile phone, a pad, a personal computer, a personal digital assistant, a navigator, a digital phone, a video phone, a television, a sensor device, a server, which are not limited in the embodiments of the present application.

In the embodiments of the present application, a network architecture of a video encoding and decoding system that includes a decoding method and an encoding method is provided. The decoder or encoder in the embodiments of the present application may be the aforementioned electronic device. In other words, the electronic device in the embodiments of the present application has video encoding and decoding capabilities, and generally includes a video encoder (i.e., an encoder) and a video decoder (i.e., a decoder).

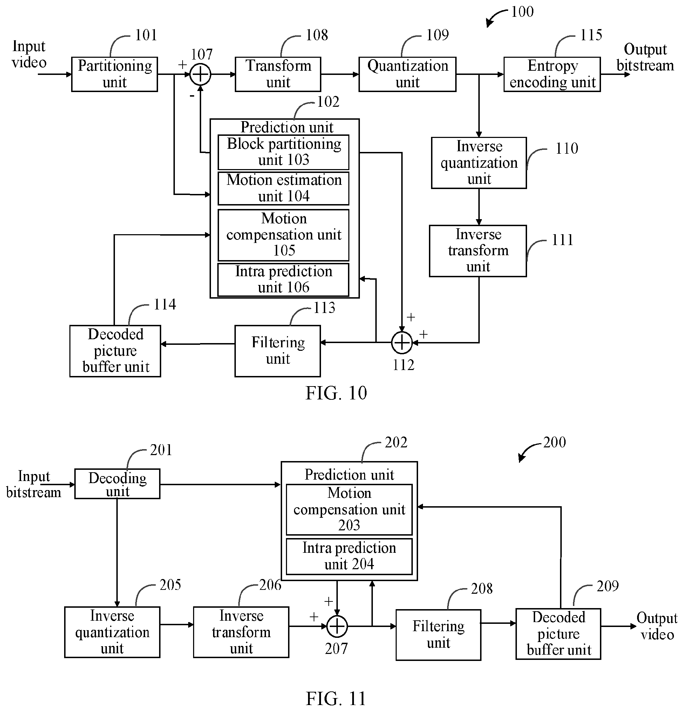

FIG. 10 is a schematic block diagram of a system composition of an encoder provided in the embodiments of the present application. As illustrated in FIG. 10, the encoder 100 may include: a partitioning unit 101, a prediction unit 102, a first adder 107, a transform unit 108, a quantization unit 109, an inverse quantization unit 110, an inverse transform unit 111, a second adder 112, a filtering unit 113, a decoded picture buffer (DPB) unit 114, and an entropy encoding unit 115. Here, the input to the encoder 100 may be a video composed of a series of pictures or a static picture, and the output of the encoder 100 may be a bitstream (also referred to as a "code stream") used to represent a compressed version of the input video.

The partitioning unit 101 partitions a picture in the input video into one or more coding tree units (CTUs). The partitioning unit 101 partitions the picture into multiple tiles (or called tiles), and may further partition one tile into one or more bricks. Here, one tile or one brick may include one or more complete and/or partial CTUs. In addition, the partitioning unit 101 may form one or more slices, where one slice may include one or more tiles arranged in raster order within the picture, or one or more tiles covering a rectangular region of the picture. The partitioning unit 101 may also form one or more sub-pictures, where one sub-picture may include one or more slices, tiles, or bricks.

During the encoding process of the encoder 100, the partitioning unit 101 passes the CTU to the prediction unit 102. Generally, the prediction unit 102 may be composed of a block partitioning unit 103, a motion estimation (ME) unit 104, a motion compensation (MC) unit 105, and an intra prediction unit 106. Specifically, the block partitioning unit 103 further partitions the input CTU into smaller coding units (CUs) by iteratively using quadtree partitioning, binary tree partitioning, and ternary tree partitioning. The prediction unit 102 may use the ME unit 104 and the MC unit 105 to obtain an inter prediction block of the CU. The intra prediction unit 106 may obtain an intra prediction block of the CU by using various intra prediction modes including MIP mode. In an example, a rate-distortion optimized motion estimation method may be invoked by the ME unit 104 and the MC unit 105 to obtain the inter prediction block, and a rate-distortion optimized mode determining method may be invoked by the intra prediction unit 106 to obtain the intra prediction block.

The prediction unit 102 outputs the prediction block of a CU. The first adder 107 calculates a difference between the CU from the output of the partitioning unit 101 and the prediction block of the CU, i.e., the residual CU. The transform unit 108 retrieves the residual CU and performs one or more transforms on the residual CU to obtain coefficients. The quantization unit 109 quantizes the coefficients and outputs the quantized coefficients (i.e., levels). The inverse quantization unit 110 performs a scaling operation on the quantized coefficients to output reconstructed coefficients. The inverse transform unit 111 performs one or more inverse transforms corresponding to the transform(s) in the transform unit 108 and outputs the reconstructed residual. The second adder 112 calculates the reconstructed CU by adding the reconstructed residual and the prediction block of the CU from the prediction unit 102. The second adder 112 also passes its output to the prediction unit 102 to be used as a reference for intra prediction. After all CUs in the picture or sub-picture are reconstructed, the filtering unit 113 performs in-loop filtering on the reconstructed picture or sub-picture. Here, the filtering unit 113 includes one or more filters, such as a deblocking filter, a sample adaptive offset (SAO) filter, an adaptive loop filter (ALF), a luma mapping with chroma scaling (LMCS) filter, and a neural network-based filter. Alternatively, in a case where the filtering unit 113 determines that a CU is not used as a reference for encoding other CUs, the filtering unit 113 performs in-loop filtering on one or more target samples within the CU.

The output of the filtering unit 113 is a decoded picture or sub-picture, and the decoded picture or sub-picture is buffered in the DPB unit 114. The DPB unit 114 outputs the decoded picture or sub-picture based on timing and control information. Here, the picture stored in the DPB unit 114 is also used as a reference for the prediction unit 102 to perform inter prediction or intra prediction. Finally, the entropy encoding unit 115 converts parameters necessary for decoding the picture from the encoder 100 (e.g., control parameters and supplementary information) into binary form and signals the binary form into a bitstream according to a syntax structure of each data unit, that is, the encoder 100 ultimately outputs a bitstream.

Furthermore, the encoder 100 may have a first processor and a first memory storing a computer program. When the first processor reads and executes the computer program, the encoder 100 reads an input video and generates a corresponding bitstream. In addition, the encoder 100 may also be a computing device having one or more chips. These units, implemented as integrated circuits on the chip, have connection and data exchange functions similar to corresponding units in FIG. 10.

FIG. 11 is a schematic block diagram of a system composition of a decoder provided in the embodiments of the present application. As illustrated in FIG. 11, the decoder 200 may include: a decoding unit (or referred to as "parsing unit") 201, a prediction unit 202, an inverse quantization unit 205, an inverse transform unit 206, an adder 207, a filtering unit 208, and a decoded picture buffer unit 209. Here, the input to the decoder 200 is a bitstream representing a compressed version of a video or a static picture, and the output of the decoder 200 may be a decoded video composed of a series of pictures or a decoded static picture.

The input bitstream to the decoder 200 may be a bitstream generated by the encoder 100. The decoding unit 201 parses the input bitstream and obtains values of syntax elements from the input bitstream. The decoding unit 201 converts binary representation of the syntax elements into numerical values and passes the numerical values to units in the decoder 200 to obtain one or more decoded pictures. The decoding unit 201 may further parse one or more syntax elements from the input bitstream for displaying the decoded picture(s).

During the decoding process of the decoder 200, the decoding unit 201 passes the values of the syntax elements and one or more variables which are set or determined according to the values of the syntax elements for obtaining one or more decoded pictures, to the units in the decoder 200.

The prediction unit 202 determines a prediction block of the current decoding block (e.g., a CU). Here, the prediction unit 202 may include a motion compensation unit 203 and an intra prediction unit 204. Specifically, when an inter decoding mode is used for decoding the current decoding block, the prediction unit 202 passes related parameters from the decoding unit 201 to the motion compensation unit 203 to obtain an inter prediction block. When an intra prediction mode (including an MIP mode indicated based on an MIP mode index value) is used for decoding the current decoding block, the prediction unit 202 passes related parameters from the decoding unit 201 to the intra prediction unit 204 to obtain an intra prediction block.

The inverse quantization unit 205 has the same functions as the inverse quantization unit 110 in the encoder 100. The inverse quantization unit 205 performs a scaling operation on quantized coefficients (i.e., levels) from the decoding unit 201 to obtain reconstructed coefficients. The inverse transform unit 206 has the same functions as the inverse transform unit 111 in the encoder 100. The inverse transform unit 206 performs one or more transforms (i.e., an inverse operation of one or more transforms performed by the inverse transform unit 111 in the encoder 100) to obtain a reconstructed residual. The adder 207 performs an addition operation on its inputs (the prediction block from the prediction unit 202 and the reconstructed residual from the inverse transform unit 206) to obtain a reconstructed block of the current decoded block. The reconstructed block is further passed to the prediction unit 202 to serve as a reference for other blocks encoded in the intra prediction mode.

After all CUs in the picture or sub-picture are reconstructed, the filtering unit 208 performs in-loop filtering on the reconstructed picture or sub-picture. The filtering unit 208 includes one or more filters, such as a deblocking filter, a sample adaptive offset filter, an adaptive loop filter, a luma mapping with chroma scaling filter, a neural network-based filter, and so on. Alternatively, in a case where the filtering unit 208 determines that the reconstructed block is not used as a reference for decoding other blocks, the filtering unit 208 performs in-loop filtering on one or more target samples in the reconstructed block. Here, the output of the filtering unit 208 is the decoded picture or sub-picture, which is buffered in the DPB unit 209. The DPB unit 209 outputs the decoded picture or sub-picture according to timing and control information. The picture stored in the DPB unit 209 may also be used as a reference for inter prediction or intra prediction performed by the prediction unit 202.

Furthermore, the decoder 200 may have a second processor and a second memory storing a computer program. When the first processor reads and executes the computer program, the decoder 200 reads an input bitstream and generates a corresponding decoded video. In addition, the decoder 200 may also be a computing device having one or more chips. These units, implemented as integrated circuits on the chip, have connection and data exchange functions similar to corresponding units in FIG. 11.

It should also be noted that in a case where the embodiments of the present application are applied to the encoder 100, the "current block" specifically refers to a block currently to be encoded in a video picture (which may also be referred to as a "coding block" for short). In a case where the embodiments of the present application are applied to the decoder 200, the "current block" specifically refers to a block currently to be decoded in a video picture (which may also be referred to as a "decoding block" for short).

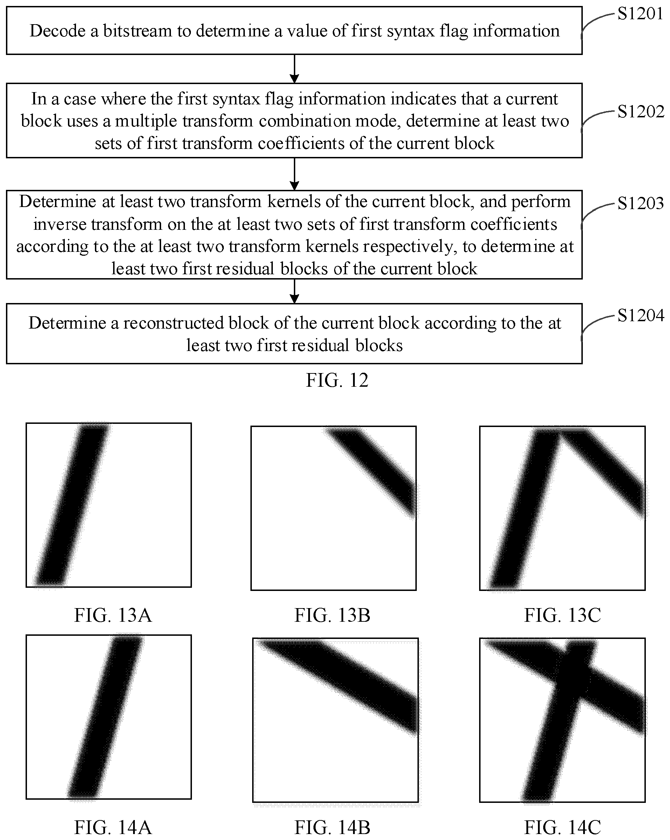

In an embodiment of the present application, FIG. 12 is a first schematic flowchart of a decoding method provided in an embodiment of the present application. As illustrated in FIG. 12, the method may include the following.

In S1201: decode a bitstream to determine a value of first syntax flag information.

It is to be noted that, in the embodiments of the present application, the method is applied to a decoder. Specifically, based on the composition structure of the decoder 200 illustrated in FIG. 11, the decoding method according to the embodiments of the present application may be applied to an intra prediction mode and/or an inter prediction mode. Here, it is mainly aimed at the multiple transform kernel scheme proposed during the transform process to improve compression efficiency.

It is also to be noted that, in the embodiments of the present application, the prediction mode of the current block may include: the inter prediction mode and/or the intra prediction mode. Here, in the intra prediction mode, the current block is mainly predicted based on a reconstructed region surrounding the current block, while in the inter prediction mode, the current block is mainly predicted based on a reference picture of the current block.

Here, both NSPT and LFNST are transforms that can efficiently process textures of various angles. There may be multiple transform kernels, and one transform kernel may be specifically optimized for a particular angular texture. In addition to angular textures, NSPT and LFNST also include transform kernels that process gradient textures. Actually, these transform kernels may also be said to be trained Karhunen-Loeve transforms (KL transforms, KLTs). That is, both NSPT and LFNST may have multiple transform kernels, and each transform kernel is designed for a specific texture. Here, specific textures include angular textures, gradient textures, and so on. In addition, gradient textures can be further expanded, such as horizontal gradient textures, vertical gradient textures, diagonal gradient textures. Compared with NSPT and LFNST, other primary transforms such as DCT2, DCT8 and DST7, although not as specialized, also have their own relatively suitable situations, which is the reason why MTS can improve compression performance. However, what these transform kernels can efficiently process are all single textures, for example, a texture that is all in one direction. The "efficient processing" mentioned here refers to a texture that can be fully represented by only a few coefficients at the top-left corner, or in other words, a texture that can be fully represented by the last few coefficients in the scan order. A transform like DCT2 can process any texture, but if there are many coefficients after transform and even quantization, it cannot be referred to as efficient processing.

Exemplarily, for the single texture described above, assume that the lines in FIG. 13A and FIG. 13B represent the texture of the residual. Such a texture of a straight line at a certain angle can be referred to as a single texture, and the design of LFNST and NSPT in the related art can efficiently process such residuals. Certainly, FIG. 13A and FIG. 13B are only schematic diagrams; typical residual edges are not very sharp, and sharp edges contain a lot of high-frequency information. However, for the texture illustrated in FIG. 13C, it is not a single texture; and it consists of textures of two directions. Currently, transform kernels optimized for a single texture cannot efficiently process such a texture.

If residuals like those in FIG. 13C appear frequently in actual videos, then it is certainly possible to train transform kernels for such textures. However, considering the ever-changing pictures in nature, natural residuals are also ever-changing. If transform kernels are trained for many complex textures, the number of transform kernels would be astonishing.

In a possible implementation, if a complex texture can be split into multiple single textures, then the single textures can be processed separately and then combined. Exemplarily, if the texture in FIG. 13C is split into two single textures as illustrated in FIG. 13A and FIG. 13B, then they can be processed separately. Moreover, it is well known that complex things in nature are composed of simple things, and splitting a complex problem into simple problems for processing conforms to natural laws. Here, the splitting may be achieved by partitioning into smaller blocks, such as partitioning into smaller CUs or smaller TUs. For example, the texture of FIG. 13C can be processed by partitioning it into two left-and-right CUs or TUs. The cost of doing so is various overheads associated with partitioning; and partitioning a block requires transmitting its various necessary information in the bitstream.

In this regard, a texture like that in FIG. 13C is relatively easy to solve by partitioning into small blocks. However, for a texture like that in FIG. 14C, it needs to be partitioned into many small blocks to basically ensure that each small block contains only a simple texture. In practical applications, the texture of FIG. 14C may be composed of those illustrated in FIG. 14A and FIG. 14B. If it is achieved by splitting or decomposing the texture, i.e., decomposing the texture of FIG. 14C into those of FIG. 14A and FIG. 14B, then unnecessary partitioning may be saved, so block partitioning would tend to "using more large blocks and minimizing excessive splitting". The technical solution of the embodiments of the present application employs this approach to solve the problem.

That is, in the embodiments of the present application, the multiple transform kernel scheme here is not limited to non-separable transforms such as NSPT and LFNST; it is also applicable to separable transforms optimized for specific textures, and efficient processing can be achieved by splitting/decomposing textures.

It is to be understood that, in the embodiments of the present application, the first syntax flag information is used to indicate whether a current block uses a multiple transform combination mode. Here, the first syntax flag information may be represented by multi_trans_combine_flag. If a value of the first syntax flag information equals a first value, it may be determined that the current block uses the multiple transform combination mode. If the value of the first syntax flag information equals a second value, it may be determined that the current block does not use the multiple transform combination mode.

Here, the first value and the second value are different, and the first value and the second value may be in parameter form or numeric form. Specifically, the first syntax flag information may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true.

In a specific embodiment, the first value is 1 and the second value is 0. That is, if the decoded value of the first syntax flag information equals 1, it may be determined that the current block uses the multiple transform combination mode; and if the decoded value of the first syntax flag information equals 0, it may be determined that the current block does not use the multiple transform combination mode.

In S1202: in a case where the first syntax flag information indicates that a current block uses a multiple transform combination mode, determine at least two sets of first transform coefficients of the current block.

It should be noted that, in the embodiments of the present application, when it is determined that the current block uses the multiple transform combination mode, it is necessary to distinguish the transform coefficients of the current block to determine the at least two sets of first transform coefficients of the current block.

In a possible implementation, determining the at least two sets of first transform coefficients of the current block may include: decoding the bitstream to determine the at least two sets of first transform coefficients of the current block.

In the embodiments of the present application, the at least two sets of first transform coefficients of the current block may be obtained directly by decoding the bitstream. Here, if a single syntax element (the first syntax flag information) is directly used to determine whether the current block uses the multiple transform combination mode, then the value of the first syntax flag information may be parsed before parsing the transform coefficients. For example, when the value of the first syntax flag information equals 1, the at least two sets of first transform coefficients may be obtained by decoding the bitstream, and the decoding method for each set of transform coefficients is the same as that in the related art. This approach is intuitive: if it is already clear that the current block uses a combination of multiple transforms, then the multiple sets of first transform coefficients can be parsed directly.

In another possible implementation, determining the at least two sets of first transform coefficients of the current block may include: decoding the bitstream to determine second transform coefficients of the current block; and in a case where the first syntax flag information indicates that the current block uses the multiple transform combination mode, determining the at least two sets of first transform coefficients of the current block according to the second transform coefficients.

In the embodiments of the present application, it is also possible to parse the transform coefficients first and then determine whether the combination of multiple transforms is used. That is, the bitstream is decoded first, to determine the second transform coefficients of the current block; then, the bitstream is decoded, to determine the value of the first syntax flag information, and it is determined whether the current block uses the combination of multiple transforms according to the value of the first syntax flag information.

In this implementation, when parsing the transform coefficients, it is not clear whether what needs to be parsed is essentially one set of transform coefficients or multiple sets of transform coefficients, but it is in the form of one set of transform coefficients, i.e., the second transform coefficients of the current block are obtained by decoding. If it is determined that the current block uses the combination of multiple transforms, then the obtained second transform coefficients need to be split into the at least two sets of first transform coefficients.

In a specific implementation, determining the at least two sets of first transform coefficients of the current block according to the second transform coefficients may include: evenly partitioning the second transform coefficients to determine the at least two sets of first transform coefficients of the current block.

In the embodiments of the present application, taking splitting into two sets of transform coefficients as an example, the parsed second transform coefficients may be evenly partitioned, e.g., the first half is the first set of transform coefficients, and the latter half is the second set of transform coefficients. Exemplarily, if there are a total of N coefficients from the first transform coefficient up to the last non-zero transform coefficient, then N/2 coefficients are the first set of transform coefficients, and the remaining N/2 coefficients are the second set of transform coefficients. This approach requires that the encoder meet certain requirements when encoding the transform coefficients, for example, by forcing zero padding or forcibly quantizing certain coefficients to zero to ensure that the boundary between the two sets of coefficients is exactly at N/2.

In another specific implementation, determining the at least two sets of first transform coefficients of the current block according to the second transform coefficients may include: determining a last non-zero coefficient in the second transform coefficients; and partitioning the second transform coefficients according to a partitioning strategy indicated by the last non-zero coefficient to determine the at least two sets of first transform coefficients of the current block.

In the embodiments of the present application, still taking splitting into two sets of transform coefficients as an example, the partitioning strategy indicated by the last non-zero coefficient includes: the last non-zero coefficient indicating a position of a last non-zero coefficient in the first set of transform coefficients, or the last non-zero coefficient indicating a position of a last non-zero coefficient in the second set of transform coefficients, which is not specifically limited here.

In the embodiments of the present application, information for splitting into the two sets of transform coefficients may be hidden in the coefficients here. For example, the last non-zero coefficient represents the position of the last non-zero coefficient in the first set of transform coefficients, i.e., the number of coefficients in scan order from the first coefficient (position (0,0) at the top-left corner) to the last non-zero coefficient in the first set of transform coefficients, minus one. Here, the reason for subtracting one is that each set of transform coefficients should not be all zeros; otherwise, the transform would be meaningless.

Exemplarily, the transform coefficients are arranged in scan order, and the parsed coefficients are 12, 5, 5, 6, 0, 2, 0, 1, 20, 9, 9, 4 and 7. The last non-zero coefficient 7 is not an actual coefficient, but indicates that the eight coefficients at positions 0 to 7 are the first set of transform coefficients, i.e., 12, 5, 5, 6, 0, 2, 0, 1. The remaining coefficients are the second set of transform coefficients, i.e., 20, 9, 9, 4. These coefficients are placed at corresponding positions in the two-dimensional coefficient block, and the values at other positions are zero.

Alternatively, the last non-zero coefficient may also represent the number of coefficients in scan order from the first coefficient in the second set of transform coefficients to the last non-zero coefficient in the second set of transform coefficients, minus one. Here, the reason for subtracting one is that each set of coefficients should not be all zeros; otherwise, the transform would be meaningless.

Exemplarily, the coefficients are arranged in scan order, and the parsed coefficients are 12, 5, 5, 6, 0, 2, 0, 1, 20, 9, 9, 4 and 3. The last non-zero coefficient 3 is not an actual coefficient, but indicates that the second set of transform coefficients in the above coefficients consists of 4 coefficients, i.e., 20, 9, 9, 4. The preceding coefficients are the first set of transform coefficients, i.e., 12, 5, 5, 6, 0, 2, 0, 1. These coefficients are placed at corresponding positions in the two-dimensional coefficient block, and the values at other positions are zero.

Thus, when it is determined that the current block uses the multiple transform combination mode, the at least two sets of first transform coefficients of the current block may be obtained according to different partitioning strategies.

In S1203, determine at least two transform kernels of the current block, and perform inverse transform on the at least two sets of first transform coefficients according to the at least two transform kernels respectively, to determine at least two first residual blocks of the current block.

In S1204, determine a reconstructed block of the current block according to the at least two first residual blocks.

It should be noted that, in the embodiments of the present application, the method for determining the at least two transform kernels of the current block may include: decoding the bitstream to determine the at least two transform kernels of the current block. In this approach, the at least two transform kernels are explicitly signalled into the bitstream.

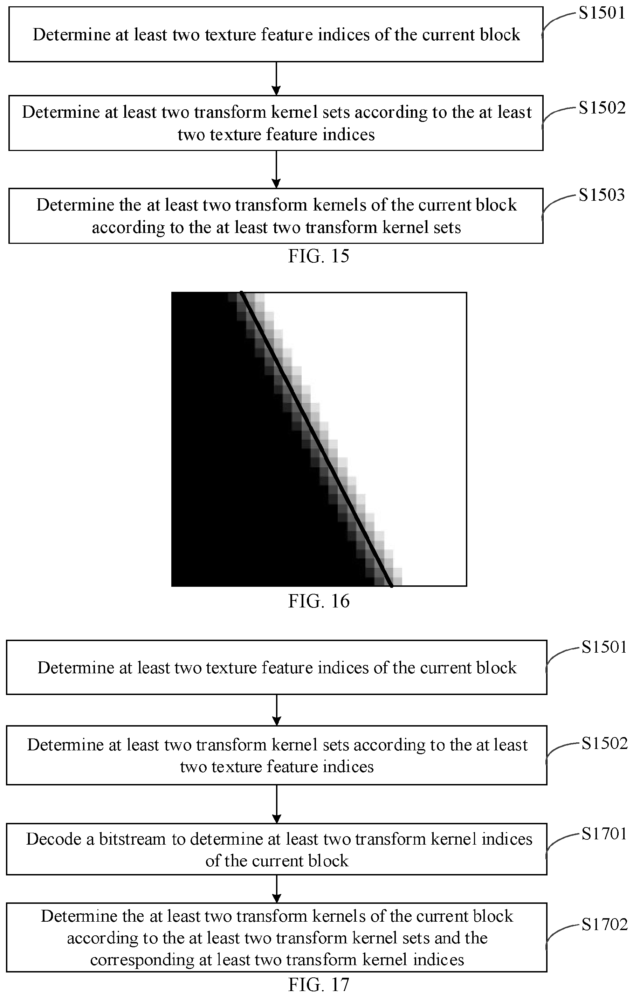

It should also be noted that, in the embodiments of the present application, the at least two transform kernels of the current block may also be determined by a texture feature index. In some embodiments, as illustrated in FIG. 15, the method may include the following.

In S1501, determine at least two texture feature indices of the current block.

It is to be understood that, in the embodiments of the present application, which transform kernel set is selected for intra LFNST and NSPT is automatically matched according to the intra prediction mode. One intra prediction mode represents a type of texture feature; for example, one intra angular prediction mode represents an angle of a texture. Such derivation can reduce bitstream overhead because it no longer requires using syntax elements to signal, in the bitstream, which transform kernel set is selected. In the embodiments of the present application, the transform kernel set for LFNST/NSPT may be derived from certain information of the current block. One intra prediction mode may determine one transform kernel set, or in other words, one texture feature index may correspond to one transform kernel set. For convenience of description, a virtual intra prediction mode (or referred to as "texture feature index") is proposed here. The so-called virtual intra prediction mode means that this mode does not participate in prediction, but is only used to select the transform kernel set for NSPT or LFNST. The derivation of the texture feature index is described in detail below.

In some embodiments, determining the at least two texture feature indices of the current block may include: determining candidate samples for deriving the at least two texture feature indices; and determining the at least two texture feature indices of the current block according to the candidate samples.

In a possible implementation, for the candidate samples, the method may be: determining a prediction block of the current block; and taking at least a portion of samples in the prediction block as the candidate samples.

In the embodiments of the present application, if the prediction block has a certain texture, it may be considered that a residual block has a texture having the same feature. Thus, the candidate samples used for deriving the at least two texture feature indices may be all samples in the prediction block or a portion of samples in the prediction block.

In another possible implementation, for the candidate samples, the method may be: determining neighboring samples in a reconstructed region of the current block; and taking the neighboring samples in the reconstructed region as the candidate samples.

In the embodiments of the present application, the candidate samples used for deriving the at least two texture feature indices may be neighboring samples in the reconstructed region (for example, the reconstructed regions to the left and above the current block) of the current block. Although the reconstructed regions to the left and above are not part of the current block, they are adjacent to the current block. For example, since there may be texture continuity, they may be used to estimate the texture of the current block to a certain extent.

In yet another possible implementation, considering the use of more samples, for the candidate samples, the method may be: jointly taking the neighboring samples in the reconstructed region and at least a portion of samples in the prediction block as the candidate samples.

In the embodiments of the present application, the candidate samples used for deriving the at least two texture feature indices may be a combination of the samples in the prediction block of the current block and the neighboring samples of the reconstructed regions to the left and above the current block. This provides more samples for deriving the texture feature indices, making the derived texture feature indices more accurate.

In still another possible implementation, considering the hardware pipeline length, for the candidate samples, the method may be: determining a reference block of the current block; and taking at least a portion of samples in the reference block as the candidate samples.

In the embodiments of the present application, for the current block, the at least two texture feature indices can be derived only after the prediction block is obtained; after the at least two texture feature indices are determined, the corresponding at least two transform kernels can be determined; and then, inverse transform and subsequent processes can be performed. Here, if the reference block is used to derive the at least two texture feature indices, theoretically, the process of generating the prediction block and the process of deriving the at least two texture feature indices may be performed in parallel, thereby yielding a shorter pipeline than that when using the prediction block. Therefore, the reference block may also be used to derive the at least two texture feature indices, or the at least two texture feature indices may be derived synchronously during the process of generating the prediction block, thereby shortening the pipeline length.

In some embodiments, for the reference block of the current block, it may be determined that the reference block is an integer-pel reference block; or it may be determined that the reference block is a fractional-pel reference block.

In a possible implementation, when using the reference block, an integer-pel reference block may be directly used since the texture direction will not exhibit a significant difference. For example, for a bi-directional prediction inter block, the at least two texture feature indices may be derived according to the integer-pel reference block.

In another possible implementation, the reference block may also use a fractional-pel reference block on which interpolation filtering is performed. Specifically, two reference picture blocks for bi-directional prediction of the current block are determined; fractional-pel interpolation filtering is performed on the two reference picture blocks to determine two fractional-pel reference picture blocks; and weighted combination is performed on the two fractional-pel reference picture blocks to determine the reference block of the current block.

Exemplarily, for a bi-directional prediction inter block, it is first necessary to perform fractional-pel interpolation filtering on the two reference blocks, and then perform weighted combination on the two fractional-pel reference blocks. Then, after obtaining two interpolation-filtered reference blocks, on one hand, a weighted average may be performed according to the interpolation-filtered reference blocks to obtain a prediction value, and on the other hand, the at least two texture feature indices may be derived according to the interpolation-filtered reference blocks.

It is also to be noted that, in the embodiments of the present application, regarding the candidate samples used for deriving the at least two texture feature indices, the number of candidate samples may be at least one, for example, 1, 2, 3, or more. In some embodiments, the number of candidate samples may be determined according to a size parameter of the current block.

That is, when determining the at least two texture feature indices of the current block, the number of candidate samples to be used may be determined by the size parameter of the current block. Exemplarily, if the size of the current block is small, then all available samples may be used for statistics; and if the size of the current block is large, then downsampling may be applied to the current block for statistics, for example, using one sample out of every 2, or 4, or 8 samples in the horizontal direction and/or the vertical direction for statistics. Alternatively, if the size of the current block in a certain direction of either horizontal or vertical is less than or equal to 8, then all available samples in that direction are used for statistics; otherwise, if the size of the current block in a certain direction of either horizontal or vertical is less than or equal to 16, then one sample out of every 2 samples in that direction is used for statistics, otherwise, one sample out of every 4 samples in that direction is used for statistics. The specific implementation is not limited here.

In some embodiments, determining the at least two texture feature indices of the current block according to the candidate samples may include: determining horizontal gradient values and vertical gradient values of the candidate samples; determining texture feature indices and gradient magnitude values corresponding to the candidate samples according to the horizontal gradient values and the vertical gradient values of the candidate samples; constructing a texture feature statistics table according to the texture feature indices and the gradient magnitude values corresponding to the candidate samples; and determining the at least two texture feature indices of the current block according to the texture feature statistics table.

It is to be noted that, in the embodiments of the present application, when determining the texture feature indices and the gradient magnitude values corresponding to the candidate samples according to the horizontal gradient values and the vertical gradient values of the candidate samples, the method may include: performing angle mapping according to the horizontal gradient values and the vertical gradient values of the candidate samples to determine the texture feature indices corresponding to the candidate samples; and performing gradient magnitude calculation according to the horizontal gradient values and the vertical gradient values of the candidate samples to determine the gradient magnitude values corresponding to the candidate samples.

In a specific embodiment, performing angle mapping according to the horizontal gradient values and the vertical gradient values of the candidate samples to determine the texture feature indices corresponding to the candidate samples may include: determining the texture feature indices corresponding to the candidate samples using a preset lookup table according to the horizontal gradient values and the vertical gradient values of the candidate samples.

In the embodiments of the present application, the horizontal gradient value of a candidate sample may be denoted as *gradₓ*, and the vertical gradient value of a candidate sample may be denoted as *grad_{y}*, Thus, deriving the virtual intra prediction mode according to *gradₓ* and *grad_{y}* can be implemented through table lookup.

Exemplarily, if abs(*gradₓ*) equals 0 and abs(*grad_{y}*) does not equal 0, there is a horizontal direction texture, corresponding to intra prediction mode 18 in certain techniques. If abs(*grad_{y}*) equals 0 and abs(*gradₓ*) does not equal 0, there is a vertical direction texture, corresponding to intra prediction mode 50 in certain techniques. In a case where neither abs(*gradₓ*) nor abs(*grad_{y}*) equals 0, if abs(*gradₓ*) equals abs(*grad_{y}*), and *gradₓ* and *grad_{y}* have the same sign, it corresponds to intra prediction mode 34 in certain techniques. If abs(*gradₓ*) equals 2 times abs(*grad_{y}*), and *gradₓ* and *grad_{y}* have the same sign, it corresponds to intra prediction mode 40 in certain techniques. Additionally, other situations can be determined by table lookup according to the same principle.

In a specific embodiment, performing gradient magnitude calculation according to the horizontal gradient values and the vertical gradient values of the candidate samples to determine the gradient magnitude values corresponding to the candidate samples may include: performing addition operations on the absolute values of the horizontal gradient values and the absolute values of the vertical gradient values to determine the gradient magnitude values corresponding to the candidate samples.

Here, the gradient magnitude value corresponding to a candidate sample may be denoted as amp. Exemplarily, amp=abs(*gradₓ*) + abs(*grad_{y}*)*.*

It is to be noted that, in the embodiments of the present application, the horizontal gradient values and the vertical gradient values of the candidate samples may be calculated using the Sobel operator. Exemplarily, for the Sobel operator, it is as shown below:
operator for horizontal gradient value:

| | | |
|---|---|---|
| -1 | 0 | 1 |
| -2 | 0 | 2 |
| -1 | 0 | 1 |

operator for vertical gradient value:

| | | |
|---|---|---|
| -1 | -2 | -1 |
| 0 | 0 | 0 |
| 1 | 2 | 1 |

Thus, assuming the sample value at sample position (x, y) is *P_{x,y},* the calculations of the horizontal gradient value *gradₓ* and the vertical gradient value *grad_{y}* are as follows: ${grad}_{x} = {P}_{x + 1 , y - 1} + 2 ∗ {P}_{x + 1 , y} + {P}_{x + 1 , y + 1} - {P}_{x - 1 , y - 1} - 2 ∗ {P}_{x - 1 , y} - {P}_{x - 1 , y + 1}$ (22) ${grad}_{y} = {P}_{x - 1 , y + 1} + 2 ∗ {P}_{x , y + 1} + {P}_{x + 1 , y + 1} - {P}_{x - 1 , y - 1} - 2 ∗ {P}_{x , y - 1} - {P}_{x + 1 , y - 1}$ (23)

In some embodiments, constructing the texture feature statistics table according to the texture feature indices and the gradient magnitude values corresponding to the candidate samples may include: in a case where a number of the candidate samples is at least one, determining at least one texture feature index and at least one corresponding gradient magnitude value; determining at least one reference texture feature index with mutually distinct characteristics according to the at least one texture feature index, and performing an accumulation calculation on gradient magnitude values belonging to a same reference texture feature index according to the at least one gradient magnitude value to determine an accumulated gradient magnitude value corresponding to the at least one reference texture feature index; and constructing the texture feature statistics table according to the at least one reference texture feature index and the accumulated gradient magnitude value corresponding to the at least one reference texture feature index.

That is, in the embodiments of the present application, taking at least a portion of samples in the prediction block as the candidate samples as an example, gradient values are calculated for all or a portion of the samples in the prediction block. Generally, horizontal gradient values and vertical gradient values may be calculated, and the Sobel operator may be used here to calculate the gradient values. For a certain sample, its texture direction may be inferred according to its horizontal and vertical gradient values. For example, if the horizontal gradient value is non-zero and the vertical gradient value is zero, then the texture of that sample is in the vertical direction. Conversely, if the horizontal gradient value is zero and the vertical gradient value is non-zero, then the texture of that sample is in the horizontal direction. For example, if the horizontal gradient value and the vertical gradient value are equal and non-zero, then the texture of that sample is oriented at 45 degrees. Certainly, there are many other situations in the embodiments of the present application where both the horizontal and vertical gradient values are non-zero, and the texture direction of the sample may be determined according to their ratio. In this way, the gradient magnitude value of each sample may be mapped to the corresponding texture feature index. Thus, the texture feature statistics table is constructed, and the gradient magnitude value of each calculated sample is accumulated into the corresponding texture feature index entry in the statistics table, to obtain the final texture feature statistics table, and then, the at least two texture feature indices of the current block may be determined according to the texture feature statistics table.

In a possible implementation, when determining the at least two texture feature indices of the current block according to the texture feature statistics table, the method may include: sorting the texture feature statistics table in descending order of accumulated gradient magnitude values to determine at least two top-ranked accumulated gradient magnitude values; and determining reference texture feature indices corresponding to the at least two top-ranked accumulated gradient magnitude values as the at least two texture feature indices of the current block.

In the embodiments of the present application, the prediction block may be used to derive the texture feature index, which is applicable to blocks decoded by intra prediction, inter prediction, IBC, and other methods. If the prediction block has a certain texture, it may be imagined that the residual block has a texture with the same feature. Exemplarily, gradient values may be calculated for all or a portion of the samples in the prediction block. Generally, horizontal gradient values and vertical gradient values may be calculated, and the Sobel operator may be used here to calculate the gradient values. For a certain sample, the texture direction of that sample is inferred according to its horizontal and vertical gradient values. For example, if the horizontal gradient value is non-zero and the vertical gradient value is zero, then the texture of that sample is in the vertical direction. Conversely, if the horizontal gradient value is zero and the vertical gradient value is non-zero, then the texture of that sample is in the horizontal direction. For example, if the horizontal gradient value and the vertical gradient value are equal and non-zero, then the texture of that sample is oriented at 45 degrees. Certainly, there are many other situations where both the horizontal and vertical gradient values are non-zero, and the texture direction of the sample may be determined according to their ratio. In this way, the corresponding gradient magnitude value may be determined according to the horizontal and vertical gradient values, and then mapped to the corresponding texture feature index according to the gradient magnitude value. To construct a texture feature index statistics table (i.e., the above "texture feature statistics table"), it is necessary to accumulate the gradient magnitude value of each calculated candidate sample into the corresponding texture feature index entry in the statistics table. After the gradient statistics are completed, the texture feature index statistics table can reflect the texture feature exhibited by the prediction block.

In addition, similar statistics may be performed for DIMD to derive the texture feature index, but the difference is that DIMD uses the reconstructed surrounding region of the current block, whereas here the prediction block of the current block is used. In terms of implementation, this solution may reuse part of the logic of DIMD.

It is also to be noted that regarding the samples used for deriving the texture feature index, the reconstructed regions to the left and above the current block may also be used here, similar to the approach of DIMD. Although the reconstructed regions to the left and above are not part of the current block, they are adjacent to the current block. For example, since there may be texture continuity, they may be used to estimate the texture of the current block to a certain extent. Another possibility is to simultaneously use the prediction block of the current block and the reconstructed regions to the left and above the current block, so that there are more samples available for deriving the texture feature index.

Another possibility is to consider the hardware pipeline length. For the current block, the texture feature index can be derived only after the prediction block is obtained, and the transform kernel for LFNST/NSPT can be determined only after the texture feature index is determined, and then inverse transform and subsequent processes can be performed. If the reference block is used to derive the texture feature index, theoretically, the process of generating the prediction block and the process of deriving the texture feature index may be performed in parallel, thereby yielding a shorter pipeline than that when using the above design. Therefore, the embodiments of the present application may also use the reference block to derive the texture feature index, or derive the texture feature index synchronously during the process of generating the prediction block. When using the reference block, the integer-pel reference block may be directly used since the texture direction will not exhibit a significant difference. For example, for a bi-directional prediction inter block, on one hand, the texture feature index is derived according to the integer-pel reference block, and on the other hand, fractional-pel interpolation filtering is performed on the two reference blocks, and then the two fractional-pel reference blocks are weighted-combined. Specifically, a fractional-pel reference block on which interpolation filtering is performed may also be used here. For example, for a bi-directional prediction inter block, it is first necessary to perform fractional-pel interpolation filtering on the two reference blocks, and then perform weighted combination on the two fractional-pel reference blocks. Then, after obtaining the two interpolation-filtered reference blocks, on one hand, a weighted average may be performed according to the interpolation-filtered reference blocks to obtain a prediction value, and on the other hand, the texture feature index may be derived according to the interpolation-filtered reference blocks.

In some embodiments, when determining the at least two texture feature indices of the current block, the method may further include: determining an angle index in a case where the current block uses a geometric partitioning mode; and determining one texture feature index of the current block according to the angle index.

In the embodiments of the present application, for the texture feature index corresponding to the geometric partitioning mode (GPM), the prediction block of GPM is obtained by combining prediction blocks of two different motions, so it may contain the content of two objects. Generally, the boundary is difficult to be perfectly predicted, so there may be a large residual at the boundary of the two objects, and the direction of this residual is consistent with the "partitioning" direction of GPM. Therefore, for GPM, the "partitioning" mode of GPM may be used to determine the corresponding texture feature index.

In the embodiments of the present application, the partition line may be considered as a line composed of points with the same weight in the region where the weight changes in the weight matrix of GPM, or in other words, a line composed of points whose weight is the median value, and the points whose weight is the median value may not be at integer-pel positions. Taking a weight range from 0 to 8 as an example, the median value may be 4. FIG. 16 is a schematic diagram of a partition line for GPM. As illustrated in FIG. 16, the thickened solid line is the partition line described here. Actually, the weight of GPM is derived according to the partition line.

It is also to be understood that, in the embodiments of the present application, the texture feature indices of the current block may also be directly copied from the texture feature indices of the reference block. In some embodiments, for determining the at least two texture feature indices of the current block, the method may include: determining a reference block of the current block; and determining the at least two texture feature indices of the current block according to at least two intra prediction modes or virtual intra prediction modes of the reference block. Alternatively, the method may include: determining a reference block of the current block; and determining the at least two texture feature indices of the current block according to at least two texture feature indices of the reference block.

It is to be noted that if the reference block of the current block includes an intra-decoded block, then the intra-decoded block has an intra prediction mode, and the at least two intra prediction modes or virtual intra prediction modes of the reference block may be used as the at least two texture feature indices of the current block. If the reference block of the current block includes multiple intra-decoded blocks, the intra prediction mode at a certain position may be determined according to the coordinates. For example, the intra prediction mode of the reference block corresponding to the center position of the current block may be used as one texture feature index of the current block. The (virtual) intra prediction mode may be saved for each inter-decoded block. If the reference block of the current block is an inter-decoded block, then the corresponding texture feature index can be found. In addition, the texture feature indices may also be stored at a certain granularity, for example, using each 4×4 pixel as a minimum storage unit, and each minimum storage unit shares the same intra prediction mode or virtual intra prediction mode. If the reference block of the current block contains multiple 4×4 minimum storage units, the (virtual) intra prediction mode at a certain position may be determined according to the coordinates. For example, the (virtual) intra prediction mode of the minimum storage unit of the reference block corresponding to the center position of the current block may be used as one texture feature index of the current block.

It is also to be understood that, in the embodiments of the present application, a candidate list may also be constructed to determine the at least two texture feature indices of the current block. In some embodiments, the method may further include: constructing a candidate list, where the candidate list includes N candidate texture feature indices, N being an integer greater than 1; decoding the bitstream to determine at least two feature index numbers of the current block; and determining the at least two texture feature indices of the current block according to the candidate list and the at least two feature index numbers. Here, each feature index number represents a corresponding number of a texture feature index of the current block in the candidate list.

It is to be noted that the above embodiments mention using the prediction block or reference block of the current block or the reconstructed picture surrounding the current block to derive the texture feature indices. In a specific embodiment, one or more texture feature indices with the largest gradient magnitude values may be selected for deriving at least two transform kernel sets. In addition, a step may be added to construct a candidate list, i.e., a candidate list of texture feature indices, and then use a syntax element signalled into the bitstream (i.e., the feature index number of the current block) to indicate which candidates are finally selected.

In some embodiments, constructing the candidate list may include: sorting a texture feature statistics table in descending order of accumulated gradient magnitude values to determine N reference texture feature indices corresponding to N top-ranked accumulated gradient magnitude values; and constructing the candidate list according to the N reference texture feature indices.

In some embodiments, constructing the candidate list may include: determining a first texture feature index corresponding to a geometric partitioning mode for the current block, and determining (N-1) reference texture feature indices corresponding to (N-1) top-ranked accumulated gradient magnitude values; and constructing the candidate list according to the first texture feature index and the (N-1) reference texture feature indices.

That is, in the embodiments of the present application, an example of constructing the candidate list is: following the above method for calculating gradient magnitude values, selecting the N top-ranked texture feature indices in descending order of gradient magnitude values to form the candidate list. Here, N may be 2, 3, 4, and so forth. Another example is assuming N is 4, i.e., the texture feature index with the largest gradient magnitude serves as the first element of the candidate list, the texture feature index with the second largest gradient magnitude serves as the second element of the candidate list, and so forth. Yet another example is that for GPM, the first element of the candidate list may be set as the texture feature index corresponding to the "partitioning" mode of GPM, the second element as the texture feature index with the largest gradient magnitude, the third element as the texture feature index with the second largest gradient magnitude, and so forth; or this order may be reversed, which is not specifically limited herein.

In some embodiments, constructing the candidate list may further include: determining a reference block of the current block; and constructing the candidate list according to texture feature indices corresponding to at least two candidate positions in the reference block.

That is, in the embodiments of the present application, the candidate list is constructed according to at least two texture feature indices of the reference block. For example, the candidate list is constructed according to the texture feature indices of 4×4 minimum storage units corresponding to several positions in the reference block. Let the coordinates of the top-left corner of the current block be (x, y), the width of the current block be nCbW, the height of the current block be nCbH, the center point posC of the current block be (x+nCbW/2, y+nCbH/2), the top-left corner posTL be (x, y), the top-right corner posTR be (x+nCbW-1, y), the bottom-left corner posBL be (x, y+nCbH-1), and the bottom-right corner posBR be (x+nCbW-1, y+nCbH-1). The candidate list is constructed using, in order, the intra prediction modes (texture feature indices) of the minimum storage units corresponding to posC, posTL, posTR, posBL, and posBR. Here, the candidate positions may be at least two of posC, posTL, posTR, posBL, or posBR, but are not limited thereto.

In this way, after the candidate list is constructed, the at least two texture feature indices of the current block are determined according to the syntax elements in the bitstream and the candidate list. Here, the syntax elements used are the feature index numbers of the current block. Assuming the current block has two feature index numbers, these two feature index numbers may be denoted by lfnst_nspt_feature_idx0 and lfnst_nspt_feature_idx1, respectively. The values of lfnst_nspt_feature_idx0 and lfnst_nspt_feature_idx1 may each be integers such as 0, 1, 2, 3, etc. Exemplarily, if the value of lfnst_nspt_feature_idx0 is 0, then the first element in the candidate list may be selected; if the value of lfnst_nspt_feature_idx0 is 1, then the second element of the candidate list may be selected, to obtain one of the texture feature indices of the current block. Similarly, according to the value of lfnst_nspt_feature_idx1, another texture feature index of the current block may be obtained.

It is also to be understood that, in the embodiments of the present application, the at least two feature index numbers of the current block are decoded only upon determining that the current block uses LFNST or NSPT. In some embodiments, the method may further include: decoding the bitstream to determine transform mode flag information of the current block; and in a case where the transform mode flag information indicates that the current block uses a first transform mode, performing the step of decoding the bitstream to determine the at least two feature index numbers of the current block.

It should be noted that, in the embodiments of the present application, the transform mode flag information may be denoted by lfnst_nspt_idx, and the transform mode flag information may indicate whether the current block uses the first transform mode. Here, if the value of the transform mode flag information is a first value, it is determined that the current block uses the first transform mode. If the value of the transform mode flag information is a second value, it is determined that the current block does not use the first transform mode.

Here, the first value and the second value are different, and the first value and the second value may be in parameter form or numeric form. Exemplarily, the first value may be 1, and the second value may be 0.

It should also be noted that, in the embodiments of the present application, the first transform mode may be LFNST transform or NSPT transform. That is, lfnst_nspt_idx is used to indicate whether the current block uses the LFNST transform or the NSPT transform. Moreover, when it is determined that the current block uses the LFNST transform or the NSPT transform, lfnst_nspt_feature_idx0 and lfnst_nspt_feature_idx1 are further parsed. If the current block does not use the LFNST transform or the NSPT transform, then lfnst_nspt_feature_idx0 and lfnst_nspt_feature_idx1 are not parsed.

Exemplarily, lfnst_nspt_idx may be used to indicate whether the current block uses LFNST/NSPT. Here, when lfnst_nspt_idx is 0, it indicates that the current block does not use LFNST/NSPT. In this case, lfnst_nspt_feature_idx0 and lfnst_nspt_feature_idx1 need not be parsed. Otherwise (i.e., when lfnst_nspt_idx is not 0), it indicates that the current block uses LFNST/NSPT. In this case, lfnst_nspt_feature_idx0 and lfnst_nspt_feature_idx1 need to be parsed.

It is also to be noted that this method is applicable not only to inter prediction but also to intra prediction. In addition, the two transform kernel sets in the embodiments of the present application cannot be the same. If N is 4, lfnst_nspt_feature_idx0 has four choices, while lfnst_nspt_feature_idx1 has only three choices.

It should also be noted that when constructing the list, the decoding side needs to ensure that each item in the candidate list is unique. If the available texture feature indices cannot fill the list, default texture feature indices, such as horizontal direction and vertical direction texture feature indices, may be added.

In this way, after the candidate list is constructed, the at least two texture feature indices of the current block may also be determined according to the at least two feature index numbers obtained by decoding the bitstream.

In S1502: determine at least two transform kernel sets according to the at least two texture feature indices.

In S1503: determine the at least two transform kernels of the current block according to the at least two transform kernel sets.

It is to be noted that after the texture feature indices of the current block are determined, the transform kernel sets of the current block may be determined according to the correspondence between the texture feature indices and the transform kernel sets. Exemplarily, LFNST in some technologies has a total of 4 transform kernel sets, and the correspondence between intra prediction modes and transform kernel sets is detailed in Table 3. LFNST in some technologies may also have more transform kernel sets, such as 35 sets, and the correspondence between intra prediction modes and transform kernel sets is detailed in Table 4.

It should also be noted that each transform kernel set may include at least two transform kernels. Exemplarily, a transform kernel set may include 2 transform kernels, or may include 3 transform kernels, or may even include 4 selectable transform kernels, or even a larger number of selectable transform kernels, which is not limited thereto.

In some embodiments, referring to FIG. 17, after step S1502, the method may also include the following.

In S1701: decode the bitstream to determine at least two transform kernel indices of the current block.

In S1702: determine the at least two transform kernels of the current block according to the at least two transform kernel sets and the corresponding at least two transform kernel indices.

It should be noted that, in the embodiments of the present application, when the current block uses the first transform mode, it is also necessary to decode the bitstream to determine the at least two transform kernel indices of the current block, and then determine the at least two transform kernels of the current block according to the transform kernel sets and the at least two transform kernel indices; where the transform kernel index is used to indicate the number of the transform kernel of the current block in the corresponding transform kernel set.

Exemplarily, taking a first transform kernel set and a second transform kernel set as an example, the bitstream is decoded to determine a first transform kernel index and a second transform kernel index of the current block; a first transform kernel of the current block is determined according to the first transform kernel set and the first transform kernel index; and a second transform kernel of the current block is determined according to the second transform kernel set and the second transform kernel index; where the first transform kernel index is used to indicate the number of the first transform kernel of the current block in the first transform kernel set, and the second transform kernel index is used to indicate the number of the second transform kernel of the current block in the second transform kernel set.

It is also to be noted that, in the embodiments of the present application, in the case where the transform kernel indices need to be transmitted in the bitstream, the bitstream overhead is large because at least two transform kernel indices need to be transmitted. In this case, if a certain transform kernel set has only one transform kernel, then there is no need to transmit the corresponding transform kernel index. Specifically, when the current block uses the LFNST/NSPT, the unique transform kernel in a certain transform kernel set may be directly used as one of the transform kernels of the current block. Exemplarily, if the first transform kernel set includes only one transform kernel, then the first transform kernel index of the current block is no longer transmitted in the bitstream, and the unique transform kernel in the first transform kernel set is used as the first transform kernel of the current block; or, if the second transform kernel set includes only one transform kernel, then the second transform kernel index of the current block is no longer transmitted in the bitstream, and the unique transform kernel in the second transform kernel set is used as the second transform kernel of the current block.

In this way, after the at least two transform kernels of the current block are determined, inverse transform may be performed on the at least two sets of first transform coefficients according to the at least two transform kernels respectively, to determine the at least two first residual blocks of the current block.

It is to be noted that, in the embodiments of the present application, when performing inverse transform on the at least two sets of first transform coefficients of the current block according to the at least two transform kernels to determine the at least two residual blocks of the current block, the method may include: if a size parameter of the current block satisfies a first condition, performing inverse non-separable primary transform on the at least two sets of first transform coefficients of the current block according to the at least two transform kernels respectively, to determine the at least two first residual blocks of the current block; if the size parameter of the current block satisfies a second condition, performing inverse low-frequency non-separable transform on the at least two sets of first transform coefficients of the current block according to the at least two transform kernels respectively, to determine at least two transform blocks of the current block, and performing inverse discrete cosine transform on the at least two transform blocks of the current block respectively, to determine the at least two first residual blocks of the current block.

Here, the size parameter of the current block satisfying the first condition includes: the size parameter of the current block being relatively small, for example, the size parameter of the current block is smaller than a certain threshold. That is, for a block with a relatively small size, the NSPT transform kernel is used here, i.e., inverse NSPT transform is performed on the at least two sets of first transform coefficients of the current block according to the NSPT transform kernels, to determine the at least two first residual blocks of the current block.

Here, the size parameter of the current block satisfying the second condition includes: the size parameter of the current block being relatively large, for example, the size parameter of the current block is larger than a certain threshold. That is, for a block with a relatively large size, the LFNST transform kernel is used here, i.e., inverse LFNST transform is performed on the at least two sets of first transform coefficients of the current block according to the LFNST transform kernels, to determine the at least two transform blocks of the current block; and inverse DCT2 transform is performed on the at least two transform blocks of the current block, to determine the at least two first residual blocks of the current block.

It is also to be noted that, in the embodiments of the present application, the "inverse transform" performed on transform coefficients at the decoder side may also be referred to as "transform" in the standard text. The terms "transform" and "inverse transform" herein correspond to two opposite processes. For example, "transform" converts a value in the spatial domain to a coefficient in the frequency domain, while "inverse transform" converts a coefficient in the frequency domain back to a value in the spatial domain. "Inverse" is relative to "forward", and both are essentially transforms. It is to be noted that if a standard text only specifies the decoding process, the "transform" in the standard text refers to the decoding part, which refers to the "inverse transform" herein.

That is, in the embodiments of the present application, the final residual block may be formed by combining multiple first residual blocks. The multiple first residual blocks may be referred to as split residual blocks, and the split residual blocks have the same size as the final residual block. Here, at least two split residual blocks may be included. Each split residual block is obtained by inverse transform using its respective transform kernel (if a secondary transform is used, it is a secondary transform kernel and a primary transform kernel). In terms of the process, there may be multiple processes of inverse transform to obtain split residual blocks, and the core is a "parallel" process of multiple inverse transforms, which is the multiple transform combination mode described in the embodiments of the present application.

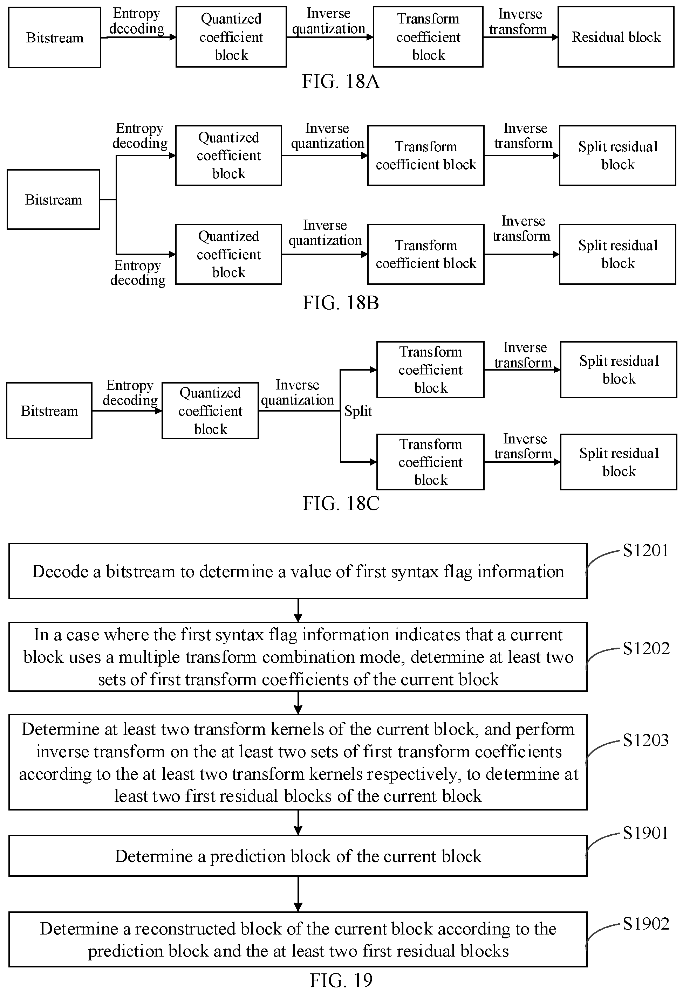

Exemplarily, FIG. 18A is a schematic diagram of a decoding process of a residual block, FIG. 18B is a first schematic diagram of a decoding process with two split residual blocks, and FIG. 18C is a second schematic diagram of a decoding process with two split residual blocks. As illustrated in FIG. 18B and FIG.18C, two split residual blocks are schematically provided here, but there may also be more. Here, the technical solution of the embodiments of the present application may be optional at the block (CU) level, meaning that some blocks adopt the technical solution of the embodiments of the present application, while some blocks adopt the related technical solutions. That is, both processes exist in the entire system.

In a possible implementation, each split residual block corresponds to its own transform coefficient block and quantized coefficient block. Each quantized coefficient block may be parsed from the bitstream, as specifically illustrated in FIG. 18B.

In another possible implementation, one quantized coefficient block may be obtained by decoding from the bitstream, and then after inverse quantization, it may be split into two transform coefficient blocks for inverse transform, as specifically illustrated in FIG. 18C.

In this way, when the current block uses the multiple transform combination mode, inverse transform is performed on the at least two sets of first transform coefficients according to the at least two transform kernels respectively, to determine at least two first residual blocks of the current block, and further determine a reconstructed block of the current block. In some embodiments, for determining the reconstructed block of the current block, as illustrated in FIG. 19, after S1203, the method may include the following.

In S1901: determine a prediction block of the current block.

In S1902: determine a reconstructed block of the current block according to the prediction block and the at least two first residual blocks.

It is to be noted that determining the reconstructed block of the current block according to the prediction block and the at least two first residual blocks may include: performing addition processing according to the prediction block and the at least two first residual blocks to determine the reconstructed block of the current block.

It is also to be noted that determining the reconstructed block of the current block according to the prediction block and the at least two first residual blocks may further include: determining a second residual block according to the at least two first residual blocks; and determining the reconstructed block of the current block according to the prediction block and the second residual block.

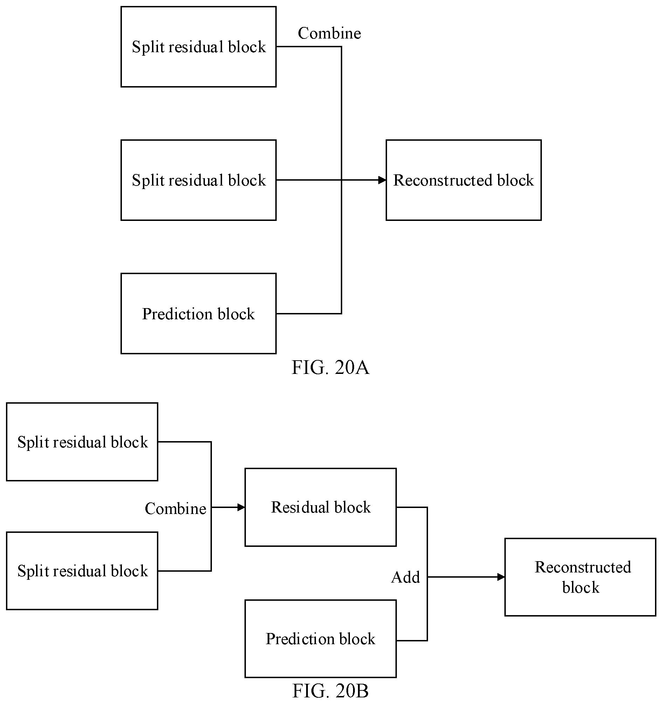

That is, in the embodiments of the present application, the at least two split residual blocks (i.e., the first residual blocks) and the prediction block may be directly added to obtain the reconstructed block, as illustrated in FIG. 20A; alternatively, the at least two split residual blocks (i.e., the first residual blocks) may be combined first to determine the residual block of the current block (i.e., the second residual block), and then the residual block of the current block and the prediction block may be added to obtain the reconstructed block, as illustrated in FIG. 20B. The essence of both is the same.

In a possible implementation, determining the second residual block according to the at least two first residual blocks may include: performing an addition operation on the at least two first residual blocks to determine the second residual block.

It is to be noted that, in the embodiments of the present application, assuming that two split residual blocks are supported in the present technical solution, the residual value of the first split residual block at coordinates (x, y) is *rec*0*_{x,y}*, and the residual value of the second split residual block at coordinates (x, y) is *rec*1*_{x,y}*. The residual value of the final residual block at coordinates (x, y) is *rec_{x,y}*. In this implementation, for each coordinate (x, y) of the current block, *rec_{x,y}* = *rec*0*_{x,y}* + *rec*1_{*x*,*y*}.

In another possible implementation, determining the second residual block according to the at least two first residual blocks may include: in a case where a non-zero overlapping region exists among the at least two first residual blocks, determining an uppermost residual block of the at least two first residual blocks; and determining residual values of the second residual block in the non-zero overlapping region according to the uppermost residual block.

It is to be noted that, in the embodiments of the present application, if the issue of picture overlap is considered, as illustrated in FIG. 14A, FIG. 14B and FIG. 14C, the textures in FIG. 14A and FIG. 14B combine to form the texture in FIG. 14C, but there are some intersecting portions (i.e., there is a non-zero overlapping region). One interpretation is that one texture occludes another texture, which is very common in the real world, such as one object occluding part of another object. In this implementation, one processing approach is that if there is occlusion, it may be assumed that a certain split residual block is always on top. For example, assuming that two split residual blocks are supported in the present technical solution, and the first split residual block is on top, then the residual value of the final residual block in the occluded region may be determined according to the uppermost first split residual block, specifically as follows:

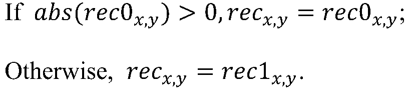

If there are multiple split residual blocks, it may be assumed that the texture of the preceding split residual block is above the texture of the subsequent split residual block.

Another processing approach is to use some syntax elements to indicate which split residual block is on top and which split residual block is at the bottom. That is, determining the uppermost residual block of the at least two first residual blocks may include: decoding the bitstream to determine a value of second syntax flag information; and determining the uppermost residual block of the at least two first residual blocks according to the value of the second syntax flag information.

It is be noted that, in the embodiments of the present application, the value of the second syntax flag information may be used to indicate the uppermost residual block of the at least two first residual blocks. In this way, by decoding the bitstream, the uppermost residual block of the at least two first residual blocks may be determined, and then the residual value of the final residual block in the occluded region may be determined according to the uppermost residual block.

In some embodiments, regarding whether the current block uses the multiple transform combination mode, the method further includes: determining transform coefficients of the current block; and in a case where non-zero coefficient information in the transform coefficients satisfies a preset condition, performing the step of decoding the bitstream to determine the value of the first syntax flag information.

It is to be noted that, in the embodiments of the present application, regarding whether the current block uses the multiple transform combination mode, one implementation is to directly use a syntax element (such as the first syntax flag information) to determine whether the current block uses the multiple transform combination mode. Exemplarily, a CU-level or TU-level multi_trans_combine_flag is used. If the value of multi_trans_combine_flag is 1, it indicates that the current block uses the multiple transform combination mode; otherwise (i.e., the value of multi_trans_combine_flag is 0), it indicates that the current block does not use the multiple transform combination mode.

It is also to be noted that, in the embodiments of the present application, multi_trans_combine_flag may also be parsed conditionally, using some known conditions to exclude situations where multiple transform combination would not be used, thereby saving the overhead of multi_trans_combine_flag. Exemplarily, whether the non-zero coefficient information in the transform coefficients satisfies the preset condition is used to exclude situations where multiple transform combination would not be used. Only when the non-zero coefficient information in the transform coefficients satisfies the preset condition, is the parsing of multi_trans_combine_flag performed.

That is, in the embodiments of the present application, if the texture of the residual block is complex, the number of non-zero coefficients after transform and quantization will still be large. In other words, if the transform kernel cannot efficiently process the texture feature of the residual block, the number of non-zero coefficients after transform and quantization will also be large. For example, a horizontally and vertically separable transform is not very efficient for processing diagonal textures. A transform kernel optimized for a single texture feature may not be very efficient for processing the residual with composite texture features, but splitting the residual with composite texture features into single texture features and using multiple transform kernels each optimized for a single texture feature may be more efficient. This is the original intention of the multiple transform combination mode. An intuitive reflection of so-called efficiency is that the number of non-zero coefficients after transform and quantization is small, or the sum of the values of the non-zero coefficients after transform and quantization is small. Therefore, in the embodiments of the present application, some situations where multiple transform combination is not used can be excluded according to the number of non-zero coefficients, the last non-zero position, or the values of the non-zero coefficients.

In the design of transform kernels for LFNST/NSPT, the number of inputs and outputs of a transform kernel may be different. Taking NSPT as an example, the transform kernel information at the NSPT decoding side in ECM10 is shown in Table 5.

**Table 5**

| Block Size | Number of Inputs | Number of Outputs | Number of Transform Kernel Sets | Number of Transform Kernels per Set |
|---|---|---|---|---|
| 4x4 | 16 | 16 | 35 | 3 |
| 4x8 or 8x4 | 20 | 32 | 35 | 3 |
| 4x16 or 16x4 | 24 | 64 | 35 | 3 |
| 8x8 | 32 | 64 | 35 | 3 |
| 8x16 or 16x8 | 40 | 128 | 35 | 3 |
| 4x32 or 32x4 | 20 | 128 | 35 | 3 |
| 8x32 or 32x8 | 24 | 256 | 35 | 3 |

Exemplarily, taking a 4x16 block as an example, the number of inputs for NSPT is 24, and the number of outputs is 64. The number of outputs is easy to understand because a 4x16 block has 64 samples, so the inverse NSPT transform outputs 64 sample values. The number of inputs is 24, which means that if the current block is to use NSPT for inverse transform, the number of coefficients in scan order from the last non-zero coefficient to the first coefficient (top-left corner (0,0) position) will not exceed 24. In other words, if it exceeds 24, then the current block definitely does not use NSPT. LFNST has a similar design, i.e., for a given block size, if the position of the last non-zero coefficient is less than (or equal to) a threshold, where this threshold is determined by LFNST/NSPT, then it is possible that LFNST/NSPT is used, and the syntax elements of LFNST/NSPT need to be parsed to determine whether the current block uses LFNST/NSPT; otherwise, it is inferred that the current block does not use LFNST/NSPT, and the syntax elements of LFNST/NSPT do not need to be parsed.

In a specific embodiment, the non-zero coefficient information in the transform coefficients satisfying the preset condition may include: the number of coefficients between a first coefficient and a last non-zero coefficient in the transform coefficients not exceeding a first threshold.

That is, in the embodiments of the present application, a threshold (e.g., a first threshold) may also be set for the multiple transform combination mode. If the number of coefficients in scan order from the last non-zero coefficient to the first coefficient (top-left corner (0,0) position) does not exceed the first threshold, then the current block may use the multiple transform combination mode, and multi_trans_combine_flag needs to be parsed. Otherwise, multi_trans_combine_flag does not need to be parsed, and it is inferred that the current block does not use the multiple transform combination mode.

It is also to be noted that the magnitude of the first threshold may be the same as the threshold for a single LFNST/NSPT, or larger than the threshold for a single LFNST/NSPT, or smaller than the threshold for a single LFNST/NSPT. Exemplarily, taking two transform kernels as an example, on the one hand, the maximum number of inputs for these two transform kernels is larger than the input for one transform kernel; on the other hand, the multiple transform combination mode is more efficient than a single transform mode, and an intuitive reflection is that there are fewer non-zero coefficients.

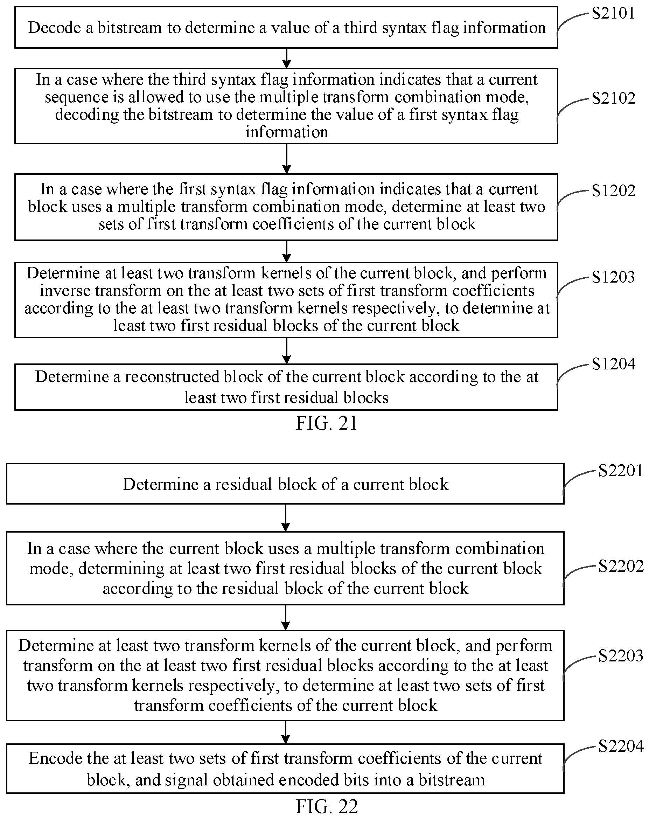

It is also to be understood that, in the embodiments of the present application, a high level syntax may also be applied to enable or disable the present technical solution. In some embodiments, as illustrated in FIG. 21, with respect to S1201, the method further includes the following.

In S2101: decode the bitstream to determine a value of a third syntax flag information.

In S2102: in a case where the third syntax flag information indicates that a current sequence is allowed to use the multiple transform combination mode, decoding the bitstream to determine the value of the first syntax flag information.

It is to be noted that, in the embodiments of the present application, the current sequence may include the current block. The third syntax flag information may be represented by sps_lfnst_nspt_enabled_flag, and the third syntax flag information is a syntax element in a sequence parameter set (SPS).

It is also to be noted that, in the embodiments of the present application, if the value of the third syntax flag information is a first value, it is determined that the third syntax flag information indicates that the current sequence is allowed to use the multiple transform combination mode; and if the value of the third syntax flag information is a second value, it is determined that the third syntax flag information indicates that the current sequence is not allowed to use the multiple transform combination mode.

In the embodiments of the present application, the first value and the second value are different, and the first value and the second value may be in parameter form or numeric form. Specifically, the third syntax flag information may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true. In a specific embodiment, the first value is 1 and the second value is 0.

Further, in some embodiments, the method further includes: decoding the bitstream to determine a value of third syntax flag information; in a case where the third syntax flag information indicates that a current sequence is allowed to use the multiple transform combination mode, decoding the bitstream to determine a value of fifth syntax flag information; and in a case where the fifth syntax flag information indicates that a current picture is allowed to use the multiple transform combination mode, performing the step of decoding the bitstream to determine the value of the first syntax flag information; where the current sequence includes the current picture, and the current picture includes the current block.

It should be noted that, in the embodiments of the present application, the fifth syntax flag information may be represented by ph_inter_lfnst_nspt_enabled_flag, and the fifth syntax flag information is a picture-level syntax element.

It should also be noted that, in the embodiments of the present application, if the value of the fifth syntax flag information is the first value, it is determined that the fifth syntax flag information indicates that the current picture is allowed to use the multiple transform combination mode; and if the value of the fifth syntax flag information is the second value, it is determined that the fifth syntax flag information indicates that the current picture is not allowed to use the multiple transform combination mode.

Further, in some embodiments, the method further includes: decoding the bitstream to determine a value of third syntax flag information; in a case where the third syntax flag information indicates that a current sequence is allowed to use the multiple transform combination mode, decoding the bitstream to determine a value of fourth syntax flag information; and in a case where the fourth syntax flag information indicates that a current slice is allowed to use the multiple transform combination mode, performing the step of decoding the bitstream to determine the value of the first syntax flag information, where the current sequence includes the current slice, and the current slice includes the current block.

It should be noted that, in the embodiments of the present application, the fourth syntax flag information may be represented by sh_lfnst_nspt_enabled_flag, and the fourth syntax flag information is a slice-level syntax element.

It is also to be noted that, in the embodiments of the present application, if the value of the fourth syntax flag information is the first value, it is determined that the fourth syntax flag information indicates that the current slice is allowed to use the multiple transform combination mode; and if the value of the fourth syntax flag information is the second value, it is determined that the fourth syntax flag information indicates that the current slice is not allowed to use the multiple transform combination mode.

In the embodiments of the present application, the first value and the second value are different, and the first value and the second value may be in parameter form or numeric form. Specifically, whether it is the fourth syntax flag information or the fifth syntax flag information, it may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true. In a specific embodiment, the first value is 1 and the second value is 0.

That is, in the embodiments of the present application, a high level syntax may be applied as a switch to flexibly control the present technical solution, such as a sequence-level flag, a picture-level flag, or a slice-level flag. Exemplarily, taking the use of a sequence-level flag as an example, a syntax element sps_lfnst_nspt_enabled_flag is added in the sequence parameter set (SPS). If the value of sps_lfnst_nspt_enabled_flag is 1, the current sequence is allowed to use the present technical solution; and if the value of sps_lfnst_nspt_enabled_flag is 0, the current sequence is not allowed to use the present technical solution. If the present technical solution is allowed, then when decoding the current block, the decoder also needs to decode the block-level multi_trans_combine_flag to determine whether the current block uses the multiple transform combination mode.

The embodiments of the present application also provide a decoding method, which includes: decoding a bitstream to determine a value of first syntax flag information; in a case where the first syntax flag information indicates that a current block uses a multiple transform combination mode, determining at least two sets of first transform coefficients of the current block; determining at least two transform kernels of the current block, and performing inverse transform on the at least two sets of first transform coefficients according to the at least two transform kernels respectively, to determine at least two first residual blocks of the current block; and determining a reconstructed block of the current block according to the at least two first residual blocks. In this way, when it is determined that the current block uses the multiple transform combination mode, firstly, the at least two transform kernels of the current block are determined, and then inverse transform is performed on the at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

In another embodiment of the present application, based on the decoding method described in the above embodiments, FIG. 22 is a first schematic flowchart of an encoding method provided in an embodiment of this application. As illustrated in FIG. 22, the method may include the following.

In S2201: determine a residual block of a current block.

It is to be noted that, in the embodiments of the present application, the method is applied to an encoder. Specifically, based on the composition structure of the encoder 100 illustrated in FIG. 10, the encoding method according to the embodiments of the present application may be applied to an intra prediction mode and/or an inter prediction mode. Here, it is mainly aimed at the multiple transform kernel scheme proposed during the transform process to improve compression efficiency.

It is also to be noted that, in the embodiments of the present application, the prediction mode of the current block may include: the inter prediction mode and/or the intra prediction mode. Here, in the intra prediction mode, the current block is mainly predicted based on a reconstructed region surrounding the current block, while in the inter prediction mode, the current block is mainly predicted based on a reference picture of the current block.

In some embodiments, determining the residual block of the current block may include: determining a prediction block of the current block; and determining the residual block of the current block according to an original picture of the current block and the prediction block of the current block.

It should be noted that, in the embodiments of the present application, after determining the prediction block of the current block, a subtraction operation may be performed on the original picture of the current block and the prediction block of the current block to determine the residual block of the current block.

In S2202: in a case where the current block uses a multiple transform combination mode, determining at least two first residual blocks of the current block according to the residual block of the current block.

In the embodiments of the present application, both NSPT and LFNST are transforms that can efficiently process textures of various angles. There may be multiple transform kernels, and one transform kernel may be specifically optimized for a particular angular texture. In addition to angular textures, NSPT and LFNST also include transform kernels that process gradient textures. Actually, these transform kernels may also be said to be trained Karhunen-Loeve transforms (KL transforms, KLTs). That is, both NSPT and LFNST may have multiple transform kernels, and each transform kernel is designed for a specific texture. Here, specific textures include angular textures, gradient textures, and so on. In addition, gradient textures can be further expanded, such as horizontal gradient textures, vertical gradient textures, diagonal gradient textures. Compared with NSPT and LFNST, other primary transforms such as DCT2, DCT8 and DST7, although not as specialized, also have their own relatively suitable situations, which is the reason why MTS can improve compression performance. However, what these transform kernels can efficiently process are all single textures, for example, a texture that is all in one direction. The "efficient processing" mentioned here refers to a texture that can be fully represented by only a few coefficients at the top-left corner, or in other words, a texture that can be fully represented by the last few coefficients in the scan order. A transform like DCT2 can process any texture, but if there are many coefficients after transform and even quantization, it cannot be referred to as efficient processing.

Exemplarily, for the single texture described above, assume that the lines in FIG. 13A and FIG. 13B represent the texture of the residual. Such a texture of a straight line at a certain angle can be referred to as a single texture, and the design of LFNST and NSPT in the related art can efficiently process such residuals. Certainly, FIG. 13A and FIG. 13B are only schematic diagrams; typical residual edges are not very sharp, and sharp edges contain a lot of high-frequency information. However, for the texture illustrated in FIG. 13C, it is not a single texture; and it consists of textures of two directions. Currently, transform kernels optimized for a single texture cannot efficiently process such a texture.

If residuals like those in FIG. 13C appear frequently in actual videos, then it is certainly possible to train transform kernels for such textures. However, considering the ever-changing pictures in nature, natural residuals are also ever-changing. If transform kernels are trained for many complex textures, the number of transform kernels would be astonishing.

In a possible implementation, if a complex texture can be split into multiple single textures, then the single textures can be processed separately and then combined. Exemplarily, if the texture in FIG. 13C is split into two single textures as illustrated in FIG. 13A and FIG. 13B, then they can be processed separately. Moreover, it is well known that complex things in nature are composed of simple things, and splitting a complex problem into simple problems for processing conforms to natural laws. Here, the splitting may be achieved by partitioning into smaller blocks, such as partitioning into smaller CUs or smaller TUs. For example, the texture of FIG. 13C can be processed by partitioning it into two left-and-right CUs or TUs. The cost of doing so is various overheads associated with partitioning; and partitioning a block requires transmitting its various necessary information in the bitstream.

In this regard, a texture like that in FIG. 13C is relatively easy to solve by partitioning into small blocks. However, for a texture like that in FIG. 14C, it needs to be partitioned into many small blocks to basically ensure that each small block contains only a simple texture. In practical applications, the texture of FIG. 14C may be composed of those illustrated in FIG. 14A and FIG. 14B. If it is achieved by splitting or decomposing the texture, i.e., decomposing the texture of FIG. 14C into those of FIG. 14A and FIG. 14B, then unnecessary partitioning may be saved, so block partitioning would tend to "using more large blocks and minimizing excessive splitting". The technical solution of the embodiments of the present application employs this approach to solve the problem.

That is, in the embodiments of the present application, the current block may adopt the multiple transform combination technical solution, and this technical solution is not limited to non-separable transforms such as NSPT and LFNST; and it is also applicable to separable transforms optimized for specific textures, and efficient processing can be achieved by splitting/decomposing textures.

It is to be understood that, in the embodiments of the present application, regarding whether the current block uses the multiple transform combination mode, the coding cost of the current block using the multiple transform combination mode and the coding cost of the current block not using the multiple transform combination mode (i.e., the current block using a single transform kernel) may be calculated first, and then it is determined according to the magnitude of the two coding costs. If the coding cost of the current block using the multiple transform combination mode is less than the coding cost of the current block not using the multiple transform combination mode, then it may be determined that the current block uses the multiple transform combination mode. If the coding cost of the current block using the multiple transform combination mode is greater than or equal to the coding cost of the current block not using the multiple transform combination mode, then it may be determined that the current block does not use the multiple transform combination mode.

It is to be noted that, in the embodiments of the present application, whether the current block uses the multiple transform combination mode may be represented by first syntax flag information. In some embodiments, the method further includes: determining a value of the first syntax flag information; and encoding the value of the first syntax flag information, and signalling obtained encoded bits into the bitstream.

In the embodiments of the present application, the first syntax flag information is used to indicate whether the current block uses a multiple transform combination mode. The first syntax flag information may be represented by multi_trans_combine_flag. If the current block uses the multiple transform combination mode, it may be determined that the value of the first syntax flag information is a first value. If the current block does not use the multiple transform combination mode, it may be determined that the value of the first syntax flag information is a second value.

Here, the first value and the second value are different, and the first value and the second value may be in parameter form or numeric form. Specifically, the first syntax flag information may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true.

In a specific embodiment, the first value is 1 and the second value is 0. That is, if the current block uses the multiple transform combination mode, it is determined that the value of the first syntax flag information equals 1; and if the current block does not use the multiple transform combination mode, it is determined that the value of the first syntax flag information equals 0; so that the decoding side can determine, according to the value of the first syntax flag information, whether the current block uses the multiple transform combination mode.

In the embodiments of the present application, when the current block uses the multiple transform combination mode, the residual block of the current block may be formed by combining multiple residual blocks, and these multiple residual blocks may be referred to as split residual blocks (i.e., first residual blocks). In some embodiments, determining the at least two first residual blocks of the current block according to the residual block of the current block may include: performing pre-analysis on the residual block of the current block using a preset manner to determine whether the current block uses the multiple transform combination mode, and in a case where the current block uses the multiple transform combination mode, partitioning the residual block of the current block into the at least two first residual blocks.

In the embodiments of the present application, the decoder needs to decode from the bitstream the mode selected by the encoder, and then perform decoding according to the decoded mode. The encoder needs to select the mode or parameter it considers best from a variety of possible modes or parameters and transmit them into the bitstream. For the multiple transform combination mode, it needs to allocate one residual block to at least two transform kernels for encoding. Whether the residual block of the current block is suitable for the multiple transform combination mode, and which residuals each transform kernel should encode, can be determined using a preset manner. The preset manner may include a gradient statistics manner, a neural network manner, an RDOQ manner, and so on.

Exemplarily, one possible implementation is that the encoder performs pre-analysis before attempting the combination of multiple transforms to determine whether the residual block of the current block is suitable for the multiple transform combination mode, such as detecting whether there are two types of texture in the residual block, and whether the texture in the residual block is consistent with the texture suitable for the transform kernels. For example, the detection manner may use a gradient statistics manner, similar to the manner used when deriving texture feature indices. This can exclude some situations that are not suitable for the combination of multiple transforms and reduce the burden on the encoder.

Another possible implementation is to adopt some neural network-based means for pre-analysis to determine whether the residual block of the current block is suitable for the multiple transform combination mode, and to split the residual block into two parts, for example, splitting the texture of FIG. 14C into those of FIG. 14A and FIG. 14B. In this way, the split residuals can be handed over to different transform kernels for processing.

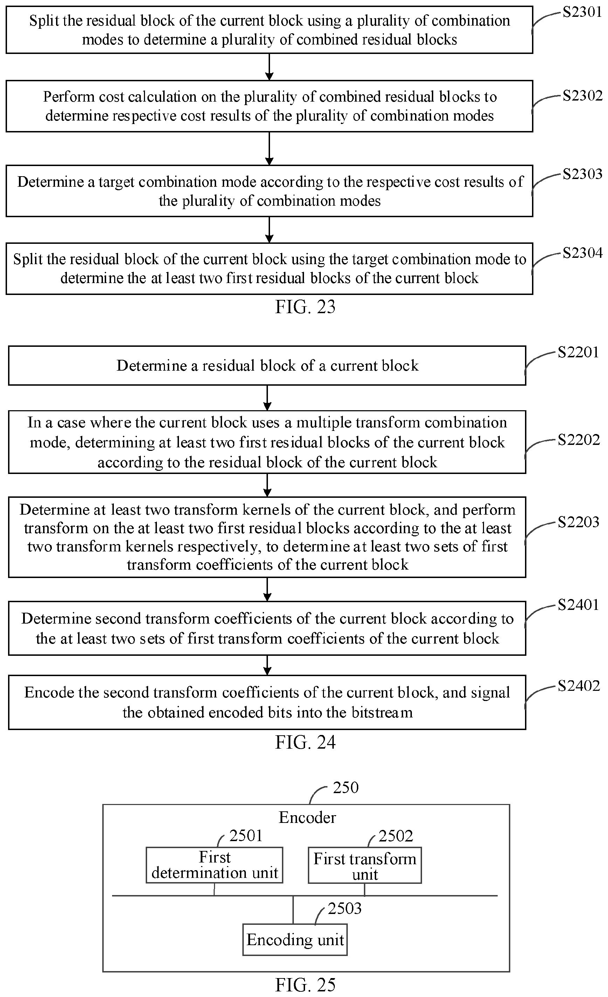

In yet another possible implementation, an RDOQ approach may also be adopted. As illustrated in FIG. 23, the method may include the following.

In S2301: split the residual block of the current block using a plurality of combination modes to determine a plurality of combined residual blocks.

In S2302: perform cost calculation on the plurality of combined residual blocks to determine respective cost results of the plurality of combination modes.

In S2303: determine a target combination mode according to the respective cost results of the plurality of combination modes.

In S2304: split the residual block of the current block using the target combination mode to determine the at least two first residual blocks of the current block.

In a specific embodiment, determining the target combination mode according to the respective cost results of the plurality of combination modes may include: determining a minimum cost result from the respective cost results of the plurality of combination modes, and determining a combination mode corresponding to the minimum cost result as the target combination mode.

It is to be noted that each combined residual block includes at least two split residual blocks. Here, firstly, the plurality of combined residual blocks of the current block is determined based on a plurality of combination modes of split residual blocks. Then, cost calculation, such as RDOQ cost calculations, is performed on the plurality of combined residual blocks respectively, and the combination mode corresponding to the minimum cost value is selected. Then, the at least two split residual blocks of the current block are determined according to the combination mode corresponding to the minimum cost value, and the coding cost in this case is the minimum.

It is also to be noted that the first two implementations may be said to involve the encoder actively judging and actively splitting. The latter implementation may be said to involve the encoder not needing to analyze from the picture perspective whether the residual texture is suitable for allocation to two transform kernels and how to allocate it, but rather attempting some possible situations and determining whether to select the multiple transform combination mode and which multiple transform combination mode to use according to the coding cost. In this case, the combination mode of split residual blocks with the minimum coding cost is selected. Certainly, these modes may be used in combination, which is not specifically limited herein.

It is also to be understood that, in the embodiments of the present application, if the issue of picture overlap is considered, as illustrated in FIG. 14A, FIG. 14B and FIG. 14C, the textures in FIG. 14A and FIG. 14B combine to form the texture in FIG. 14C, but there are some intersecting portions (i.e., there is a non-zero overlapping region). One interpretation is that one texture occludes another texture, which is very common in the real world, such as one object occluding part of another object. In this implementation, one possible approach is that if there is occlusion, it may be assumed that a certain split residual block is always on top. For example, assuming that two split residual blocks are supported in the present technical solution, and the first split residual block is on top, then the decoding side may determine the residual value of the final residual block in the occluded region according to the first split residual block.

In another possible implementation, some syntax elements may also be used to indicate which split residual block is on top and which split residual block is at the bottom. Accordingly, the method further includes: determining a value of second syntax flag information; and encoding the value of the second syntax flag information, and signalling obtained encoded bits into the bitstream.

It is to be noted that, in the embodiments of the present application, the second syntax element flag information may be used to indicate an uppermost residual block of the at least two first residual blocks. In this way, the decoding side may subsequently determine the uppermost residual block of the at least two first residual blocks by decoding the bitstream, and then determine the residual value of the final residual block in the occluded region according to the uppermost residual block.

In S2203: determine at least two transform kernels of the current block, and perform transform on the at least two first residual blocks according to the at least two transform kernels respectively, to determine at least two sets of first transform coefficients of the current block.

It is to be noted that, in the embodiments of the present application, the encoder does not necessarily directly consider which portion of the residual is allocated to which transform kernel. Instead, the encoder adjusts the values of the two sets of transform coefficients and uses the coding cost (the combined cost of rate and distortion) to determine whether it has done well enough. This is similar to the RDOQ process in the encoder, but now it optimizes two sets of transform coefficients together. First, two transform kernels are used to respectively perform transform and quantization on the entire residual block. In theory, the coefficients obtained from the two transform kernels can each reconstruct a complete residual block, but certainly, due to quantization, there will be distortion. Then, attempts are made to adjust the two sets of transform coefficients, i.e., attempting multiple combinations of the two sets of transform coefficients, such as reducing the values of transform coefficients from high frequency to low frequency respectively, or setting the values of transform coefficients to zero. The cost of encoding these transform coefficients is calculated, i.e., the rate component in rate-distortion. The transform coefficients are inverse quantized and inverse transformed, the residual blocks are combined, and subtracted from the original residual block to obtain the distortion cost, i.e., the distortion component in rate-distortion. The rate and distortion components are added together according to a given ratio to obtain the coding cost of the current mode. Attempts are made to adjust the coefficients, and finally the coefficient combination with the minimum coding cost is taken as the multiple transform combination scheme. When adjusting the coefficients, the first set of coefficients and the second set of coefficients may be adjusted sequentially, with alternating optimization. That is, first, the first set of transform coefficients is optimized to a relatively good level using RDOQ. Here, because the second transform is to be added, the adjustment criteria may be different from the method using only one transform, for example, a higher weight is given to the rate so that the first transform uses fewer codewords to produce an acceptable residual block. Then, the first set of transform coefficients is fixed, the second set of coefficients is adjusted, and RDOQ is used to optimize the second set of transform coefficients, so as to determine the at least two sets of transform coefficients of the current block.

It is also to be noted that, in the embodiments of the present application, it is first necessary to determine the at least two transform kernels of the current block, which may be determined through texture feature indices. In some embodiments, the method may include: determining at least two texture feature indices of the current block; determining at least two transform kernel sets according to the at least two texture feature indices; and determining the at least two transform kernels of the current block according to the at least two transform kernel sets.

Further, in some embodiments, the method further includes: encoding the at least two transform kernels of the current block, and signalling obtained encoded bits into the bitstream. This allows the decoder to obtain the at least two transform kernels of the current block by decoding the bitstream.

It is to be understood that, in the embodiments of the present application, which transform kernel set is selected for intra LFNST and NSPT is automatically matched according to the intra prediction mode. One intra prediction mode represents a type of texture feature; for example, one intra angular prediction mode represents an angle of a texture. Such derivation can reduce bitstream overhead because it no longer requires using syntax elements to signal, in the bitstream, which transform kernel set is selected. In the embodiments of the present application, the transform kernel set for LFNST/NSPT may be derived from certain information of the current block. One intra prediction mode may determine one transform kernel set, or in other words, one texture feature index may correspond to one transform kernel set. For convenience of description, a virtual intra prediction mode (or referred to as "texture feature index") is proposed here. The so-called virtual intra prediction mode means that this mode does not participate in prediction, but is only used to select the transform kernel set for NSPT or LFNST. The derivation of the texture feature index is described in detail below.

In some embodiments, determining the at least two texture feature indices of the current block may include: determining candidate samples for deriving the at least two texture feature indices; and determining the at least two texture feature indices of the current block according to the candidate samples.

In a possible implementation, for the candidate samples, the method may be: determining a prediction block of the current block; and taking at least a portion of samples in the prediction block as the candidate samples.

In the embodiments of the present application, if the prediction block has a certain texture, it may be considered that a residual block has a texture having the same feature. Thus, the candidate samples used for deriving the at least two texture feature indices may be all samples in the prediction block or a portion of samples in the prediction block.

In another possible implementation, for the candidate samples, the method may be: determining neighboring samples in a reconstructed region of the current block; and taking the neighboring samples in the reconstructed region as the candidate samples.

In the embodiments of the present application, the candidate samples used for deriving the at least two texture feature indices may be neighboring samples in the reconstructed region (for example, the reconstructed regions to the left and above the current block) of the current block. Although the reconstructed regions to the left and above are not part of the current block, they are adjacent to the current block. For example, since there may be texture continuity, they may be used to estimate the texture of the current block to a certain extent.

In yet another possible implementation, considering the use of more samples, for the candidate samples, the method may be: jointly taking the neighboring samples in the reconstructed region and at least a portion of samples in the prediction block as the candidate samples.

In the embodiments of the present application, the candidate samples used for deriving the at least two texture feature indices may be a combination of the samples in the prediction block of the current block and the neighboring samples of the reconstructed regions to the left and above the current block. This provides more samples for deriving the texture feature indices, making the derived texture feature indices more accurate.

In still another possible implementation, considering the hardware pipeline length, for the candidate samples, the method may be: determining a reference block of the current block; and taking at least a portion of samples in the reference block as the candidate samples.

In the embodiments of the present application, for the current block, the at least two texture feature indices can be derived only after the prediction block is obtained; after the at least two texture feature indices are determined, the corresponding at least two transform kernels can be determined; and then, inverse transform and subsequent processes can be performed. Here, if the reference block is used to derive the at least two texture feature indices, theoretically, the process of generating the prediction block and the process of deriving the at least two texture feature indices may be performed in parallel, thereby yielding a shorter pipeline than that when using the prediction block. Therefore, the reference block may also be used to derive the at least two texture feature indices, or the at least two texture feature indices may be derived synchronously during the process of generating the prediction block, thereby shortening the pipeline length.

In some embodiments, for the reference block of the current block, it may be determined that the reference block is an integer-pel reference block; or it may be determined that the reference block is a fractional-pel reference block.

In a possible implementation, when using the reference block, an integer-pel reference block may be directly used since the texture direction will not exhibit a significant difference. For example, for a bi-directional prediction inter block, the at least two texture feature indices may be derived according to the integer-pel reference block.

In another possible implementation, the reference block may also use a fractional-pel reference block on which interpolation filtering is performed. Specifically, two reference picture blocks for bi-directional prediction of the current block are determined; fractional-pel interpolation filtering is performed on the two reference picture blocks to determine two fractional-pel reference picture blocks; and weighted combination is performed on the two fractional-pel reference picture blocks to determine the reference block of the current block.

Exemplarily, for a bi-directional prediction inter block, it is first necessary to perform fractional-pel interpolation filtering on the two reference blocks, and then perform weighted combination on the two fractional-pel reference blocks. Then, after obtaining two interpolation-filtered reference blocks, on one hand, a weighted average may be performed according to the interpolation-filtered reference blocks to obtain a prediction value, and on the other hand, the at least two texture feature indices may be derived according to the interpolation-filtered reference blocks.

It is also to be noted that, in the embodiments of the present application, regarding the candidate samples used for deriving the at least two texture feature indices, the number of candidate samples may be at least one, for example, 1, 2, 3, or more. In some embodiments, the number of candidate samples may be determined according to a size parameter of the current block.

That is, when determining the at least two texture feature indices of the current block, the number of candidate samples to be used may be determined by the size parameter of the current block. Exemplarily, if the size of the current block is small, then all available samples may be used for statistics; and if the size of the current block is large, then downsampling may be applied to the current block for statistics, for example, using one sample out of every 2, or 4, or 8 samples in the horizontal direction and/or the vertical direction for statistics. Alternatively, if the size of the current block in a certain direction of either horizontal or vertical is less than or equal to 8, then all available samples in that direction are used for statistics; otherwise, if the size of the current block in a certain direction of either horizontal or vertical is less than or equal to 16, then one sample out of every 2 samples in that direction is used for statistics, otherwise, one sample out of every 4 samples in that direction is used for statistics. The specific implementation is not limited here.

In some embodiments, determining the at least two texture feature indices of the current block according to the candidate samples may include: determining horizontal gradient values and vertical gradient values of the candidate samples; determining texture feature indices and gradient magnitude values corresponding to the candidate samples according to the horizontal gradient values and the vertical gradient values of the candidate samples; constructing a texture feature statistics table according to the texture feature indices and the gradient magnitude values corresponding to the candidate samples; and determining the at least two texture feature indices of the current block according to the texture feature statistics table.

It is to be noted that, in the embodiments of the present application, when determining the texture feature indices and the gradient magnitude values corresponding to the candidate samples according to the horizontal gradient values and the vertical gradient values of the candidate samples, the method may include: performing angle mapping according to the horizontal gradient values and the vertical gradient values of the candidate samples to determine the texture feature indices corresponding to the candidate samples; and performing gradient magnitude calculation according to the horizontal gradient values and the vertical gradient values of the candidate samples to determine the gradient magnitude values corresponding to the candidate samples.

In a specific embodiment, performing angle mapping according to the horizontal gradient values and the vertical gradient values of the candidate samples to determine the texture feature indices corresponding to the candidate samples may include: determining the texture feature indices corresponding to the candidate samples using a preset lookup table according to the horizontal gradient values and the vertical gradient values of the candidate samples.

In the embodiments of the present application, the horizontal gradient value of a candidate sample may be denoted as *gradₓ*, and the vertical gradient value of a candidate sample may be denoted as *grad_{y}*. Thus, deriving the virtual intra prediction mode according to *gradₓ* and *grad_{y}* can be implemented through table lookup.

Exemplarily, if abs(*gradₓ*) equals 0 and abs(*grad_{y}*) does not equal 0, there is a horizontal direction texture, corresponding to intra prediction mode 18 in certain techniques. If abs(*grad_{y}*) equals 0 and abs(*gradₓ*) does not equal 0, there is a vertical direction texture, corresponding to intra prediction mode 50 in certain techniques. In a case where neither abs(*gradₓ*) nor abs(*grad_{y}*) equals 0, if abs(*gradₓ*) equals abs(*grad_{y}*), and *gradₓ* and *grad_{y}* have the same sign, it corresponds to intra prediction mode 34 in certain techniques. If abs(*gradₓ*) equals 2 times abs(*grad_{y}*), and *gradₓ* and *grad_{y}* have the same sign, it corresponds to intra prediction mode 40 in certain techniques. Additionally, other situations can be determined by table lookup according to the same principle.

In a specific embodiment, performing gradient magnitude calculation according to the horizontal gradient values and the vertical gradient values of the candidate samples to determine the gradient magnitude values corresponding to the candidate samples may include: performing addition operations on the absolute values of the horizontal gradient values and the absolute values of the vertical gradient values to determine the gradient magnitude values corresponding to the candidate samples.

Here, the gradient magnitude value corresponding to a candidate sample may be denoted as amp. Exemplarily, amp= abs(*gradₓ*) + abs(*grad_{y}*).

It is to be noted that, in the embodiments of the present application, the horizontal gradient values and the vertical gradient values of the candidate samples may be calculated using the Sobel operator. Exemplarily, for the Sobel operator, it is as shown below:
operator for horizontal gradient value:

| | | |
|---|---|---|
| -1 | 0 | 1 |
| -2 | 0 | 2 |
| -1 | 0 | 1 |

operator for vertical gradient value:

| | | |
|---|---|---|
| -1 | -2 | -1 |
| 0 | 0 | 0 |
| 1 | 2 | 1 |

Thus, assuming the sample value at sample position (x, y) is *P_{x,y},* the calculations of the horizontal gradient value *gradₓ* and the vertical gradient value *grad_{y}* are as follows:: ${grad}_{x} = {P}_{x + 1 , y - 1} + 2 ∗ {P}_{x + 1 , y} + {P}_{x + 1 , y + 1} - {P}_{x - 1 , y - 1} - 2 ∗ {P}_{x - 1 , y} - {P}_{x - 1 , y + 1}$ (22) ${grad}_{y} = {P}_{x - 1 , y + 1} + 2 ∗ {P}_{x , y + 1} + {P}_{x + 1 , y + 1} - {P}_{x - 1 , y - 1} - 2 ∗ {P}_{x , y - 1} - {P}_{x + 1 , y - 1}$ (23)

In some embodiments, constructing the texture feature statistics table according to the texture feature indices and the gradient magnitude values corresponding to the candidate samples may include: in a case where a number of the candidate samples is at least one, determining at least one texture feature index and at least one corresponding gradient magnitude value; determining at least one reference texture feature index with mutually distinct characteristics according to the at least one texture feature index, and performing an accumulation calculation on gradient magnitude values belonging to a same reference texture feature index according to the at least one gradient magnitude value to determine an accumulated gradient magnitude value corresponding to the at least one reference texture feature index; and constructing the texture feature statistics table according to the at least one reference texture feature index and the accumulated gradient magnitude value corresponding to the at least one reference texture feature index.

That is, in the embodiments of the present application, taking at least a portion of samples in the prediction block as the candidate samples as an example, gradient values are calculated for all or a portion of the samples in the prediction block. Generally, horizontal gradient values and vertical gradient values may be calculated, and the Sobel operator may be used here to calculate the gradient values. For a certain sample, its texture direction may be inferred according to its horizontal and vertical gradient values. For example, if the horizontal gradient value is non-zero and the vertical gradient value is zero, then the texture of that sample is in the vertical direction. Conversely, if the horizontal gradient value is zero and the vertical gradient value is non-zero, then the texture of that sample is in the horizontal direction. For example, if the horizontal gradient value and the vertical gradient value are equal and non-zero, then the texture of that sample is oriented at 45 degrees. Certainly, there are many other situations in the embodiments of the present application where both the horizontal and vertical gradient values are non-zero, and the texture direction of the sample may be determined according to their ratio. In this way, the gradient magnitude value of each sample may be mapped to the corresponding texture feature index. Thus, the texture feature statistics table is constructed, and the gradient magnitude value of each calculated sample is accumulated into the corresponding texture feature index entry in the statistics table, to obtain the final texture feature statistics table, and then, the at least two texture feature indices of the current block may be determined according to the texture feature statistics table.

In a possible implementation, when determining the at least two texture feature indices of the current block according to the texture feature statistics table, the method may include: sorting the texture feature statistics table in descending order of accumulated gradient magnitude values to determine at least two top-ranked accumulated gradient magnitude values; and determining reference texture feature indices corresponding to the at least two top-ranked accumulated gradient magnitude values as the at least two texture feature indices of the current block.

In the embodiments of the present application, the prediction block may be used to derive the texture feature index, which is applicable to blocks decoded by intra prediction, inter prediction, IBC, and other methods. If the prediction block has a certain texture, it may be imagined that the residual block has a texture with the same feature. Exemplarily, gradient values may be calculated for all or a portion of the samples in the prediction block. Generally, horizontal gradient values and vertical gradient values may be calculated, and the Sobel operator may be used here to calculate the gradient values. For a certain sample, the texture direction of that sample is inferred according to its horizontal and vertical gradient values. For example, if the horizontal gradient value is non-zero and the vertical gradient value is zero, then the texture of that sample is in the vertical direction. Conversely, if the horizontal gradient value is zero and the vertical gradient value is non-zero, then the texture of that sample is in the horizontal direction. For example, if the horizontal gradient value and the vertical gradient value are equal and non-zero, then the texture of that sample is oriented at 45 degrees. Certainly, there are many other situations where both the horizontal and vertical gradient values are non-zero, and the texture direction of the sample may be determined according to their ratio. In this way, the corresponding gradient magnitude value may be determined according to the horizontal and vertical gradient values, and then mapped to the corresponding texture feature index according to the gradient magnitude value. To construct a texture feature index statistics table (i.e., the above "texture feature statistics table"), it is necessary to accumulate the gradient magnitude value of each calculated candidate sample into the corresponding texture feature index entry in the statistics table. After the gradient statistics are completed, the texture feature index statistics table can reflect the texture feature exhibited by the prediction block.

In addition, similar statistics may be performed for DIMD to derive the texture feature index, but the difference is that DIMD uses the reconstructed surrounding region of the current block, whereas here the prediction block of the current block is used. In terms of implementation, this solution may reuse part of the logic of DIMD.

It is also to be noted that regarding the samples used for deriving the texture feature index, the reconstructed regions to the left and above the current block may also be used here, similar to the approach of DIMD. Although the reconstructed regions to the left and above are not part of the current block, they are adjacent to the current block. For example, since there may be texture continuity, they may be used to estimate the texture of the current block to a certain extent. Another possibility is to simultaneously use the prediction block of the current block and the reconstructed regions to the left and above the current block, so that there are more samples available for deriving the texture feature index.

Another possibility is to consider the hardware pipeline length. For the current block, the texture feature index can be derived only after the prediction block is obtained, and the transform kernel for LFNST/NSPT can be determined only after the texture feature index is determined, and then inverse transform and subsequent processes can be performed. If the reference block is used to derive the texture feature index, theoretically, the process of generating the prediction block and the process of deriving the texture feature index may be performed in parallel, thereby yielding a shorter pipeline than that when using the above design. Therefore, the embodiments of the present application may also use the reference block to derive the texture feature index, or derive the texture feature index synchronously during the process of generating the prediction block. When using the reference block, the integer-pel reference block may be directly used since the texture direction will not exhibit a significant difference. For example, for a bi-directional prediction inter block, on one hand, the texture feature index is derived according to the integer-pel reference block, and on the other hand, fractional-pel interpolation filtering is performed on the two reference blocks, and then the two fractional-pel reference blocks are weighted-combined. Specifically, a fractional-pel reference block on which interpolation filtering is performed may also be used here. For example, for a bi-directional prediction inter block, it is first necessary to perform fractional-pel interpolation filtering on the two reference blocks, and then perform weighted combination on the two fractional-pel reference blocks. Then, after obtaining the two interpolation-filtered reference blocks, on one hand, a weighted average may be performed according to the interpolation-filtered reference blocks to obtain a prediction value, and on the other hand, the texture feature index may be derived according to the interpolation-filtered reference blocks.

In some embodiments, when determining the at least two texture feature indices of the current block, the method may further include: determining an angle index in a case where the current block uses a geometric partitioning mode; and determining one texture feature index of the current block according to the angle index.

In the embodiments of the present application, for the texture feature index corresponding to the geometric partitioning mode (GPM), the prediction block of GPM is obtained by combining prediction blocks of two different motions, so it may contain the content of two objects. Generally, the boundary is difficult to be perfectly predicted, so there may be a large residual at the boundary of the two objects, and the direction of this residual is consistent with the "partitioning" direction of GPM. Therefore, for GPM, the "partitioning" mode of GPM may be used to determine the corresponding texture feature index.

In the embodiments of the present application, the partition line may be considered as a line composed of points with the same weight in the region where the weight changes in the weight matrix of GPM, or in other words, a line composed of points whose weight is the median value, and the points whose weight is the median value may not be at integer-pel positions. Taking a weight range from 0 to 8 as an example, the median value may be 4. FIG. 16 is a schematic diagram of a partition line for GPM. As illustrated in FIG. 16, the thickened solid line is the partition line described here. Actually, the weight of GPM is derived according to the partition line.

It is also to be understood that, in the embodiments of the present application, the texture feature indices of the current block may also be directly copied from the texture feature indices of the reference block. In some embodiments, for determining the at least two texture feature indices of the current block, the method may include: determining a reference block of the current block; and determining the at least two texture feature indices of the current block according to at least two intra prediction modes or virtual intra prediction modes of the reference block. Alternatively, the method may include: determining a reference block of the current block; and determining the at least two texture feature indices of the current block according to at least two texture feature indices of the reference block.

It is to be noted that if the reference block of the current block includes an intra-encoded block, then the intra-encoded block has an intra prediction mode, and the at least two intra prediction modes or virtual intra prediction modes of the reference block may be used as the at least two texture feature indices of the current block. If the reference block of the current block includes multiple intra-encoded blocks, the intra prediction mode at a certain position may be determined according to the coordinates. For example, the intra prediction mode of the reference block corresponding to the center position of the current block may be used as one texture feature index of the current block. The (virtual) intra prediction mode may be saved for each inter-encoded block. If the reference block of the current block is an inter-encoded block, then the corresponding texture feature index can be found. In addition, the texture feature indices may also be stored at a certain granularity, for example, using each 4×4 pixel as a minimum storage unit, and each minimum storage unit shares the same intra prediction mode or virtual intra prediction mode. If the reference block of the current block contains multiple 4×4 minimum storage units, the (virtual) intra prediction mode at a certain position may be determined according to the coordinates. For example, the (virtual) intra prediction mode of the minimum storage unit of the reference block corresponding to the center position of the current block may be used as one texture feature index of the current block.

It is also to be understood that, in the embodiments of the present application, a candidate list may also be constructed to determine the at least two texture feature indices of the current block. In some embodiments, the method may further include: constructing a candidate list, where the candidate list includes N candidate texture feature indices, N being an integer greater than 1; and selecting at least two candidate texture feature indices from the N candidate texture feature indices, and determining the at least two candidate texture feature indices as the at least two texture feature indices of the current block.

In a specific embodiment, selecting the at least two candidate texture feature indices from the N candidate texture feature indices may include: performing cost value calculation on the N candidate texture feature indices, to determine respective cost results of the N candidate texture feature indices; and determining at least two target cost values based on the respective cost results of the N candidate texture feature indices, and determining candidate texture feature indices corresponding to the at least two target cost values as the at least two texture feature indices.

It is also to be noted that, in the embodiments of the present application, cost value calculation is performed on each of the N candidate texture feature indices to determine respective cost results of the N candidate texture feature indices. Here, the cost results may be determined according to cost results of rate distortion optimization (RDO), may also be determined according to cost results of sum of absolute difference (SAD), or may even be determined according to cost results of sum of absolute transformed difference (SATD), which is not limited thereto.

Exemplarily, taking the rate distortion optimization manner as an example, rate distortion cost calculation may be performed on each of the N candidate texture feature indices in the candidate list to determine the respective cost results of the N candidate texture feature indices, and then at least two target cost results may be selected therefrom, so as to determine the at least two texture feature indices. For example, for the determination of two texture feature indices, after calculating the respective cost results of the N candidate texture feature indices, the candidate texture feature index corresponding to the minimum cost result and the candidate texture feature index corresponding to the second minimum cost result may be selected from these cost results as the two texture feature indices of the current block, thereby improving encoding efficiency.

In some embodiments, the method further includes: determining at least two feature index numbers of the current block according to the at least two texture feature indices of the current block, where the at least two feature index numbers are used to indicate numbers of the at least two texture feature indices of the current block in the candidate list respectively; and encoding the at least two feature index numbers of the current block, and signalling obtained encoded bits into the bitstream.

It is to be noted that the above embodiments mention using the prediction block or reference block of the current block or the reconstructed picture surrounding the current block to derive the texture feature indices. In a specific embodiment, one or more texture feature indices with the largest gradient magnitude values may be selected for deriving at least two transform kernel sets. In addition, a step may be added to construct a candidate list, i.e., a candidate list of texture feature indices, and then use a syntax element signalled into the bitstream (i.e., the feature index number of the current block) to indicate which candidates are finally selected, enabling the decoder to obtain the at least two texture feature indices of the current block by decoding the bitstream in the decoding side.

It is also to be noted that, in the embodiments of the present application, for the determination of two texture feature indices, if the candidate list includes only two candidate texture feature indices, then not only can these two candidate texture feature indices be directly used as the two texture feature indices required for the current block without the need to perform cost result calculation, but also there is no need to determine the corresponding texture feature indices in the candidate list nor to signal them into the bitstream, thereby saving encoding bits and improving encoding efficiency.

In some embodiments, constructing the candidate list may include: sorting a texture feature statistics table in descending order of accumulated gradient magnitude values to determine N reference texture feature indices corresponding to N top-ranked accumulated gradient magnitude values; and constructing the candidate list according to the N reference texture feature indices.

In some embodiments, constructing the candidate list may include: determining a first texture feature index corresponding to a geometric partitioning mode for the current block, and determining (N-1) reference texture feature indices corresponding to (N-1) top-ranked accumulated gradient magnitude values; and constructing the candidate list according to the first texture feature index and the (N-1) reference texture feature indices.

That is, in the embodiments of the present application, an example of constructing the candidate list is: following the above method for calculating gradient magnitude values, selecting the N top-ranked texture feature indices in descending order of gradient magnitude values to form the candidate list. Here, N may be 2, 3, 4, and so forth. Another example is assuming N is 4, i.e., the texture feature index with the largest gradient magnitude serves as the first element of the candidate list, the texture feature index with the second largest gradient magnitude serves as the second element of the candidate list, and so forth. Yet another example is that for GPM, the first element of the candidate list may be set as the texture feature index corresponding to the "partitioning" mode of GPM, the second element as the texture feature index with the largest gradient magnitude, the third element as the texture feature index with the second largest gradient magnitude, and so forth; or this order may be reversed, which is not specifically limited herein.

In some embodiments, constructing the candidate list may further include: determining a reference block of the current block; and constructing the candidate list according to texture feature indices corresponding to at least two candidate positions in the reference block.

That is, in the embodiments of the present application, the candidate list is constructed according to at least two texture feature indices of the reference block. For example, the candidate list is constructed according to the texture feature indices of 4×4 minimum storage units corresponding to several positions in the reference block. Let the coordinates of the top-left corner of the current block be (x, y), the width of the current block be nCbW, the height of the current block be nCbH, the center point posC of the current block be (x+nCbW/2, y+nCbH/2), the top-left corner posTL be (x, y), the top-right corner posTR be (x+nCbW-1, y), the bottom-left corner posBL be (x, y+nCbH-1), and the bottom-right corner posBR be (x+nCbW-1, y+nCbH-1). The candidate list is constructed using, in order, the intra prediction modes (texture feature indices) of the minimum storage units corresponding to posC, posTL, posTR, posBL, and posBR. Here, the candidate positions may be at least two of posC, posTL, posTR, posBL, or posBR, but are not limited thereto.

In this way, after the candidate list is constructed, the at least two texture feature indices of the current block are determined according to the syntax elements in the bitstream and the candidate list. Here, the syntax elements used are the feature index numbers of the current block. Assuming the current block has two feature index numbers, these two feature index numbers may be denoted by lfnst_nspt_feature_idx0 and lfnst_nspt_feature_idx1, respectively. The values of lfnst_nspt_feature_idx0 and lfnst_nspt_feature_idx1 may each be integers such as 0, 1, 2, 3, etc. Exemplarily, if the value of lfnst_nspt_feature_idx0 is 0, then the first element in the candidate list may be selected; if the value of lfnst_nspt_feature_idx0 is 1, then the second element of the candidate list may be selected, to obtain one of the texture feature indices of the current block. Similarly, according to the value of lfnst_nspt_feature_idx1, another texture feature index of the current block may be obtained.

It is also to be understood that, in the embodiments of the present application, the at least two feature index numbers of the current block are encoded only upon determining that the current block uses LFNST or NSPT. In some embodiments, the method may further include: in a case where the current block uses a first transform mode, performing the step of encoding the at least two feature index numbers of the current block, and signalling the obtained encoded bits into the bitstream.

In some embodiments, the method may further include: determining transform mode flag information of the current block; and encoding the transform mode flag information of the current block, and signalling obtained encoded bits into the bitstream.

It is to be noted that, in the embodiments of the present application, the transform mode flag information may be denoted by lfnst_nspt_idx, and the transform mode flag information may indicate whether the current block uses the first transform mode.Here, if the current block uses the first transform mode, it is determined that the value of the transform mode flag information is a first value. if the current block does not use the first transform mode, it is determined that the value of the transform mode flag information is a second value.

Here, the first value and the second value are different, and the first value and the second value may be in parameter form or numeric form. Exemplarily, the first value may be 1, and the second value may be 0.

It should also be noted that, in the embodiments of the present application, the first transform mode may be LFNST transform or NSPT transform. That is, lfnst_nspt_idx is used to indicate whether the current block uses the LFNST transform or the NSPT transform. Moreover, when it is determined that the current block uses the LFNST transform or the NSPT transform, lfnst_nspt_feature_idx0 and lfnst_nspt_feature_idx1 are further encoded. If the current block does not use the LFNST transform or the NSPT transform, then lfnst_nspt_feature_idx0 and lfnst_nspt_feature_idx1 are not encoded.

Exemplarily, lfnst_nspt_idx may be used to indicate whether the current block uses LFNST/NSPT. Here, when lfnst_nspt_idx is 0, it indicates that the current block does not use LFNST/NSPT. In this case, lfnst_nspt_feature_idx0 and lfnst_nspt_feature_idx1 need not be encoded. Otherwise (i.e., when lfnst_nspt_idx is not 0), it indicates that the current block uses LFNST/NSPT. In this case, lfnst_nspt_feature_idx0 and lfnst_nspt_feature_idx1 need to be encoded.

It is also to be noted that this method is applicable not only to inter prediction but also to intra prediction. In addition, the two transform kernel sets in the embodiments of the present application cannot be the same. If N is 4, lfnst_nspt_feature_idx0 has four choices, while lfnst_nspt_feature_idx1 has only three choices.

It should also be noted that when constructing the list, the encoder needs to ensure that each item in the candidate list is unique. If the available texture feature indices cannot fill the list, default texture feature indices, such as horizontal direction and vertical direction texture feature indices, may be added.

In this way, after the candidate list is constructed, the at least two texture feature indices of the current block may also be determined according to the at least two feature index numbers obtained by decoding the bitstream.

It can also be understood that after the texture feature indices of the current block are determined, the transform kernel sets of the current block may be determined according to the correspondence between the texture feature indices and the transform kernel sets. Exemplarily, LFNST in some technologies has a total of 4 transform kernel sets, and the correspondence between intra prediction modes and transform kernel sets is detailed in Table 3. LFNST in some technologies may also have more transform kernel sets, such as 35 sets, and the correspondence between intra prediction modes and transform kernel sets is detailed in Table 4.

In the embodiments of the present application, each transform kernel set may include at least two transform kernels. Exemplarily, a transform kernel set may include 2 transform kernels, or may include 3 transform kernels, or may even include 4 selectable transform kernels, or even a larger number of selectable transform kernels, which is not limited thereto.

In the embodiments of the present application, for at least two transform kernel sets, each transform kernel set includes at least one candidate transform kernel. Correspondingly, taking a first transform kernel set as an example, determining the at least two transform kernels of the current block according to the at least two transform kernel sets may include: performing, based on at least one candidate transform kernel in a first transform kernel set, cost value calculation on the at least one candidate transform kernel, to determine respective cost results of the at least one candidate transform kernel; and determining a minimum cost result from the respective cost results of the at least one candidate transform kernel, and taking a candidate transform kernel corresponding to the minimum cost result as a first transform kernel of the current block, where the first transform kernel set is one of the at least two transform kernel sets, and the first transform kernel is one of the at least two transform kernels.

In a possible implementation manner, for the first transform kernel set, performing cost value calculation on the at least one candidate transform kernel in the first transform kernel set, taking the first candidate transform kernel as an example, the method may include: performing transform and quantization on the residual block of the current block based on the first candidate transform kernel to determine first candidate quantization coefficients of the current block, and performing entropy encoding processing on the first candidate quantization coefficients to determine a first cost result of the first candidate transform kernel; performing inverse quantization and inverse transform on the first candidate quantization coefficients to determine a first candidate residual block of the current block, and determining a first candidate prediction block of the current block according to the first candidate residual block; performing cost calculation according to the first candidate prediction block and an original picture of the current block to determine a second cost result of the first candidate transform kernel; and determining a cost result of the first candidate transform kernel according to the first cost result and the second cost result of the first candidate transform kernel.

It should be noted that, in the embodiments of the present application, the first candidate transform kernel is any transform kernel in the first transform kernel set, so that the respective cost results of the transform kernels in the first transform kernel set may be determined.

It should also be noted that, in the embodiments of the present application, the first cost result may represent the overhead cost of the first candidate transform kernel in the bitstream, and the second cost result may represent the distortion cost of the first candidate transform kernel. Here, determining the cost result of the first candidate transform kernel according to the first cost result and the second cost result of the first candidate transform kernel may include: performing a summation operation on the first cost result and the second cost result of the first candidate transform kernel, and taking the sum of the two as the cost result of the first candidate transform kernel.

It should also be noted that, in the embodiments of the present application, the cost result calculation here may be determined according to the cost result of RDO, may also be determined according to the cost result of SAD, or may even be determined according to the cost result of SATD, which is not limited thereto.

It should also be noted that, in the embodiments of the present application, still taking the first transform kernel set as an example, the first transform kernel set may include 1, 2, 3, or more candidate transform kernels. If the first transform kernel set includes only one candidate transform kernel, then this one candidate transform kernel may be directly taken as the first transform kernel of the current block without the need to perform cost calculation.

In some embodiments, the method further includes: determining the at least two transform kernel indices of the current block according to the at least two transform kernels and the at least two transform kernel sets of the current block; and encoding the at least two transform kernel indices and signalling the encoded bits into the bitstream.

It should be noted that, in the embodiments of the present application, the at least two transform kernel indices are respectively used to indicate numbers of the at least two transform kernels of the current block in their corresponding transform kernel sets. When the current block uses the multiple transform combination mode, the encoder also needs to encode the at least two transform kernel indices and signal them into the bitstream; so that subsequently at the decoding end, after the decoder obtains the at least two transform kernel indices by decoding the bitstream, it can directly determine the at least two transform kernels of the current block, thereby improving decoding efficiency.

Exemplarily, taking a first transform kernel set and a second transform kernel set as an example, a first transform kernel index and a second transform kernel index of the current block are determined first, then the first transform kernel index and the second transform kernel index are encoded, and the obtained encoded bits are signalled into the bitstream. In this way, subsequently at the decoding end, according to the first transform kernel set and the first transform kernel index, the first transform kernel of the current block is determined; according to the second transform kernel set and the second transform kernel index, the second transform kernel of the current block is determined; where the first transform kernel index is used to indicate the number of the first transform kernel of the current block in the first transform kernel set, and the second transform kernel index is used to indicate the number of the second transform kernel of the current block in the second transform kernel set.

It is also to be noted that, in the embodiments of the present application, in the case where the transform kernel indices need to be transmitted in the bitstream, the bitstream overhead is large because at least two transform kernel indices need to be transmitted. In this case, if a certain transform kernel set has only one transform kernel, then there is no need to transmit the corresponding transform kernel index. Specifically, when the current block uses the LFNST/NSPT, the unique transform kernel in a certain transform kernel set may be directly used as one of the transform kernels of the current block. Exemplarily, if the first transform kernel set includes only one transform kernel, then the first transform kernel index of the current block is no longer transmitted in the bitstream, and the unique transform kernel in the first transform kernel set is used as the first transform kernel of the current block; or, if the second transform kernel set includes only one transform kernel, then the second transform kernel index of the current block is no longer transmitted in the bitstream, and the unique transform kernel in the second transform kernel set is used as the second transform kernel of the current block.

In this way, after the at least two transform kernels of the current block are determined, transform may be performed on the at least two first residual blocks according to the at least two transform kernels respectively, to determine the at least two sets of first transform coefficients of the current block.

It should be noted that, in the embodiments of the present application, the "transform" performed on the residual block at the encoding end may also be referred to as "forward transform", and specifically, denotes the transform from the spatial domain to the frequency domain to remove residual correlation. It is to be noted that if a standard text only specifies the decoding process, the "transform" in the standard text refers to the decoding part, which refers to the "inverse transform" herein.

It should also be noted that, in the embodiments of the present application, when performing transform on the at least two first residual blocks according to the at least two transform kernels respectively to determine the at least two sets of first transform coefficients of the current block, the method may include: if a size parameter of the current block satisfies a first condition, performing non-separable primary transform on the at least two first residual blocks according to the at least two transform kernels respectively, to determine the at least two sets of first transform coefficients of the current block; if the size parameter of the current block satisfies a second condition, performing discrete cosine transform on the at least two first residual blocks of the current block to determine at least two transform blocks of the current block; and performing low-frequency non-separable transform on the at least two transform blocks of the current block according to the at least two transform kernels to determine the at least two sets of first transform coefficients of the current block.

Here, the size parameter of the current block satisfying the first condition includes: the size parameter of the current block being relatively small, for example, the size parameter of the current block is smaller than a certain threshold. That is, for a block with a relatively small size, the NSPT transform kernel is used here, i.e., NSPT transform is performed on the at least two first residual blocks of the current block according to the NSPT transform kernels, to determine the at least two sets of first transform coefficients of the current block.

Here, the size parameter of the current block satisfying the second condition includes: the size parameter of the current block being relatively large, for example, the size parameter of the current block is larger than a certain threshold. That is, for a block with a relatively large size, the LFNST transform kernel is used here, i.e., DCT2 primary transform is first performed on the at least two first residual blocks of the current block respectively, and then LFNST transform is performed on the at least two transform blocks of the current block according to the LFNST transform kernels to determine the at least two sets of first transform coefficients of the current block.

In S2204: encode the at least two sets of first transform coefficients of the current block, and signal obtained encoded bits into a bitstream.

It should be noted that, in the embodiments of the present application, when the current block uses the multiple transform combination mode, it is necessary to encode the at least two sets of first transform coefficients of the current block. In a possible implementation, encoding the at least two sets of first transform coefficients of the current block, and signalling the obtained encoded bits into the bitstream may include: encoding the at least two sets of first transform coefficients of the current block separately, and signalling the obtained encoded bits into the bitstream.

It should also be noted that, in the embodiments of the present application, if the current block uses the multiple transform combination mode, then the at least two sets of first transform coefficients of the current block may be encoded separately, and the obtained encoded bits are signalled into the bitstream. Alternatively, if the current block uses the multiple transform combination mode, then the value of the first syntax flag information of the current block may be encoded first, and the obtained encoded bits may be signalled into the bitstream; then the at least two sets of first transform coefficients of the current block may be encoded separately, and the obtained encoded bits are signalled into the bitstream.

In this way, in the embodiments of the present application, the at least two sets of first transform coefficients of the current block may be obtained directly by decoding the bitstream. Here, if a single syntax element (the first syntax flag information) is directly used to determine whether the current block uses the multiple transform combination mode, then the value of the first syntax flag information may be parsed before parsing the transform coefficients. For example, when the value of the first syntax flag information equals 1, the at least two sets of first transform coefficients may be obtained by decoding the bitstream, and the decoding method for each set of transform coefficients is the same as that in the related art. This approach is intuitive: if it is already clear that the current block uses a combination of multiple transforms, then the multiple sets of first transform coefficients can be parsed directly.

In another possible implementation, for encoding the at least two sets of first transform coefficients of the current block, as illustrated in FIG. 24, after S2203, the method further includes the following.

In S2401: determine second transform coefficients of the current block according to the at least two sets of first transform coefficients of the current block.

In S2402: encode the second transform coefficients of the current block, and signal the obtained encoded bits into the bitstream.

It should be noted that, in the embodiments of the present application, a last non-zero coefficient in the second transform coefficients is used to indicate a partitioning strategy for the at least two sets of first transform coefficients. In this implementation, when encoding the transform coefficients, it is not clear whether what needs to be encoded is essentially one set of transform coefficients or multiple sets of transform coefficients, but it is in the form of one set of transform coefficients, i.e., the second transform coefficients of the current block. If it is determined that the current block uses the combination of multiple transforms, then subsequently, after determining the second transform coefficients of the current block, the decoding side may split the second transform coefficients into at least two sets of first transform coefficients.

In a specific implementation, the second transform coefficients may be evenly partitioned to determine the at least two sets of first transform coefficients of the current block. In the embodiments of the present application, taking splitting into two sets of transform coefficients as an example, the second transform coefficients signalled into the bitstream may be evenly partitioned, e.g., the first half is the first set of transform coefficients, and the latter half is the second set of transform coefficients. Exemplarily, if there are a total of N coefficients from the first transform coefficient up to the last non-zero transform coefficient, then N/2 coefficients are the first set of transform coefficients, and the remaining N/2 coefficients are the second set of transform coefficients. This approach requires that the encoder meet certain requirements when encoding the transform coefficients, for example, by forcing zero padding or forcibly quantizing certain coefficients to zero to ensure that the boundary between the two sets of coefficients is exactly at N/2.

In another specific implementation, it is also possible to determine the last non-zero coefficient in the second transform coefficients; and partition the second transform coefficients according to the partitioning strategy indicated by the last non-zero coefficient, to determine the at least two sets of first transform coefficients of the current block. In the embodiments of the present application, still taking splitting into two sets of transform coefficients as an example, the partitioning strategy indicated by the last non-zero coefficient includes: the last non-zero coefficient indicating a position of a last non-zero coefficient in the first set of transform coefficients, or the last non-zero coefficient indicating a position of a last non-zero coefficient in the second set of transform coefficients, which is not specifically limited here.

It should be noted that, in the embodiments of the present application, information for splitting into the two sets of transform coefficients may be hidden in the coefficients here. For example, the last non-zero coefficient represents the position of the last non-zero coefficient in the first set of transform coefficients, i.e., the number of coefficients in scan order from the first coefficient (position (0,0) at the top-left corner) to the last non-zero coefficient in the first set of transform coefficients, minus one. Here, the reason for subtracting one is that each set of transform coefficients should not be all zeros; otherwise, the transform would be meaningless.

Exemplarily, the transform coefficients are arranged in scan order, and the coefficients signalled into the bitstream are 12, 5, 5, 6, 0, 2, 0, 1, 20, 9, 9, 4 and 7. The last non-zero coefficient 7 is not an actual coefficient, but indicates that the eight coefficients at positions 0 to 7 are the first set of transform coefficients, i.e., 12, 5, 5, 6, 0, 2, 0, 1. The remaining coefficients are the second set of transform coefficients, i.e., 20, 9, 9, 4. These coefficients are placed at corresponding positions in the two-dimensional coefficient block, and the values at other positions are zero.

Alternatively, the last non-zero coefficient may also represent the number of coefficients in scan order from the first coefficient in the second set of transform coefficients to the last non-zero coefficient in the second set of transform coefficients, minus one. Here, the reason for subtracting one is that each set of coefficients should not be all zeros; otherwise, the transform would be meaningless.

Exemplarily, the coefficients are arranged in scan order, and the coefficients signalled into the bitstream are 12, 5, 5, 6, 0, 2, 0, 1, 20, 9, 9, 4 and 3. The last non-zero coefficient 3 is not an actual coefficient, but indicates that the second set of transform coefficients in the above coefficients consists of 4 coefficients, i.e., 20, 9, 9, 4. The preceding coefficients are the first set of transform coefficients, i.e., 12, 5, 5, 6, 0, 2, 0, 1. These coefficients are placed at corresponding positions in the two-dimensional coefficient block, and the values at other positions are zero.

In this way, when the current block uses the multiple transform combination mode, in the embodiments of the present application, one set of transform coefficients may be used and signalled into the bitstream, and subsequently the decoding side may also obtain the at least two sets of first transform coefficients of the current block according to different partitioning strategies.

It is also to be understood that in the embodiments of the present application, regarding whether the value of the first syntax flag information is signalled into the bitstream, the method further includes: determining transform coefficients of the current block; and in a case where non-zero coefficient information in the transform coefficients satisfies a preset condition, performing the step of encoding the value of the first syntax flag information, and signalling the obtained encoded bits into the bitstream.

It is to be noted that, in the embodiments of the present application, one implementation is to directly use a syntax element (such as the first syntax flag information) to determine whether the current block uses the multiple transform combination mode. Exemplarily, a CU-level or TU-level multi_trans_combine_flag is used. If the value of multi_trans_combine_flag is 1, it indicates that the current block uses the multiple transform combination mode; otherwise (i.e., the value of multi_trans_combine_flag is 0), it indicates that the current block does not use the multiple transform combination mode.

It is also to be noted that, in the embodiments of the present application, multi_trans_combine_flag may also be encoded conditionally, using some known conditions to exclude situations where multiple transform combination would not be used, thereby saving the overhead of multi_trans_combine_flag. Exemplarily, whether the non-zero coefficient information in the transform coefficients satisfies the preset condition is used to exclude situations where multiple transform combination would not be used. Only when the non-zero coefficient information in the transform coefficients satisfies the preset condition, is the encoding of multi_trans_combine_flag performed.

That is, in the embodiments of the present application, if the texture of the residual block is complex, the number of non-zero coefficients after transform and quantization will still be large. In other words, if the transform kernel cannot efficiently process the texture feature of the residual block, the number of non-zero coefficients after transform and quantization will also be large. For example, a horizontally and vertically separable transform is not very efficient for processing diagonal textures. A transform kernel optimized for a single texture feature may not be very efficient for processing the residual with composite texture features, but splitting the residual with composite texture features into single texture features and using multiple transform kernels each optimized for a single texture feature may be more efficient. This is the original intention of the multiple transform combination mode. An intuitive reflection of so-called efficiency is that the number of non-zero coefficients after transform and quantization is small, or the sum of the values of the non-zero coefficients after transform and quantization is small. Therefore, in the embodiments of the present application, some situations where multiple transform combination is not used can be excluded according to the number of non-zero coefficients, the last non-zero position, or the values of the non-zero coefficients.

In the design of transform kernels for LFNST/NSPT, the number of inputs and outputs of a transform kernel may be different. Taking NSPT as an example, the transform kernel information at the NSPT decoding side in ECM10 is shown in Table 5.

Exemplarily, taking a 4x16 block as an example, the number of inputs for NSPT is 24, and the number of outputs is 64. The number of outputs is easy to understand because a 4x16 block has 64 samples, so the inverse NSPT transform outputs 64 sample values. The number of inputs is 24, which means that if the current block is to use NSPT for inverse transform, the number of coefficients in scan order from the last non-zero coefficient to the first coefficient (top-left corner (0,0) position) will not exceed 24. In other words, if it exceeds 24, then the current block definitely does not use NSPT. LFNST has a similar design, i.e., for a given block size, if the position of the last non-zero coefficient is less than (or equal to) a threshold, where this threshold is determined by LFNST/NSPT, then it is possible that LFNST/NSPT is used, and the syntax elements of LFNST/NSPT need to be parsed to determine whether the current block uses LFNST/NSPT; otherwise, it is inferred that the current block does not use LFNST/NSPT, and the syntax elements of LFNST/NSPT do not need to be parsed.

In a specific embodiment, the non-zero coefficient information in the transform coefficients satisfying the preset condition may include: the number of coefficients between a first coefficient and a last non-zero coefficient in the transform coefficients not exceeding a first threshold.

That is, in the embodiments of the present application, a threshold (e.g., a first threshold) may also be set for the multiple transform combination mode. If the number of coefficients in scan order from the last non-zero coefficient to the first coefficient (top-left corner (0,0) position) does not exceed the first threshold, then the current block may use the multiple transform combination mode, and multi_trans_combine_flag needs to be parsed. Otherwise, multi_trans_combine_flag does not need to be parsed, and it is inferred that the current block does not use the multiple transform combination mode.

It is also to be noted that the magnitude of the first threshold may be the same as the threshold for a single LFNST/NSPT, or larger than the threshold for a single LFNST/NSPT, or smaller than the threshold for a single LFNST/NSPT. Exemplarily, taking two transform kernels as an example, on the one hand, the maximum number of inputs for these two transform kernels is larger than the input for one transform kernel; on the other hand, the multiple transform combination mode is more efficient than a single transform mode, and an intuitive reflection is that there are fewer non-zero coefficients.

It is also to be understood that, in the embodiments of the present application, a high level syntax may also be applied to enable or disable the present technical solution. In some embodiments, the method further includes: determining a value of third syntax flag information; and encoding the value of the third syntax flag information, and signalling obtained encoded bits into the bitstream.

In the embodiments of the present application, the third syntax flag information is used to indicate whether a current sequence is allowed to use the multiple transform combination mode. Specifically, if the current sequence uses the multiple transform combination mode, then it may be determined that the value of the third syntax flag information is a first value. If the current sequence does not use the multiple transform combination mode, then it may be determined that the value of the third syntax flag information is a second value.

Further, in some embodiments, the method further includes: in a case where the current sequence is allowed to use the multiple transform combination mode, the step of determining whether the current block uses the multiple transform combination mode may be performed, where the current sequence may include the current block.

It is to be noted that, in the embodiments of the present application, third syntax flag information may be represented by sps_lfnst_nspt_enabled_flag, and the third syntax flag information is a syntax element in a sequence parameter set (SPS).

It should also be noted that, in the embodiments of the present application, the first value and the second value are different, and the first value and the second value may be in parameter form or numeric form. Specifically, the third syntax flag information may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true. In a specific embodiment, the first value is 1 and the second value is 0.

Further, in some embodiments, the method further includes: determining a value of third syntax flag information and a value of fifth syntax flag information; where the third syntax flag information is used to indicate whether a current sequence is allowed to use the multiple transform combination mode, and the fifth syntax flag information is used to indicate whether a current picture is allowed to use the multiple transform combination mode; and encoding the value of the third syntax flag information and the value of the fifth syntax flag information, and signalling the obtained encoded bits into the bitstream. Where the current sequence includes the current picture, and the current picture includes the current block.

It should be noted that, in the embodiments of the present application, the fifth syntax flag information may be represented by ph_inter_lfnst_nspt_enabled_flag, and the fifth syntax flag information is a picture-level syntax element. Specifically, if the current picture is allowed to use the multiple transform combination mode, it is determined that the value of the fifth syntax flag information is a first value. If the current picture is not allowed to use the multiple transform combination mode, it is determined that the value of the fifth syntax flag information is a second value.

Further, in some embodiments, the method further includes: determining a value of third syntax flag information and a value of fourth syntax flag information, where the third syntax flag information is used to indicate whether a current sequence is allowed to use the multiple transform combination mode, and the fourth syntax flag information is used to indicate whether a current slice is allowed to use the multiple transform combination mode, where the current sequence includes the current slice, and the current slice includes the current block; and encoding the value of the third syntax flag information and the value of the fourth syntax flag information, and signalling obtained encoded bits into the bitstream.

It should be noted that, in the embodiments of the present application, the fourth syntax flag information may be represented by sh_lfnst_nspt_enabled_flag, and the fourth syntax flag information is a slice-level syntax element. Specifically, if the current slice is allowed to use the multiple transform combination mode, it is determined that the value of the fourth syntax flag information is a first value. If the current slice is not allowed to use the multiple transform combination mode, it is determined that the value of the fourth syntax flag information is a second value.

In the embodiments of the present application, the first value and the second value are different, and the first value and the second value may be in parameter form or numeric form. Specifically, whether it is the fourth syntax flag information or the fifth syntax flag information, it may be a parameter signalled into a profile, or may be a value of a flag, which is not specifically limited here. Exemplarily, the first value may be 1 and the second value may be 0; or the first value may be 0 and the second value may be 1; or the first value may be true and the second value may be false; or the first value may be false and the second value may be true. In a specific embodiment, the first value is 1 and the second value is 0.

That is, in the embodiments of the present application, a high level syntax may be applied as a switch to flexibly control the present technical solution, such as a sequence-level flag, a picture-level flag, or a slice-level flag. Exemplarily, taking the use of a sequence-level flag as an example, a syntax element sps_lfnst_nspt_enabled_flag is added in the sequence parameter set (SPS). If the value of sps_lfnst_nspt_enabled_flag is 1, the current sequence is allowed to use the present technical solution; and if the value of sps_lfnst_nspt_enabled_flag is 0, the current sequence is not allowed to use the present technical solution. If the present technical solution is allowed, then the encoder, when encoding the current block, also needs to signal the block-level multi_trans_combine_flag into the bitstream, so that the decoding side may determine whether the current block uses the multiple transform combination mode by decoding.

In another embodiment of the present application, the embodiments of the present application also provide a bitstream. The bitstream is generated by performing bit encoding on information to be encoded, and the information to be encoded includes at least one of: at least two sets of first transform coefficients of a current block, at least two transform kernel indices of the current block, at least two feature index numbers of the current block, transform mode flag information of the current block, a value of first syntax flag information, a value of second syntax flag information, or a value of third syntax flag information.

In the embodiments of the present application, the value of the first syntax flag information is used to indicate whether a current sequence is allowed to use a multiple transform combination mode, the second syntax flag information is used to indicate an uppermost residual block of at least two first residual blocks, and the value of the third syntax flag information is used to indicate whether a current slice is allowed to use the multiple transform combination mode.

The embodiments of the present application provide an encoding method, which includes: determining a residual block of a current block; in a case where the current block uses a multiple transform combination mode, determining at least two first residual blocks of the current block according to the residual block of the current block; determining at least two transform kernels of the current block, and performing transform on the at least two first residual blocks according to the at least two transform kernels respectively, to determine at least two sets of first transform coefficients of the current block; and encoding the at least two sets of first transform coefficients of the current block, and signalling obtained encoded bits into a bitstream. In this way, when it is determined that the current block uses the multiple transform combination mode, at least two transform kernels of the current block are first determined, and then transform is performed on at least two first residual blocks of the current block according to the at least two transform kernels respectively, while the decoding side performs inverse transform on the at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

In yet another embodiment of the present application, based on the encoding method and decoding method described in the above embodiments, for NSPT and LFNST, both NSPT and LFNST are transforms that process textures of various angles. They may have multiple transform kernels, and one transform kernel may be specifically optimized for a particular angular texture. Certainly, in addition to angular textures, NSPT and LFNST also include transform kernels that process gradient textures. Actually, these transform kernels may also be said to be trained KLT transforms. It may also be summarized that both NSPT and LFNST have multiple transform kernels, and each transform kernel is designed for a specific texture, and the specific textures include angular textures, gradient textures, and so on. Certainly, gradient textures can be further extended, such as horizontal gradient textures, vertical gradient textures, diagonal gradient textures. Compared with NSPT and LFNST, other primary transforms such as DCT2, DCT8 and DST7, although not as specialized, also have their own relatively suitable situations, which is the reason why MTS can improve compression performance.

However, what these transform kernels can efficiently process are all single textures, for example, a texture that is all in one direction. The "efficient processing" mentioned here refers to a texture that can be fully represented by only a few coefficients at the top-left corner, or in other words, a texture that can be fully represented by the last few coefficients in the scan order. A transform like DCT2 can process any texture, but if there are many coefficients after transform and even quantization, it cannot be referred to as efficient processing.

As illustrated in FIG. 13A, FIG. 13B, and FIG. 13C, assume that the lines in FIG. 13A and FIG. 13B represent the texture of the residual. Such a texture of a straight line at a certain angle can be referred to as a single texture, and the design of LFNST and NSPT in the related art can efficiently process such residuals. Certainly, FIG. 13A and FIG. 13B are only schematic diagrams; typical residual edges are not very sharp, and sharp edges contain a lot of high-frequency information. However, for the texture illustrated in FIG. 13C, it is not a single texture; and it consists of textures of two directions. Currently, transform kernels optimized for a single texture cannot efficiently process such a texture.

If residuals like those in FIG. 13C appear frequently in actual videos, then it is certainly possible to train transform kernels for such textures. However, considering the ever-changing pictures in nature, natural residuals are also ever-changing. If transform kernels are trained for many complex textures, the number of transform kernels would be astonishing.

In a possible implementation, if a complex texture can be split into multiple single textures, then the single textures can be processed separately and then combined. Exemplarily, if the texture in FIG. 13C is split into two single textures as illustrated in FIG. 13A and FIG. 13B, then they can be processed separately. Moreover, it is well known that complex things in nature are composed of simple things, and splitting a complex problem into simple problems for processing conforms to natural laws. Here, the splitting may be achieved by partitioning into smaller blocks, such as partitioning into smaller CUs or smaller TUs. For example, the texture of FIG. 13C can be processed by partitioning it into two left-and-right CUs or TUs. The cost of doing so is various overheads associated with partitioning; and partitioning a block requires transmitting its various necessary information in the bitstream.

In this regard, a texture like that in FIG. 13C is relatively easy to solve by partitioning into small blocks. However, for a texture like that in FIG. 14C, it needs to be partitioned into many small blocks to basically ensure that each small block contains only a simple texture. In practical applications, the texture of FIG. 14C may be composed of those illustrated in FIG. 14A and FIG. 14B. If it is achieved by splitting or decomposing the texture, i.e., decomposing the texture of FIG. 14C into those of FIG. 14A and FIG. 14B, then unnecessary partitioning may be saved, so block partitioning would tend to "using more large blocks and minimizing excessive splitting". The technical solution of the embodiments of the present application employs this approach to solve the problem.

The following describes how the present technical solution is specifically implemented from the perspectives of the decoder and the encoder, respectively.

### (1) Decoder

In the related art, a quantized coefficient block of a block is inverse quantized to obtain a transform coefficient block, which corresponds to one transform kernel (if a secondary transform is used, it is a secondary transform kernel and a primary transform kernel) and is inverse transformed to obtain a residual block. This residual block is added to a prediction block to obtain a reconstructed block.

In the present technical solution, the final residual block may be formed by combining multiple residual blocks. The multiple residual blocks may be referred to as split residual blocks, and the split residual blocks have the same size as the final residual block. Here, there are at least two split residual blocks. Each split residual block is obtained by inverse transform using its respective transform kernel (if a secondary transform is used, it is a secondary transform kernel and a primary transform kernel). In terms of the process, there are multiple processes of inverse transform to obtain residual blocks and a process of combining the residual blocks. The core of the present technical solution is a "parallel" process of multiple inverse transforms. In addition, for convenience of description, the technical solution of the embodiments of the present application may be referred to as a multiple transform combination technique (i.e., the aforementioned "multiple transform combination mode").

Exemplarily, FIG. 18A is a schematic diagram of a decoding process of a residual block, FIG. 18B is a first schematic diagram of a decoding process with two split residual blocks, and FIG. 18C is a second schematic diagram of a decoding process with two split residual blocks. As illustrated in FIG. 18B and FIG.18C, two split residual blocks are schematically provided here, but there may also be more. Here, the technical solution of the embodiments of the present application may be optional at the block (CU) level, meaning that some blocks adopt the technical solution of the embodiments of the present application, while some blocks adopt the related technical solutions. That is, both processes exist in the entire system.

In a possible implementation, each split residual block corresponds to its own transform coefficient block and quantized coefficient block. Each quantized coefficient block may be parsed from the bitstream, as specifically illustrated in FIG. 18B.

In another possible implementation, one quantized coefficient block may be obtained by decoding from the bitstream, and then after inverse quantization, it may be split into two transform coefficient blocks for inverse transform, as specifically illustrated in FIG. 18C.

Certainly, in the embodiments of the present application, two split residual blocks may be combined into the final residual block, and the residual block plus the prediction block equals the reconstructed block, as illustrated in FIG. 20A. Alternatively, several split residual blocks and the prediction block may be directly added to obtain the reconstructed block, as illustrated in FIG. 20B. The essence of both is the same.

### (a) Residual block combination method

Assuming that two split residual blocks are supported in the present technical solution, the residual value of the first split residual block at coordinates (x, y) is *rec*0*_{x,y}*, and the residual value of the second split residual block at coordinates (x, y) is *rec*1*_{x,y}*. The residual value of the final residual block at coordinates (x, y) is *rec_{x,y}*. One possible approach is that for each coordinate (x, y) of the current block, *rec_{x,y}* = *rec*0_{*x*,*y*} + *rec*1*_{x,y}.*

If the issue of picture overlap is considered, as illustrated in FIG. 14A, FIG. 14B and FIG. 14C, the textures in FIG. 14A and FIG. 14B combine to form the texture in FIG. 14C, but there are some intersecting portions. One interpretation is that one texture occludes another texture, which is very common in the real world, such as one object occluding part of another object. A possible approach is that if there is occlusion, it may be assumed that a certain split residual block is always on top. For example, assume that the first split residual block is on top.

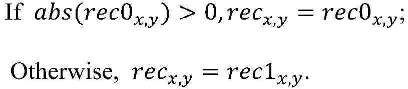

If there are multiple split residual blocks, it may be assumed that the texture of the preceding split residual block is above the texture of the subsequent split residual block.

Another possible approach is to use some syntax elements to indicate which split residual block is on top and which split residual block is at the bottom. For example, the value of the second syntax flag information may be used to indicate the uppermost residual block of at least two first residual blocks.

### (b) Transform kernel set and transform kernel selection

In the embodiments of the present application, the process of decoding each quantized coefficient block to obtain a split residual block requires a transform kernel. A special case is transform skip. For convenience of description, transform skip may be directly treated as a special transform. Under this premise, the process of decoding each quantized coefficient block to obtain a split residual block requires a transform kernel. Here, known transforms include horizontally and vertically separable transforms, horizontally and vertically non-separable transforms, and so on. Separable transforms include DCT2, DCT8, DST7 and so on, and non-separable transforms include LFNST, NSPT and so on. Certainly, the transform skip just mentioned may also be used in the present technical solution. Exemplarily, one quantized coefficient block adopts DCT2, and another quantized coefficient block adopts NSPT; or both quantized coefficient blocks adopt LFNST, and so on.

In a possible implementation, to enable the decoder to clearly identify the transform kernel set and the transform kernel, a basic method is to signal some syntax elements into the bitstream, and the decoder parses the corresponding syntax elements to determine the transform kernel used for each quantized coefficient block. For example, if the current block uses two split residual blocks, then two MTS index syntax elements, mts_idx0 and mts_idx1, are used to indicate the transform kernel for inverse transform of the first quantized coefficient block and the transform kernel for inverse transform of the second quantized coefficient block, respectively.

In another possible implementation, which transform kernel set is selected for intra LFNST and NSPT is automatically matched according to the intra prediction mode. One intra prediction mode represents a type of texture feature; for example, one intra angular prediction mode represents an angle of a texture. Such derivation can reduce bitstream overhead because it no longer requires using syntax elements to signal, in the bitstream, which transform kernel set is selected. In the technical solution, the transform kernel set for LFNST/NSPT may be derived from certain information of the current block. One intra prediction mode may determine one transform kernel set, or in other words, one texture feature index may correspond to one transform kernel set. For convenience of description, the texture feature index is used here for description.

Here, the prediction block or the reference block of the current block, or the reconstructed region surrounding the current block may be used to derive the texture feature index, and the texture feature index is used to determine the transform kernel set for LFNST/NSPT.

The prediction block may be used to derive the texture feature index, which is applicable to blocks encoded by intra prediction, inter prediction, IBC, and other methods. If the prediction block has a certain texture, it may be imagined that the residual block has a texture with the same feature. One method is to calculate gradients for all or a portion of the samples in the prediction block. Generally, horizontal and vertical gradients may be calculated, and the Sobel operator may be used to calculate the gradients. For a certain sample, the texture direction of that sample is inferred according to its horizontal and vertical gradients. For example, if the horizontal gradient value is non-zero and the vertical gradient value is zero, then the texture of that point is in the vertical direction. Conversely, if the horizontal gradient value is zero and the vertical gradient value is non-zero, then the texture of that point is in the horizontal direction. For instance, if the horizontal gradient value and the vertical gradient value are equal and non-zero, then the texture of that point is oriented at 45 degrees. Certainly, there are many other situations where both the horizontal and vertical gradient values are non-zero, and the texture direction of the sample may be determined according to their ratio. In this way, based on the gradients, they may be mapped to the corresponding texture feature index. A texture feature index statistics table is constructed, and the gradient magnitude value of each calculated sample is accumulated into the corresponding texture feature index entry in the statistics table. After the gradient statistics are completed, the texture feature index statistics table can reflect the texture feature exhibited by the prediction block.

The following describes gradient calculation taking the Sobel operator as an example:
operator for horizontal gradient:

| | | |
|---|---|---|
| -1 | 0 | 1 |
| -2 | 0 | 2 |
| -1 | 0 | 1 |

operator for vertical gradient:

| | | |
|---|---|---|
| -1 | -2 | -1 |
| 0 | 0 | 0 |
| 1 | 2 | 1 |

Let the sample value of the prediction block at sample position (x, y) be *P_{x,y},* the calculations of the horizontal gradient value *gradₓ* and the vertical gradient value *grad_{y}* are as follows: ${grad}_{x} = {P}_{x + 1 , y - 1} + 2 ∗ {P}_{x + 1 , y} + {P}_{x + 1 , y + 1} - {P}_{x - 1 , y - 1} - 2 ∗ {P}_{x - 1 , y} - {P}_{x - 1 , y + 1}$ ${grad}_{y} = {P}_{x - 1 , y + 1} + 2 ∗ {P}_{x , y + 1} + {P}_{x + 1 , y + 1} - {P}_{x - 1 , y - 1} - 2 ∗ {P}_{x , y - 1} - {P}_{x + 1 , y - 1}$

The gradient magnitude is denoted as amp. An example is amp = abs(*gradₓ*) *+* abs(*grad_{y}*).

Deriving the texture feature index according to *gradₓ* and *grad_{y}* can be implemented by table lookup. For example:
if abs(*gradₓ*) equals 0 and abs(*grad_{y}*) does not equal 0, there is a horizontal direction texture, corresponding to intra prediction mode 18 in VVC;
if abs(*grad_{y}*) equals 0 and abs(*gradₓ*) does not equal 0, there is a vertical direction texture, corresponding to intra prediction mode 50 in VVC;
if neither abs(*gradₓ*) nor abs(*grad_{y}*) equals 0:
   if abs(*gradₓ*) equals abs(*grad_{y}*), and *gradₓ* and *grad_{y}* have the same sign, corresponding to intra prediction mode 34 in VVC;
   if abs(*gradₓ*) equals 2 times abs(*grad_{y}*), and *gradₓ* and *grad_{y}* have the same sign, corresponding to intra prediction mode 40 in VVC.

Other situations can be determined by table lookup according to the same principle.

On the other hand, another possibility is to use the reconstructed regions to the left and above the current block, similar to the current approach of DIMD. Although the reconstructed regions to the left and above are not part of the current block, they are adjacent to the current block. For example, since there may be texture continuity, they may be used to estimate the texture of the current block to a certain extent. Another possibility is to simultaneously use the prediction block of the current block and the reconstructed regions to the left and above the current block, so that there are more samples available for deriving the texture feature index.

Further, the hardware pipeline length is considered. For the current block, the texture feature index can be derived only after the prediction block is obtained, and the transform kernel for LFNST/NSPT can be determined only after the texture feature index is determined, and then inverse transform and subsequent processes can be performed. If the reference block is used to derive the texture feature index, theoretically, the process of generating the prediction block and the process of deriving the texture feature index may be performed in parallel, thereby yielding a shorter pipeline than that when using the above design. Therefore, the reference block may also be used to derive the texture feature index, or the texture feature index is derived synchronously during the process of generating the prediction block.

When using the reference block, the integer-pel reference block may be directly used since the texture direction will not exhibit a significant difference. For example, for a bi-directional prediction inter block, on one hand, the texture feature index is derived according to the integer-pel reference block, and on the other hand, fractional-pel interpolation filtering is performed on the two reference blocks, and then the two fractional-pel reference blocks are weighted-combined. Certainly, a fractional-pel reference block on which interpolation filtering is performed may also be used. For example, for a bi-directional prediction inter block, it is first necessary to perform fractional-pel interpolation filtering on the two reference blocks, and then perform weighted combination on the two fractional-pel reference blocks. Then, after obtaining the two interpolation-filtered reference blocks, on one hand, a weighted average may be performed according to the interpolation-filtered reference blocks to obtain a prediction value, and on the other hand, the texture feature index may be derived according to the interpolation-filtered reference blocks.

In this way, a texture feature statistics table is obtained using the above method. If the current block does not use the multiple transform combination mode, then the texture feature index with the largest statistical magnitude value in the texture feature statistics table may be used to derive the transform kernel set for LFNST/NSPT. If the current block uses the multiple transform combination mode, for example, if two transform kernel sets for LFNST/NSPT are needed, then the top two texture feature indices with the largest statistical magnitude values in the texture feature statistics table may be used to derive the transform kernel sets for LFNST/NSPT. Here, the texture feature index with the largest statistical magnitude value is used to derive the first transform kernel set for LFNST/NSPT, and the texture feature index with the second largest statistical magnitude value is used to derive the second transform kernel set for LFNST/NSPT.

In yet another possible implementation, the above description mentions using the prediction block or reference block of the current block or the reconstructed picture surrounding the current block to derive the texture feature indices. In a specific embodiment, one or more texture feature indices with the strongest gradient magnitude are selected for deriving the transform kernel sets for LFNST/NSPT. Another method is to construct a candidate list, i.e., a candidate list of texture feature indices, and use syntax elements signalled into the bitstream to indicate which candidates are finally selected.

An example of constructing the candidate list is: following the above method for calculating gradient magnitude values, selecting the top-ranked texture feature indices in descending order of statistical magnitude values to form the candidate list. Here, N may be 2, 3, 4, and so forth. Assuming N is 4, this means that the texture feature index with the largest statistical magnitude value serves as the first element of the candidate list, the texture feature index with the second largest statistical magnitude value serves as the second element of the candidate list, and so forth.

Another example of constructing the candidate list is: for GPM, the first element of the candidate list may be set as the texture feature index corresponding to the "partitioning" mode of GPM, the second element as the texture feature index with the largest statistical magnitude value, the third element as the texture feature index with the second largest statistical magnitude value, and so forth.

In the embodiments of the present application, syntax elements such as lfnst_nspt_feature_idx0 and lfnst_nspt_feature_idx1 may also be used to select texture feature indices. For example, if lfnst_nspt_feature_idx0 is 0, the first transform selects the first element in the candidate list; if lfnst_nspt_feature_idx0 is 1, the first transform selects the second element in the candidate list. lfnst_nspt_feature_idx0 and lfnst_nspt_feature_idx1 may be parsed only when the current block uses LFNST or NSPT; and if the current block does not use LFNST or NSPT, lfnst_nspt_feature_idx0 and lfnst_nspt_feature_idx1 are not parsed. For example, lfnst_nspt_idx may also be used to indicate whether the current block uses LFNST/NSPT and which transform kernel is selected from the transform kernel set for LFNST/NSPT. When lfnst_nspt_idx is 0, it indicates that the current block does not use LFNST/NSPT. In this case, lfnst_nspt_feature_idx0 and lfnst_nspt_feature_idx1 need not be parsed. Otherwise (i.e., when lfnst_nspt_idx is not 0), it indicates that the current block uses LFNST/NSPT. In this case, lfnst_nspt_feature_idx0 and lfnst_nspt_feature_idx1 are parsed.

Additionally, because the two transform kernel sets cannot be the same, if N is 4, lfnst_nspt_feature_idx0 has four choices, while lfnst_nspt_feature_idx1 has only three choices.

To put it simply, one possible implementation relies entirely on bitstream indication, another possible implementation relies entirely on the decoder's own derivation, and yet another possible implementation is a compromise between the two: the decoder derives the candidate list, and then the bitstream indicates which transform kernel set is determined for the current block from the small range of candidates.

### (c) Determine whether a current block uses a multiple transform combination mode

In a possible implementation, a syntax element is directly used to determine whether the current block uses the multiple transform combination mode. For example, a CU-level or TU-level multi_trans_combine_flag is used. If the value of multi_trans_combine_flag is 1, it indicates that the current block uses the multiple transform combination mode. Otherwise (i.e., the value of multi_trans_combine_flag is 0), it indicates that the current block does not use the multiple transform combination mode.

In another possible implementation, further, multi_trans_combine_flag may also be parsed conditionally, using some known conditions to exclude situations where the multiple transform combination mode would not be used, thereby saving the overhead of multi_trans_combine_flag.

In the embodiments of the present application, if the texture of the residual block is complex, the number of non-zero coefficients after transform and quantization will still be large. In other words, if the transform kernel cannot efficiently process the texture feature of the residual block, the number of non-zero coefficients after transform and quantization will also be large. For example, a horizontally and vertically separable transform is not very efficient for processing diagonal textures. A transform kernel optimized for a single texture feature may not be very efficient for processing the residual with composite texture features, but splitting the residual with composite texture features into single texture features and using multiple transform kernels each optimized for a single texture feature may be more efficient. This is the original intention of the multiple transform combination mode. An intuitive reflection of so-called efficiency is that the number of non-zero coefficients after transform and quantization is small, or the sum of the values of the non-zero coefficients after transform and quantization is small. Therefore, some situations where multiple transform combination is not used can be excluded according to the number of non-zero coefficients, the last non-zero position, or the values of the non-zero coefficients.

In the design of transform kernels for LFNST/NSPT, the number of inputs and outputs of a transform kernel may be different. Taking NSPT as an example, the transform kernel information at the NSPT decoding side in ECM10 is shown in Table 5 above. Taking a 4x16 block as an example, the number of inputs for NSPT is 24, and the number of outputs is 64. The number of outputs is easy to understand because a 4x16 block has 64 samples, so the inverse NSPT transform outputs 64 sample values. The number of inputs is 24, which means that if the current block is to use NSPT for inverse transform, the number of coefficients in scan order from the last non-zero coefficient to the first coefficient (top-left corner (0,0) position) will not exceed 24. In other words, if it exceeds 24, then the current block definitely does not use NSPT. LFNST has a similar design, i.e., for a given block size, if the position of the last non-zero coefficient is less than (or equal to) a threshold, where this threshold is determined by LFNST/NSPT, then it is possible that LFNST/NSPT is used, and the syntax elements of LFNST/NSPT need to be parsed to determine whether the current block uses LFNST/NSPT; otherwise, it is inferred that the current block does not use LFNST/NSPT, and the syntax elements of LFNST/NSPT do not need to be parsed.

Similarly, a threshold (i.e., the aforementioned first threshold) may also be set for the combination of multiple transforms. If the number of coefficients in scan order from the last non-zero coefficient to the first coefficient (top-left corner (0,0) position) does not exceed the first threshold, then the current block may use the multiple transform combination mode, and multi_trans_combine_flag needs to be parsed. Otherwise, multi_trans_combine_flag does not need to be parsed, and it is inferred that the current block does not use the multiple transform combination mode. The magnitude of the first threshold may be the same as the threshold for a single LFNST/NSPT, or larger than the threshold for a single LFNST/NSPT, or smaller than the threshold for a single LFNST/NSPT. Taking two transform kernels as an example, on the one hand, the maximum number of inputs for two transform kernels is larger than the input for one transform kernel; on the other hand, it is expected that the multiple transform combination mode is more efficient than a single transform mode, and an intuitive reflection is that there are fewer non-zero coefficients.

### (d) Distinguishing multiple sets of transform coefficients

In the related art, a transform block (TB) of one component in one TU has only one set of transform coefficients. However, a TB of one component in the multiple transform combination mode may have multiple sets of transform coefficients, such as two sets, which are supplied to different transform kernels, respectively. Therefore, it is necessary to distinguish multiple sets of transform coefficients from the bitstream.

In a possible implementation, if a syntax element multi_trans_combine_flag is directly used to determine whether the current block uses the multiple transform combination mode, then multi_trans_combine_flag may be parsed before parsing the coefficients, and the transform coefficients are parsed by using different strategies according to multi_trans_combine_flag. For example, the value of multi_trans_combine_flag is 1, then two sets of transform coefficients may be parsed respectively, and the parsing method for each set of coefficients is the same as in the related art. This method is intuitive. If it is known that two transform kernels are to be used, then two sets of transform coefficients are parsed.

In another possible implementation, the transform coefficients may be parsed first, and then it is determined whether the multiple transform combination mode is used. That is, when parsing the transform coefficients, it is not known whether what is to be parsed is essentially one set of transform coefficients or two sets of transform coefficients, but it is in the form of one set of transform coefficients. If it is determined that the current block is to use the multiple transform combination mode, then the parsed coefficients need to be split into two sets of transform coefficients.

A possible method is that the information for distinguishing the two sets of transform coefficients may be hidden in the coefficients. For example, the last non-zero coefficient represents the position of the last non-zero coefficient in the first set of coefficients, i.e., the number of coefficients in scan order from the first coefficient (position (0,0) at the top-left corner) to the last non-zero coefficient in the first set of transform coefficients, minus one. Here, the reason for subtracting one is that each set of coefficients should not be all zeros; otherwise, the transform would be meaningless.

Exemplarily, the coefficients are arranged in scan order, and the parsed coefficients are 12, 5, 5, 6, 0, 2, 0, 1, 20, 9, 9, 4 and 7. The last non-zero coefficient 7 is not an actual coefficient, but indicates that the eight coefficients at positions 0 to 7 are the first set of transform coefficients, i.e., 12, 5, 5, 6, 0, 2, 0, 1. The remaining coefficients are the second set of transform coefficients, i.e., 20, 9, 9, 4. These coefficients are placed at corresponding positions in the two-dimensional coefficient block, and the values at other positions are zero.

Alternatively, the last non-zero coefficient may also represent the number of coefficients in scan order from the first coefficient in the second set of transform coefficients to the last non-zero coefficient in the second set of transform coefficients, minus one. Here, the reason for subtracting one is that each set of coefficients should not be all zeros; otherwise, the transform would be meaningless.

Exemplarily, the coefficients are arranged in scan order, and the parsed coefficients are 12, 5, 5, 6, 0, 2, 0, 1, 20, 9, 9, 4 and 3. The last non-zero coefficient 3 is not an actual coefficient, but indicates that the second set of transform coefficients in the above coefficients consists of 4 coefficients, i.e., 20, 9, 9, 4. The preceding coefficients are the first set of transform coefficients, i.e., 12, 5, 5, 6, 0, 2, 0, 1. These coefficients are placed at corresponding positions in the two-dimensional coefficient block, and the values at other positions are zero.

In yet another possible implementation, it may also be that among the forcibly parsed coefficients, the first half is the first set of transform coefficients, and the latter half is the second set of transform coefficients. For example, if there are a total of N coefficients from the first transform coefficient up to the last non-zero transform coefficient, then N/2 coefficients are the first set of transform coefficients, and the remaining N/2 coefficients are the second set of transform coefficients. This approach requires that the encoder meet certain requirements when encoding the transform coefficients, for example, by forcing zero padding or forcibly quantizing certain coefficients to zero to ensure that the boundary between the two sets of coefficients is exactly at N/2.

### (2) Encoder

For many encoding tools, the decoder needs to decode from the bitstream the mode selected by the encoder, and then perform decoding according to the decoded mode. The encoder needs to select the mode or parameter it considers best from a variety of possible modes or parameters and transmit them into the bitstream. For the multiple transform combination mode, taking the case where two LFNST/NSPT transform kernels are used in the multiple transform combination mode as an example, it needs to allocate one residual block to two transform kernels for encoding. Whether the residual block of the current block is suitable for the multiple transform combination mode, and which residuals each transform kernel should encode, can be implemented based on the following methods.

In a possible implementation, the encoder performs pre-analysis before attempting the multiple transform combination mode to determine whether the residual block of the current block is suitable for the multiple transform combination mode, such as detecting whether there are two types of textures in the residual block, and whether the texture in the residual block is consistent with the texture suitable for the transform kernels. The detection manner may use a gradient statistics manner, similar to the manner used when deriving texture feature indices. This can exclude some situations that are not suitable for the combination of multiple transforms and reduce the burden on the encoder.

In another possible implementation, some neural network-based means are adopted for pre-analysis to determine whether the residual block of the current block is suitable for the multiple transform combination mode, and to split the residual block into two parts, for example, splitting the texture of FIG. 14C into those of FIG. 14A and FIG. 14B. In this way, the split residuals can be handed over to different transform kernels for processing.

In yet another possible implementation, the encoder does not necessarily directly consider which portion of the residual is allocated to which transform. Instead, the encoder adjusts the values of the two sets of transform coefficients and uses the coding cost (the combined cost of rate and distortion) to determine whether it has done well enough. This is similar to the RDOQ process in the existing encoder, but now it optimizes two sets of transform coefficients together. First, two transform kernels are used to respectively perform transform and quantization on the entire residual block. In theory, the coefficients obtained from the two transform kernels can each reconstruct a complete residual block, but certainly, due to quantization, there will be distortion. Then, attempts are made to adjust the two sets of transform coefficients, i.e., attempting multiple combinations of the two sets of transform coefficients, such as reducing the values of coefficients from high frequency to low frequency respectively, or setting the values of coefficients to zero. The cost of encoding these transform coefficients is calculated, i.e., the rate component in rate-distortion. The coefficients are inverse quantized and inverse transformed, the residual blocks are combined, and subtracted from the original residual block to obtain the distortion cost, i.e., the distortion component in rate-distortion. The rate and distortion components are added together according to a given ratio to obtain the coding cost of the current mode. Attempts are made to adjust the coefficients, and finally the coefficient combination with the minimum coding cost is taken as the multiple transform combination scheme. When adjusting the coefficients, the first set of transform coefficients and the second set of transform coefficients may be adjusted sequentially, with alternating optimization. That is, first, the first set of transform coefficients is optimized to a relatively good level using RDOQ. Here, because the second transform is to be added, the adjustment criteria may be different from the method using only one transform, for example, a higher weight is given to the rate so that the first transform uses fewer codewords to produce an acceptable residual block. Then, the first set of transform coefficients is fixed, the second set of coefficients is adjusted, and RDOQ is used to optimize the second set of transform coefficients.

To put it simply, the first two implementations may be said to involve the encoder actively judging and actively splitting. The latter implementation may be said to involve the encoder not needing to analyze from the picture perspective whether the residual texture is suitable for allocation to two transform kernels and how to allocate it, but rather attempting some possible situations and determining whether to use the multiple transform combination mode. If, after attempts, the coding cost of the multiple transform combination mode is less than the coding cost of a single transform in the related art, then the multiple transform combination mode is used; otherwise, the multiple transform combination mode is not used. It should be noted that the above implementations may be used in combination.

In the embodiments of the present application, the specific implementation of the foregoing embodiments is described in detail through the above embodiments. It can be seen from the above that, according to the technical solutions of the foregoing embodiments, for the multiple transform combination mode, its core is the "parallel" processes of multiple inverse transforms, utilizing each of the multiple transform kernels to efficiently process a portion of the texture, and then combining the multiple residuals. In this way, by using the multiple transform combination mode, multiple transforms each efficiently process a certain type of texture, and for certain relatively complex residual blocks, its compression efficiency can be higher than that achieved using a single transform kernel, thereby improving processing efficiency and thus improving encoding and decoding performance.

In yet another embodiment of the present application, based on the same inventive concept as the above embodiments, FIG. 25 is a schematic diagram of a composition structure of an encoder provided in an embodiment of the present application. As illustrated in FIG. 25, the encoder 250 may include a first determination unit 2501, a first transform unit 2502 and an encoding unit 2503.

The first determination unit 2501 is configured to determine a residual block of a current block, and determine at least two first residual blocks of the current block according to the residual block of the current block in a case where the current block uses a multiple transform combination mode.

The first transform unit 2502 is configured to determine at least two transform kernels of the current block, and perform transform on the at least two first residual blocks according to the at least two transform kernels respectively, to determine at least two sets of first transform coefficients of the current block.

The encoding unit 2503 is configured to encode the at least two sets of first transform coefficients of the current block, and signal obtained encoded bits into a bitstream.

In some embodiments, the encoding unit 2503 is further configured to encode the at least two sets of first transform coefficients of the current block separately, and signal the obtained encoded bits into the bitstream.

In some embodiments, the first determination unit 2501 is further configured to determine second transform coefficients of the current block according to the at least two sets of first transform coefficients of the current block; and the encoding unit 2503 is further configured to encode the second transform coefficients of the current block, and signal the obtained encoded bits into the bitstream.

In some embodiments, a last non-zero coefficient in the second transform coefficients is used to indicate a partitioning strategy for the at least two sets of first transform coefficients.

In some embodiments, the first determination unit 2501 is further configured to determine a prediction block of the current block; and determine the residual block of the current block according to an original picture of the current block and the prediction block of the current block.

In some embodiments, the first determination unit 2501 is further configured to perform pre-analysis on the residual block of the current block using a preset manner to determine whether the current block uses the multiple transform combination mode, and in a case where the current block uses the multiple transform combination mode, partition the residual block of the current block into the at least two first residual blocks.

In some embodiments, the first determination unit 2501 is further configured to split the residual block of the current block using a plurality of combination modes to determine a plurality of combined residual blocks; perform cost calculation on the plurality of combined residual blocks to determine respective cost results of the plurality of combination modes; determine a target combination mode according to the respective cost results of the plurality of combination modes; and split the residual block of the current block using the target combination mode to determine the at least two first residual blocks of the current block.

In some embodiments, the first determination unit 2501 is further configured to determine a minimum cost result from the respective cost results of the plurality of combination modes, and determine a combination mode corresponding to the minimum cost result as the target combination mode.

In some embodiments, the first determination unit 2501 is further configured to determine a value of second syntax flag information, where the second syntax flag information is used to indicate an uppermost residual block of the at least two first residual blocks; and the encoding unit 2503 is further configured to encode the value of the second syntax flag information, and signal obtained encoded bits into the bitstream.

In some embodiments, the first determination unit 2501 is further configured to determine at least two texture feature indices of the current block; determine at least two transform kernel sets according to the at least two texture feature indices; and determine the at least two transform kernels of the current block according to the at least two transform kernel sets.

In some embodiments, the encoding unit 2503 is further configured to encode the at least two transform kernels of the current block, and signal obtained encoded bits into the bitstream.

In some embodiments, the first determination unit 2501 is further configured to perform, based on at least one candidate transform kernel in a first transform kernel set, cost value calculation on the at least one candidate transform kernel, to determine respective cost results of the at least one candidate transform kernel; and determine a minimum cost result from the respective cost results of the at least one candidate transform kernel, and take a candidate transform kernel corresponding to the minimum cost result as a first transform kernel of the current block; where the first transform kernel set is one of the at least two transform kernel sets, and the first transform kernel is one of the at least two transform kernels.

In some embodiments, the first determination unit 2501 is further configured to determine at least two transform kernel indices of the current block according to the at least two transform kernels of the current block and the at least two transform kernel sets, where the at least two transform kernel indices are used to indicate numbers of the at least two transform kernels of the current block in the corresponding transform kernel sets respectively; and the encoding unit 2503 is further configured to encode the at least two transform kernel indices, and signal obtained encoded bits into the bitstream.

In some embodiments, the first determination unit 2501 is further configured to determine candidate samples for deriving the at least two texture feature indices; and determine the at least two texture feature indices of the current block according to the candidate samples.

In some embodiments, the first determination unit 2501 is further configured to determine horizontal gradient values and vertical gradient values of the candidate samples; determine texture feature indices and gradient magnitude values corresponding to the candidate samples according to the horizontal gradient values and the vertical gradient values of the candidate samples; construct a texture feature statistics table according to the texture feature indices and the gradient magnitude values corresponding to the candidate samples; and determine the at least two texture feature indices of the current block according to the texture feature statistics table.

In some embodiments, the first determination unit 2501 is further configured to determine a prediction block of the current block; and take at least a portion of samples in the prediction block as the candidate samples.

In some embodiments, the first determination unit 2501 is further configured to determine neighboring samples in a reconstructed region of the current block; and take the neighboring samples in the reconstructed region as the candidate samples.

In some embodiments, the first determination unit 2501 is further configured to take the neighboring samples in the reconstructed region and at least the portion of samples in the prediction block as the candidate samples.

In some embodiments, the first determination unit 2501 is further configured to determine a reference block of the current block; and take at least a portion of samples in the reference block as the candidate samples.

In some embodiments, the first determination unit 2501 is further configured to determine that the reference block is an integer-pel reference block; or determine that the reference block is a fractional-pel reference block.

In some embodiments, the first determination unit 2501 is further configured to determine two reference picture blocks for bi-directional prediction of the current block; perform fractional-pel interpolation filtering on the two reference picture blocks to determine two fractional-pel reference picture blocks; and perform weighted combination on the two fractional-pel reference picture blocks to determine the reference block of the current block.

In some embodiments, the first determination unit 2501 is further configured to perform angle mapping according to the horizontal gradient values and the vertical gradient values of the candidate samples to determine the texture feature indices corresponding to the candidate samples; and perform gradient magnitude calculation according to the horizontal gradient values and the vertical gradient values of the candidate samples to determine the gradient magnitude values corresponding to the candidate samples.

In some embodiments, the first determination unit 2501 is further configured to determine the texture feature indices corresponding to the candidate samples using a preset lookup table according to the horizontal gradient values and the vertical gradient values of the candidate samples.

In some embodiments, the first determination unit 2501 is further configured to perform addition operations on the absolute values of the horizontal gradient values and the absolute values of the vertical gradient values to determine the gradient magnitude values corresponding to the candidate samples.

In some embodiments, the first determination unit 2501 is further configured to determine, in a case where a number of the candidate samples is at least one, at least one texture feature index and at least one corresponding gradient magnitude value; determine at least one reference texture feature index with mutually distinct characteristics according to the at least one texture feature index, and perform an accumulation calculation on gradient magnitude values belonging to a same reference texture feature index according to the at least one gradient magnitude value to determine an accumulated gradient magnitude value corresponding to the at least one reference texture feature index; and construct the texture feature statistics table according to the at least one reference texture feature index and the accumulated gradient magnitude value corresponding to the at least one reference texture feature index.

In some embodiments, the first determination unit 2501 is further configured to sort the texture feature statistics table in descending order of accumulated gradient magnitude values to determine at least two top-ranked accumulated gradient magnitude values; and determine reference texture feature indices corresponding to the at least two top-ranked accumulated gradient magnitude values as the at least two texture feature indices of the current block.

In some embodiments, the first determination unit 2501 is further configured to determine a reference block of the current block; and determine the at least two texture feature indices of the current block according to at least two texture feature indices of the reference block.

In some embodiments, the first determination unit 2501 is further configured to construct a candidate list, where the candidate list includes N candidate texture feature indices, N being an integer greater than 1; and select at least two candidate texture feature indices from the N candidate texture feature indices, and determine the at least two candidate texture feature indices as the at least two texture feature indices of the current block.

In some embodiments, the first determination unit 2501 is further configured to determine at least two feature index numbers of the current block according to the at least two texture feature indices of the current block, where the at least two feature index numbers are used to indicate numbers of the at least two texture feature indices of the current block in the candidate list respectively; and the encoding unit 2503 is further configured to encode the at least two feature index numbers of the current block, and signal obtained encoded bits into the bitstream.

In some embodiments, the first determination unit 2501 is further configured to perform cost value calculation on the N candidate texture feature indices, to determine respective cost results of the N candidate texture feature indices; and determine at least two target cost values based on the respective cost results of the N candidate texture feature indices, and determine candidate texture feature indices corresponding to the at least two target cost values as the at least two texture feature indices.

In some embodiments, the first determination unit 2501 is further configured to sort a texture feature statistics table in descending order of accumulated gradient magnitude values to determine N reference texture feature indices corresponding to N top-ranked accumulated gradient magnitude values; and construct the candidate list according to the N reference texture feature indices.

In some embodiments, the first determination unit 2501 is further configured to determine a first texture feature index corresponding to a geometric partitioning mode for the current block, and determine (N-1) reference texture feature indices corresponding to (N-1) top-ranked accumulated gradient magnitude values; and construct the candidate list according to the first texture feature index and the (N-1) reference texture feature indices.

In some embodiments, the encoding unit 2503 is further configured to perform, in a case where the current block uses a first transform mode, the step of encoding the at least two feature index numbers of the current block, and signalling the obtained encoded bits into the bitstream.

In some embodiments, the first determination unit 2501 is further configured to determine transform mode flag information of the current block, where the transform mode flag information is used to indicate whether the current block uses the first transform mode; and the encoding unit 2503 is further configured to encode the transform mode flag information of the current block, and signal obtained encoded bits into the bitstream.

In some embodiments, the first determination unit 2501 is further configured to determine a value of first syntax flag information, where the first syntax flag information is used to indicate whether the current block uses the multiple transform combination mode; and the encoding unit 2503 is further configured to encode the value of the first syntax flag information, and signal obtained encoded bits into the bitstream.

In some embodiments, the first determination unit 2501 is further configured to determine transform coefficients of the current block; and the encoding unit 2503 is further configured to perform, in a case where non-zero coefficient information in the transform coefficients satisfies a preset condition, the step of encoding the value of the first syntax flag information, and signalling the obtained encoded bits into the bitstream.

In some embodiments, the non-zero coefficient information in the transform coefficients satisfying the preset condition includes: a number of coefficients between a first coefficient and a last non-zero coefficient in the transform coefficients not exceeding a first threshold.

In some embodiments, the first determination unit 2501 is further configured to determine a value of third syntax flag information, where the third syntax flag information is used to indicate whether a current sequence is allowed to use the multiple transform combination mode, and the current sequence includes the current block; and the encoding unit 2503 is further configured to encode the value of the third syntax flag information, and signal obtained encoded bits into the bitstream.

In some embodiments, the first determination unit 2501 is further configured to determine a value of third syntax flag information and a value of fourth syntax flag information, where the third syntax flag information is used to indicate whether a current sequence is allowed to use the multiple transform combination mode, and the fourth syntax flag information is used to indicate whether a current slice is allowed to use the multiple transform combination mode, where the current sequence includes the current slice, and the current slice includes the current block; and the encoding unit 2503 is further configured to encode the value of the third syntax flag information and the value of the fourth syntax flag information, and signal obtained encoded bits into the bitstream.

It may be understood that in the embodiments of the present application, the "unit" may be part of a circuit, part of a processor, part of a program or software, or the like, and may also be a module or may be non-modular. Moreover, various components in the present embodiment may be integrated into one processing unit, or each unit may be physically present alone, or two or more units may be integrated into one unit. The above integrated units may be implemented in the form of hardware or software function modules.

The integrated unit may be stored in a computer readable storage medium when it is implemented in the form of software functional modules and is not sold or used as a separate product. Based on such understanding, the technical solutions of the embodiments essentially, or the part of the technical solutions that contributes to the related art, or all or part of the technical solutions, may be embodied in the form of a software product which is stored in a storage medium and includes various instructions for causing a computer device (which may be a personal computer, a server, or a network device and so on) or a processor to perform all or part of the steps described in the embodiments. The above storage medium includes various media that can store program codes, such as a U disk, a mobile hard disk, a read only memory (ROM), a random access memory (RAM), a diskette, or an optical disk.

Therefore, the embodiments of the present application provide a computer-readable storage medium, which is applied to the encoder 250. The computer-readable storage medium has a computer program stored thereon, and the computer program implements, when executed by a first processor, the method according to any one of the above embodiments.

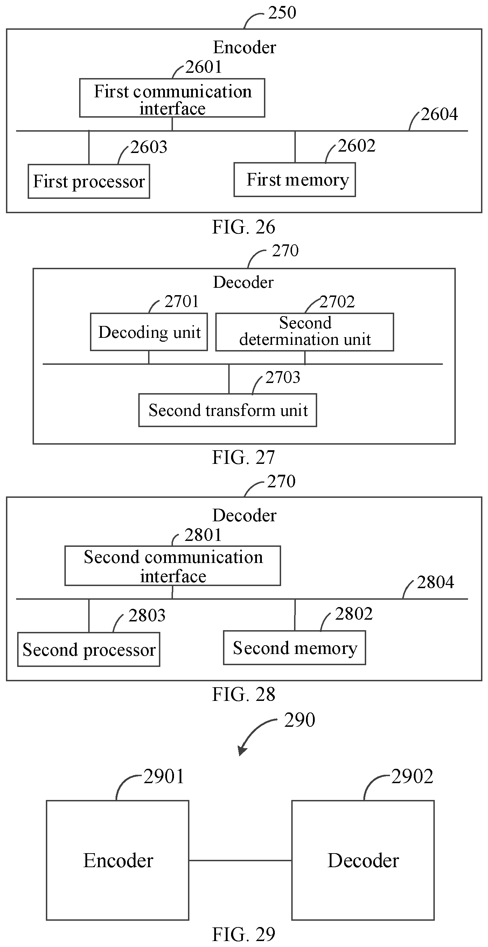

Based on the composition of the encoder 250 and the computer-readable storage medium described above, FIG. 26 is a schematic diagram of a specific hardware structure of an encoder provided in an embodiment of the present application. As illustrated in FIG. 26, the encoder 250 may include: a first communication interface 2601, a first memory 2602, and a first processor 2603. Each component is coupled together via a first bus system 2604. It may be understood that the first bus system 2604 is configured to achieve connection and communication between these components. In addition to a data bus, the first bus system 2604 further includes a power bus, a control bus and a status signal bus. However, for the sake of clarity, various buses are labeled as the first bus system 2604 in FIG. 26.

The first communication interface 2601 is configured to receive and transmit signals in the process of transmitting and receiving information with other external network elements.

The first memory 2602 is configured to store a computer program executable on the first processor 2603.

The first processor 2603 is configured to, when executing the computer program, perform:
determining a residual block of a current block; in a case where the current block uses a multiple transform combination mode, determining at least two first residual blocks of the current block according to the residual block of the current block; determining at least two transform kernels of the current block, and performing transform on the at least two first residual blocks according to the at least two transform kernels respectively, to determine at least two sets of first transform coefficients of the current block; and encoding the at least two sets of first transform coefficients of the current block, and signalling obtained encoded bits into a bitstream.

It can be understood that the first memory 2602 in the embodiments of the present application may be a volatile memory or a non-volatile memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), which acts as an external cache memory. By way of example but not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DRRAM). The first memory 2602 of the systems and methods described in the present application is intended to include, but is not limited to, these and any other suitable types of memories.

The first processor 2603 may be an integrated circuit chip having signal processing capabilities. In the implementation process, various steps of the above methods may be completed by an integrated logic circuit of hardware or an instruction in the form of software in the first processor 2603. The first processor 2603 mentioned above may be a general-purpose processor, a digital signal processor (DSP), an application specific integrated circuit (ASIC), a field programmable gate array (FPGA) or other programmable logic devices, discrete gate or transistor logic devices, and discrete hardware components. Various methods, steps and logic diagrams disclosed in the embodiments of the present application may be implemented or performed. A general purpose processor may be a microprocessor, or the processor may be any conventional processor or the like. The steps of the method disclosed according to the embodiments of the present disclosure may be directly implemented by a hardware decoding processor, or may be implemented by a combination of hardware and software modules in the decoding processor. The software module may be located in a random access memory, a flash memory, a read-only memory, a programmable read-only memory, or an electrically erasable programmable memory, a register, or other mature storage media in the art. The storage medium is located in the first memory 2602, and the first processor 2603 reads the information in the first memory 2602 and completes the steps of the above methods in combination with its hardware.

It is to be understood that the embodiments described in the present application may be implemented by hardware, software, firmware, middleware, microcode, or a combination thereof. For hardware implementation, the processing unit may be implemented in one or more application specific integrated circuits (ASIC), digital signal processing (DSP), digital signal processing devices (DSPD), programmable logic devices (PLD), field programmable gate arrays (FPGA), general-purpose processors, controllers, microcontrollers, microprocessors, other electronic units configured to perform the functions described in the present application, or a combination thereof. For software implementation, the technology described in the present application may be implemented through modules (e.g., procedures, functions) that perform the functions described in the present application. The software codes may be stored in a memory and executed by a processor. The memory may be implemented within the processor or external to the processor.

Optionally, as another embodiment, the first processor 2603 is further configured to perform, when executing the computer program, the method described in any one of the above embodiments.

The embodiment provides an encoder. The encoder first needs to determine at least two transform kernels of the current block, and then perform transform on at least two first residual blocks of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

In yet another embodiment of the present application, based on the same inventive concept as the above embodiments, FIG. 27 is a schematic diagram of a composition structure of a decoder provided in an embodiment of the present application. As illustrated in FIG. 27, the decoder 270 may include a decoding unit 2701, a second determination unit 2702 and a second transform unit 2703.

The decoding unit 2701 is configured to decode a bitstream to determine a value of first syntax flag information.

The second determination unit 2702 is configured to determine at least two sets of first transform coefficients of a current block in a case where the first syntax flag information indicates that the current block uses a multiple transform combination mode.

The second transform unit 2703 is configured to determine at least two transform kernels of the current block, and perform inverse transform on the at least two sets of first transform coefficients according to the at least two transform kernels respectively, to determine at least two first residual blocks of the current block.

The second determination unit 2702 is further configured to determine a reconstructed block of the current block according to the at least two first residual blocks.

In some embodiments, the second determination unit 2702 is further configured to determine a prediction block of the current block; and determine the reconstructed block of the current block according to the prediction block and the at least two first residual blocks.

In some embodiments, the second determination unit 2702 is further configured to determine a second residual block according to the at least two first residual blocks; and determine the reconstructed block of the current block according to the prediction block and the second residual block.

In some embodiments, the second determination unit 2702 is further configured to perform an addition operation on the at least two first residual blocks to determine the second residual block.

In some embodiments, the second determination unit 2702 is further configured to determine, in a case where a non-zero overlapping region exists among the at least two first residual blocks, an uppermost residual block of the at least two first residual blocks; and determine residual values of the second residual block in the non-zero overlapping region according to the uppermost residual block.

In some embodiments, the decoding unit 2701 is further configured to decode the bitstream to determine a value of second syntax flag information; and the second determination unit 2702 is further configured to determine the uppermost residual block of the at least two first residual blocks according to the value of the second syntax flag information.

In some embodiments, the decoding unit 2701 is further configured to decode the bitstream to determine the at least two sets of first transform coefficients of the current block.

In some embodiments, the decoding unit 2701 is further configured to decode the bitstream to determine second transform coefficients of the current block; and the second determination unit 2702 is further configured to determine, in a case where the first syntax flag information indicates that the current block uses the multiple transform combination mode, the at least two sets of first transform coefficients of the current block according to the second transform coefficients.

In some embodiments, the second determination unit 2702 is further configured to evenly partition the second transform coefficients to determine the at least two sets of first transform coefficients of the current block.

In some embodiments, the second determination unit 2702 is further configured to determine a last non-zero coefficient in the second transform coefficients; and partition the second transform coefficients according to a partitioning strategy indicated by the last non-zero coefficient to determine the at least two sets of first transform coefficients of the current block.

In some embodiments, the encoding unit 2701 is further configured to decode the bitstream to determine the at least two transform kernels of the current block.

In some embodiments, the second determination unit 2702 is further configured to determine at least two texture feature indices of the current block; determine at least two transform kernel sets according to the at least two texture feature indices; and determine the at least two transform kernels of the current block according to the at least two transform kernel sets.

In some embodiments, the encoding unit 2701 is further configured to decode the bitstream to determine at least two transform kernel indices of the current block; and the second determination unit 2702 is further configured to determine the at least two transform kernels of the current block according to the at least two transform kernel sets and the corresponding at least two transform kernel indices.

In some embodiments, the second determination unit 2702 is further configured to candidate samples for deriving the at least two texture feature indices; and determine the at least two texture feature indices of the current block according to the candidate samples.

In some embodiments, the second determination unit 2702 is further configured to determine horizontal gradient values and vertical gradient values of the candidate samples; determine texture feature indices and gradient magnitude values corresponding to the candidate samples according to the horizontal gradient values and the vertical gradient values of the candidate samples; construct a texture feature statistics table according to the texture feature indices and the gradient magnitude values corresponding to the candidate samples; and determine the at least two texture feature indices of the current block according to the texture feature statistics table.

In some embodiments, the second determination unit 2702 is further configured to determine a prediction block of the current block; and take at least a portion of samples in the prediction block as the candidate samples.

In some embodiments, the second determination unit 2702 is further configured to determine neighboring samples in a reconstructed region of the current block; and take the neighboring samples in the reconstructed region as the candidate samples.

In some embodiments, the second determination unit 2702 is further configured to take the neighboring samples in the reconstructed region and at least the portion of samples in the prediction block as the candidate samples.

In some embodiments, the second determination unit 2702 is further configured to determine a reference block of the current block; and take at least a portion of samples in the reference block as the candidate samples.

In some embodiments, the second determination unit 2702 is further configured to determine that the reference block is an integer-pel reference block; or determine that the reference block is a fractional-pel reference block.

In some embodiments, the second determination unit 2702 is further configured to determine two reference picture blocks for bi-directional prediction of the current block; perform fractional-pel interpolation filtering on the two reference picture blocks to determine two fractional-pel reference picture blocks; and perform weighted combination on the two fractional-pel reference picture blocks to determine the reference block of the current block.

In some embodiments, the second determination unit 2702 is further configured to perform angle mapping according to the horizontal gradient values and the vertical gradient values of the candidate samples to determine the texture feature indices corresponding to the candidate samples; and perform gradient magnitude calculation according to the horizontal gradient values and the vertical gradient values of the candidate samples to determine the gradient magnitude values corresponding to the candidate samples.

In some embodiments, the second determination unit 2702 is further configured to determine the texture feature indices corresponding to the candidate samples using a preset lookup table according to the horizontal gradient values and the vertical gradient values of the candidate samples.

In some embodiments, the second determination unit 2702 is further configured to perform addition operations on the absolute values of the horizontal gradient values and the absolute values of the vertical gradient values to determine the gradient magnitude values corresponding to the candidate samples.

In some embodiments, the second determination unit 2702 is further configured to determine, in a case where a number of the candidate samples is at least one, at least one texture feature index and at least one corresponding gradient magnitude value; determine at least one reference texture feature index with mutually distinct characteristics according to the at least one texture feature index, and perform an accumulation calculation on gradient magnitude values belonging to a same reference texture feature index according to the at least one gradient magnitude value to determine an accumulated gradient magnitude value corresponding to the at least one reference texture feature index; and construct the texture feature statistics table according to the at least one reference texture feature index and the accumulated gradient magnitude value corresponding to the at least one reference texture feature index.

In some embodiments, the second determination unit 2702 is further configured to sort the texture feature statistics table in descending order of accumulated gradient magnitude values to determine at least two top-ranked accumulated gradient magnitude values; and determine reference texture feature indices corresponding to the at least two top-ranked accumulated gradient magnitude values as the at least two texture feature indices of the current block.

In some embodiments, the second determination unit 2702 is further configured to determine a reference block of the current block; and determine the at least two texture feature indices of the current block according to at least two texture feature indices of the reference block.

In some embodiments, the second determination unit 2702 is further configured to construct a candidate list, where the candidate list includes N candidate texture feature indices, N being an integer greater than 1; the encoding unit 2701 is further configured to decode the bitstream to determine at least two feature index numbers of the current block; and the second determination unit 2702 is further configured to determine the at least two texture feature indices of the current block according to the candidate list and the at least two feature index numbers.

In some embodiments, the second determination unit 2702 is further configured to sort a texture feature statistics table in descending order of accumulated gradient magnitude values to determine N reference texture feature indices corresponding to N top-ranked accumulated gradient magnitude values; and construct the candidate list according to the N reference texture feature indices.

In some embodiments, the second determination unit 2702 is further configured to determine a first texture feature index corresponding to a geometric partitioning mode for the current block, and determine (N-1) reference texture feature indices corresponding to (N-1) top-ranked accumulated gradient magnitude values; and construct the candidate list according to the first texture feature index and the (N-1) reference texture feature indices.

In some embodiments, the encoding unit 2701 is further configured to decode the bitstream to determine transform mode flag information of the current block; and perform, in a case where the transform mode flag information indicates that the current block uses a first transform mode, the step of decoding the bitstream to determine the at least two feature index numbers of the current block.

In some embodiments, the second determination unit 2702 is further configured to determine transform coefficients of the current block; and the encoding unit 2701 is further configured to perform, in a case where non-zero coefficient information in the transform coefficients satisfies a preset condition, the step of decoding the bitstream to determine the value of the first syntax flag information.

In some embodiments, the non-zero coefficient information in the transform coefficients satisfying the preset condition includes: a number of coefficients between a first coefficient and a last non-zero coefficient in the transform coefficients not exceeding a first threshold.

In some embodiments, the encoding unit 2701 is further configured to decode the bitstream to determine a value of third syntax flag information; and perform, in a case where the third syntax flag information indicates that a current sequence is allowed to use the multiple transform combination mode, the step of decoding the bitstream to determine the value of the first syntax flag information, where the current sequence includes the current block.

In some embodiments, the encoding unit 2701 is further configured to decode the bitstream to determine a value of third syntax flag information; decode the bitstream to determine a value of fourth syntax flag information in a case where the third syntax flag information indicates that a current sequence is allowed to use the multiple transform combination mode; and perform, in a case where the fourth syntax flag information indicates that a current slice is allowed to use the multiple transform combination mode, the step of decoding the bitstream to determine the value of the first syntax flag information, where the current sequence includes the current slice, and the current slice includes the current block.

It may be understood that in the embodiments, the "unit" may be part of a circuit, part of a processor, part of a program or software, or the like, and may also be a module or may be non-modular. Moreover, various components in the present embodiment may be integrated into one processing unit, or each unit may be physically present alone, or two or more units may be integrated into one unit. The above integrated units may be implemented in the form of hardware or software function modules.

The integrated unit may be stored in a computer readable storage medium when it is implemented in the form of software functional modules and is not sold or used as a separate product. Based on such understanding, the embodiments of the present application provide a computer-readable storage medium, which is applied to the decoder 270. The computer-readable storage medium has a computer program stored thereon, and the computer program implements, when executed by a first processor, the method according to any one of the above embodiments.

Based on the composition of the decoder 270 and the computer-readable storage medium described above, FIG. 28 is a schematic diagram of a specific hardware structure of a decoder provided in an embodiment of the present application. As illustrated in FIG. 28, the decoder 270 may include: a second communication interface 2801, a second memory 2802, and a second processor 2803. Each component is coupled together via a second bus system 2804. It may be understood that the second bus system 2804 is configured to achieve connection and communication between these components. In addition to a data bus, the second bus system 2804 further includes a power bus, a control bus and a status signal bus. However, for the sake of clarity, various buses are labeled as the second bus system 2804 in FIG. 28.

The second communication interface 2801 is configured to receive and transmit signals in the process of transmitting and receiving information with other external network elements.

The second memory 2802 is configured to store a computer program executable on the second processor 2803.

The second processor 2803 is configured to, when executing the computer program, perform:
decoding a bitstream to determine a value of first syntax flag information; in a case where the first syntax flag information indicates that a current block uses a multiple transform combination mode, determining at least two sets of first transform coefficients of the current block; determining at least two transform kernels of the current block, and performing inverse transform on the at least two sets of first transform coefficients according to the at least two transform kernels respectively, to determine at least two first residual blocks of the current block; and determining a reconstructed block of the current block according to the at least two first residual blocks.

Optionally, as another embodiment, the second processor 2803 is further configured to perform, when executing the computer program, the method described in any one of the above embodiments.

It is to be understood that the hardware functions of the second memory 2802 are similar to those of the first memory 2602, and the hardware functions of the second processor 2803 are similar to those of the first processor 2603, which will not be repeated here.

The embodiment provides a decoder. The decoder first needs to determine at least two transform kernels of the current block, and then perform inverse transform on at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

In yet another embodiment of the present application, FIG. 29 is a schematic diagram of a composition structure of an encoding and decoding system provided in an embodiment of the present application. As illustrated in FIG. 29, the encoding and decoding system 290 may include an encoder 2901 and a decoder 2902.

In the embodiments of the present disclosure, the encoder 2901 may be the encoder described in any one of the above embodiments, and the decoder 2902 may be the decoder described in any one of the above embodiments.

It should be noted that, in the embodiments of the present disclosure, the terms "comprising", "including" or any other variations thereof are intended to encompass a non-exclusive inclusion, so that a process, method, article or apparatus including a series of elements includes not only those elements, but also other elements not explicitly listed, or also includes elements inherent to such process, method, article or apparatus. Without more limitations, an element defined by the phrase "comprising a..." does not exclude the presence of other identical elements in the process, method, article or apparatus comprising the element.

The serial numbers of the above embodiments of the present disclosure are for description only and do not represent the advantages or disadvantages of the embodiments.

The methods disclosed in several method embodiments provided in the present disclosure may be arbitrarily combined without conflict to obtain new method embodiments.

The features disclosed in several product embodiments provided in the present disclosure may be arbitrarily combined without conflict to obtain new product embodiments.

The features disclosed in several method or device embodiments provided in the present disclosure may be arbitrarily combined without conflict to obtain new method embodiments or device embodiments.

The foregoing are merely specific implementations of the present disclosure, but the protection scope of the present disclosure is not limited thereto. Any person skilled in the art may readily conceive variations or substitutions within the technical scope disclosed by the present disclosure, which should be included within the protection scope of the present disclosure. Therefore, the protection scope of the present disclosure shall be subject to the protection scope of the claims.

### INDUSTRIAL APPLICABILITY

In the embodiments of the present application, at the encoding side, a residual block of a current block is determined; in a case where the current block uses a multiple transform combination mode, at least two first residual blocks of the current block are determined according to the residual block of the current block; at least two transform kernels of the current block are determined, and transform is performed on the at least two first residual blocks according to the at least two transform kernels respectively, to determine at least two sets of first transform coefficients of the current block; and the at least two sets of first transform coefficients of the current block are encoded, and obtained encoded bits are signalled into a bitstream. At the decoding side, a bitstream is decoded to determine a value of first syntax flag information; in a case where the first syntax flag information indicates that a current block uses a multiple transform combination mode, at least two sets of first transform coefficients of the current block are determined; at least two transform kernels of the current block are determined, and inverse transform is performed on the at least two sets of first transform coefficients according to the at least two transform kernels respectively, to determine at least two first residual blocks of the current block; and a reconstructed block of the current block is determined according to the at least two first residual blocks. In this way, whether at the encoding side or the decoding side, when it is determined that the current block uses the multiple transform combination mode, it is first necessary to determine the at least two transform kernels of the current block. Then, the encoder performs transform on the at least two first residual blocks of the current block according to the at least two transform kernels respectively, while the decoding side performs inverse transform on the at least two sets of first transform coefficients of the current block according to the at least two transform kernels respectively. That is, the current block can use the at least two transform kernels to process multiple transform/inverse transform procedures in parallel, utilizing each of the multiple transform kernels to efficiently process a portion of the texture, and finally combine the multiple residual blocks. This can improve processing efficiency, and for certain relatively complex residual blocks, the compression efficiency can also be higher than that achieved using a single transform kernel, thereby enhancing encoding and decoding performance.

## Claims

1. A decoding method, applied to a decoder, comprising:
decoding a bitstream to determine a value of first syntax flag information;
in a case where the first syntax flag information indicates that a current block uses a multiple transform combination mode, determining at least two sets of first transform coefficients of the current block;
determining at least two transform kernels of the current block, and performing inverse transform on the at least two sets of first transform coefficients according to the at least two transform kernels respectively, to determine at least two first residual blocks of the current block; and
determining a reconstructed block of the current block according to the at least two first residual blocks.

2. The method according to claim 1, wherein determining the reconstructed block of the current block according to the at least two first residual blocks comprises:
determining a prediction block of the current block; and
determining the reconstructed block of the current block according to the prediction block and the at least two first residual blocks.

3. The method according to claim 2, wherein determining the reconstructed block of the current block according to the prediction block and the at least two first residual blocks comprises:
determining a second residual block according to the at least two first residual blocks; and
determining the reconstructed block of the current block according to the prediction block and the second residual block.

4. The method according to claim 3, wherein determining the second residual block according to the at least two first residual blocks comprises:
performing an addition operation on the at least two first residual blocks to determine the second residual block.

5. The method according to claim 3, wherein determining the second residual block according to the at least two first residual blocks comprises:
in a case where a non-zero overlapping region exists among the at least two first residual blocks, determining an uppermost residual block of the at least two first residual blocks; and
determining residual values of the second residual block in the non-zero overlapping region according to the uppermost residual block.

6. The method according to claim 5, wherein determining the uppermost residual block of the at least two first residual blocks comprises:
decoding the bitstream to determine a value of second syntax flag information; and
determining the uppermost residual block of the at least two first residual blocks according to the value of the second syntax flag information.

7. The method according to claim 1, wherein determining the at least two sets of first transform coefficients of the current block comprises:
decoding the bitstream to determine the at least two sets of first transform coefficients of the current block.

8. The method according to claim 1, wherein determining the at least two sets of first transform coefficients of the current block comprises:
decoding the bitstream to determine second transform coefficients of the current block; and
in a case where the first syntax flag information indicates that the current block uses the multiple transform combination mode, determining the at least two sets of first transform coefficients of the current block according to the second transform coefficients.

9. The method according to claim 8, wherein determining the at least two sets of first transform coefficients of the current block according to the second transform coefficients comprises:
evenly partitioning the second transform coefficients to determine the at least two sets of first transform coefficients of the current block.

10. The method according to claim 8, wherein determining the at least two sets of first transform coefficients of the current block according to the second transform coefficients comprises:
determining a last non-zero coefficient in the second transform coefficients; and
partitioning the second transform coefficients according to a partitioning strategy indicated by the last non-zero coefficient to determine the at least two sets of first transform coefficients of the current block.

11. The method according to any one of claims 1 to 10, wherein determining the at least two transform kernels of the current block comprises:
decoding the bitstream to determine the at least two transform kernels of the current block.

12. The method according to any one of claims 1 to 10, wherein determining the at least two transform kernels of the current block comprises:
determining at least two texture feature indices of the current block;
determining at least two transform kernel sets according to the at least two texture feature indices; and
determining the at least two transform kernels of the current block according to the at least two transform kernel sets.

13. The method according to claim 12, wherein determining the at least two transform kernels of the current block according to the at least two transform kernel sets comprises:
decoding the bitstream to determine at least two transform kernel indices of the current block; and
determining the at least two transform kernels of the current block according to the at least two transform kernel sets and the corresponding at least two transform kernel indices.

14. The method according to claim 12, wherein determining the at least two texture feature indices of the current block comprises:
determining candidate samples for deriving the at least two texture feature indices; and
determining the at least two texture feature indices of the current block according to the candidate samples.

15. The method according to claim 14, wherein determining the at least two texture feature indices of the current block according to the candidate samples comprises:
determining horizontal gradient values and vertical gradient values of the candidate samples;
determining texture feature indices and gradient magnitude values corresponding to the candidate samples according to the horizontal gradient values and the vertical gradient values of the candidate samples;
constructing a texture feature statistics table according to the texture feature indices and the gradient magnitude values corresponding to the candidate samples; and
determining the at least two texture feature indices of the current block according to the texture feature statistics table.

16. The method according to claim 14, wherein the method further comprises:
determining a prediction block of the current block; and
taking at least a portion of samples in the prediction block as the candidate samples.

17. The method according to claim 16, wherein the method further comprises:
determining neighboring samples in a reconstructed region of the current block; and
taking the neighboring samples in the reconstructed region as the candidate samples.

18. The method according to claim 17, wherein the method further comprises:
taking the neighboring samples in the reconstructed region and at least the portion of samples in the prediction block as the candidate samples.

19. The method according to claim 14, wherein the method further comprises:
determining a reference block of the current block; and
taking at least a portion of samples in the reference block as the candidate samples.

20. The method according to claim 19, wherein determining the reference block of the current block comprises:
determining that the reference block is an integer-pel reference block; or
determining that the reference block is a fractional-pel reference block.

21. The method according to claim 20, wherein in a case where the reference block is the fractional-pel reference block, determining the reference block of the current block comprises:
determining two reference picture blocks for bi-directional prediction of the current block;
performing fractional-pel interpolation filtering on the two reference picture blocks to determine two fractional-pel reference picture blocks; and
performing weighted combination on the two fractional-pel reference picture blocks to determine the reference block of the current block.

22. The method according to claim 15, wherein determining the texture feature indices and the gradient magnitude values corresponding to the candidate samples according to the horizontal gradient values and the vertical gradient values of the candidate samples comprises:
performing angle mapping according to the horizontal gradient values and the vertical gradient values of the candidate samples to determine the texture feature indices corresponding to the candidate samples; and
performing gradient magnitude calculation according to the horizontal gradient values and the vertical gradient values of the candidate samples to determine the gradient magnitude values corresponding to the candidate samples.

23. The method according to claim 22, wherein performing angle mapping according to the horizontal gradient values and the vertical gradient values of the candidate samples to determine the texture feature indices corresponding to the candidate samples comprises:
determining the texture feature indices corresponding to the candidate samples using a preset lookup table according to the horizontal gradient values and the vertical gradient values of the candidate samples.

24. The method according to claim 22, wherein performing gradient magnitude calculation according to the horizontal gradient values and the vertical gradient values of the candidate samples to determine the gradient magnitude values corresponding to the candidate samples comprises:
performing addition operations on the absolute values of the horizontal gradient values and the absolute values of the vertical gradient values to determine the gradient magnitude values corresponding to the candidate samples.

25. The method according to claim 15, wherein constructing the texture feature statistics table according to the texture feature indices and the gradient magnitude values corresponding to the candidate samples comprises:
in a case where a number of the candidate samples is at least one, determining at least one texture feature index and at least one corresponding gradient magnitude value;
determining at least one reference texture feature index with mutually distinct characteristics according to the at least one texture feature index, and performing an accumulation calculation on gradient magnitude values belonging to a same reference texture feature index according to the at least one gradient magnitude value to determine an accumulated gradient magnitude value corresponding to the at least one reference texture feature index; and
constructing the texture feature statistics table according to the at least one reference texture feature index and the accumulated gradient magnitude value corresponding to the at least one reference texture feature index.

26. The method according to claim 25, wherein determining the at least two texture feature indices of the current block according to the texture feature statistics table comprises:
sorting the texture feature statistics table in descending order of accumulated gradient magnitude values to determine at least two top-ranked accumulated gradient magnitude values; and
determining reference texture feature indices corresponding to the at least two top-ranked accumulated gradient magnitude values as the at least two texture feature indices of the current block.

27. The method according to claim 12, wherein determining the at least two texture feature indices of the current block comprises:
determining a reference block of the current block; and
determining the at least two texture feature indices of the current block according to at least two texture feature indices of the reference block.

28. The method according to claim 12, wherein determining the at least two texture feature indices of the current block comprises:
constructing a candidate list, wherein the candidate list comprises N candidate texture feature indices, N being an integer greater than 1;
decoding the bitstream to determine at least two feature index numbers of the current block; and
determining the at least two texture feature indices of the current block according to the candidate list and the at least two feature index numbers.

29. The method according to claim 28, wherein constructing the candidate list comprises:
sorting a texture feature statistics table in descending order of accumulated gradient magnitude values to determine N reference texture feature indices corresponding to N top-ranked accumulated gradient magnitude values; and
constructing the candidate list according to the N reference texture feature indices.

30. The method according to claim 29, wherein constructing the candidate list comprises:
determining a first texture feature index corresponding to a geometric partitioning mode for the current block, and determining (N-1) reference texture feature indices corresponding to (N-1) top-ranked accumulated gradient magnitude values; and
constructing the candidate list according to the first texture feature index and the (N-1) reference texture feature indices.

31. The method according to claim 28, wherein the method further comprises:
decoding the bitstream to determine transform mode flag information of the current block; and
in a case where the transform mode flag information indicates that the current block uses a first transform mode, performing the step of decoding the bitstream to determine the at least two feature index numbers of the current block.

32. The method according to any one of claims 1 to 31, wherein the method further comprises:
determining transform coefficients of the current block; and
in a case where non-zero coefficient information in the transform coefficients satisfies a preset condition, performing the step of decoding the bitstream to determine the value of the first syntax flag information.

33. The method according to claim 32, wherein the non-zero coefficient information in the transform coefficients satisfying the preset condition comprises:
a number of coefficients between a first coefficient and a last non-zero coefficient in the transform coefficients not exceeding a first threshold.

34. The method according to any one of claims 1 to 31, wherein the method further comprises:
decoding the bitstream to determine a value of third syntax flag information; and
in a case where the third syntax flag information indicates that a current sequence is allowed to use the multiple transform combination mode, performing the step of decoding the bitstream to determine the value of the first syntax flag information, wherein the current sequence comprises the current block.

35. The method according to any one of claims 1 to 31, wherein the method further comprises:
decoding the bitstream to determine a value of third syntax flag information;
in a case where the third syntax flag information indicates that a current sequence is allowed to use the multiple transform combination mode, decoding the bitstream to determine a value of fourth syntax flag information; and
in a case where the fourth syntax flag information indicates that a current slice is allowed to use the multiple transform combination mode, performing the step of decoding the bitstream to determine the value of the first syntax flag information, wherein the current sequence comprises the current slice, and the current slice comprises the current block.

36. An encoding method, applied to an encoder, comprising:
determining a residual block of a current block;
in a case where the current block uses a multiple transform combination mode, determining at least two first residual blocks of the current block according to the residual block of the current block;
determining at least two transform kernels of the current block, and performing transform on the at least two first residual blocks according to the at least two transform kernels respectively, to determine at least two sets of first transform coefficients of the current block; and
encoding the at least two sets of first transform coefficients of the current block, and signalling obtained encoded bits into a bitstream.

37. The method according to claim 36, wherein encoding the at least two sets of first transform coefficients of the current block, and signalling the obtained encoded bits into the bitstream comprises:
encoding the at least two sets of first transform coefficients of the current block separately, and signalling the obtained encoded bits into the bitstream.

38. The method according to claim 36, wherein encoding the at least two sets of first transform coefficients of the current block, and signalling the obtained encoded bits into the bitstream comprises:
determining second transform coefficients of the current block according to the at least two sets of first transform coefficients of the current block; and
encoding the second transform coefficients of the current block, and signalling the obtained encoded bits into the bitstream.

39. The method according to claim 38, wherein a last non-zero coefficient in the second transform coefficients is used to indicate a partitioning strategy for the at least two sets of first transform coefficients.

40. The method according to claim 36, wherein determining the residual block of the current block comprises:
determining a prediction block of the current block; and
determining the residual block of the current block according to an original picture of the current block and the prediction block of the current block.

41. The method according to claim 36, wherein determining the at least two first residual blocks of the current block according to the residual block of the current block comprises:
performing pre-analysis on the residual block of the current block using a preset manner to determine whether the current block uses the multiple transform combination mode, and in a case where the current block uses the multiple transform combination mode, partitioning the residual block of the current block into the at least two first residual blocks.

42. The method according to claim 36, wherein determining the at least two first residual blocks of the current block according to the residual block of the current block comprises:
splitting the residual block of the current block using a plurality of combination modes to determine a plurality of combined residual blocks;
performing cost calculation on the plurality of combined residual blocks to determine respective cost results of the plurality of combination modes;
determining a target combination mode according to the respective cost results of the plurality of combination modes; and
splitting the residual block of the current block using the target combination mode to determine the at least two first residual blocks of the current block.

43. The method according to claim 42, wherein determining the target combination mode according to the respective cost results of the plurality of combination modes comprises:
determining a minimum cost result from the respective cost results of the plurality of combination modes, and determining a combination mode corresponding to the minimum cost result as the target combination mode.

44. The method according to claim 36, wherein the method further comprises:
determining a value of second syntax flag information, wherein the second syntax flag information is used to indicate an uppermost residual block of the at least two first residual blocks; and
encoding the value of the second syntax flag information, and signalling obtained encoded bits into the bitstream.

45. The method according to any one of claims 36 to 44, wherein determining the at least two transform kernels of the current block comprises:
determining at least two texture feature indices of the current block;
determining at least two transform kernel sets according to the at least two texture feature indices; and
determining the at least two transform kernels of the current block according to the at least two transform kernel sets.

46. The method according to claim 45, wherein the method further comprises:
encoding the at least two transform kernels of the current block, and signalling obtained encoded bits into the bitstream.

47. The method according to claim 45, wherein determining the at least two transform kernels of the current block according to the at least two transform kernel sets comprises:
performing, based on at least one candidate transform kernel in a first transform kernel set, cost value calculation on the at least one candidate transform kernel, to determine respective cost results of the at least one candidate transform kernel; and
determining a minimum cost result from the respective cost results of the at least one candidate transform kernel, and taking a candidate transform kernel corresponding to the minimum cost result as a first transform kernel of the current block;
wherein the first transform kernel set is one of the at least two transform kernel sets, and the first transform kernel is one of the at least two transform kernels.

48. The method according to claim 47, wherein the method further comprises:
determining at least two transform kernel indices of the current block according to the at least two transform kernels of the current block and the at least two transform kernel sets, wherein the at least two transform kernel indices are used to indicate numbers of the at least two transform kernels of the current block in the corresponding transform kernel sets respectively; and
encoding the at least two transform kernel indices, and signalling obtained encoded bits into the bitstream.

49. The method according to claim 45, wherein determining the at least two texture feature indices of the current block comprises:
determining candidate samples for deriving the at least two texture feature indices; and
determining the at least two texture feature indices of the current block according to the candidate samples.

50. The method according to claim 49, wherein determining the at least two texture feature indices of the current block according to the candidate samples comprises:
determining horizontal gradient values and vertical gradient values of the candidate samples;
determining texture feature indices and gradient magnitude values corresponding to the candidate samples according to the horizontal gradient values and the vertical gradient values of the candidate samples;
constructing a texture feature statistics table according to the texture feature indices and the gradient magnitude values corresponding to the candidate samples; and
determining the at least two texture feature indices of the current block according to the texture feature statistics table.

51. The method according to claim 49, wherein the method further comprises:
determining a prediction block of the current block; and
taking at least a portion of samples in the prediction block as the candidate samples.

52. The method according to claim 51, wherein the method further comprises:
determining neighboring samples in a reconstructed region of the current block; and
taking the neighboring samples in the reconstructed region as the candidate samples.

53. The method according to claim 52, wherein the method further comprises:
taking the neighboring samples in the reconstructed region and at least the portion of samples in the prediction block as the candidate samples.

54. The method according to claim 49, wherein the method further comprises:
determining a reference block of the current block; and
taking at least a portion of samples in the reference block as the candidate samples.

55. The method according to claim 54, wherein determining the reference block of the current block comprises:
determining that the reference block is an integer-pel reference block; or
determining that the reference block is a fractional-pel reference block.

56. The method according to claim 55, wherein in a case where the reference block is the fractional-pel reference block, determining the reference block of the current block comprises:
determining two reference picture blocks for bi-directional prediction of the current block;
performing fractional-pel interpolation filtering on the two reference picture blocks to determine two fractional-pel reference picture blocks; and
performing weighted combination on the two fractional-pel reference picture blocks to determine the reference block of the current block.

57. The method according to claim 50, wherein determining the texture feature indices and the gradient magnitude values corresponding to the candidate samples according to the horizontal gradient values and the vertical gradient values of the candidate samples comprises:
performing angle mapping according to the horizontal gradient values and the vertical gradient values of the candidate samples to determine the texture feature indices corresponding to the candidate samples; and
performing gradient magnitude calculation according to the horizontal gradient values and the vertical gradient values of the candidate samples to determine the gradient magnitude values corresponding to the candidate samples.

58. The method according to claim 57, wherein performing angle mapping according to the horizontal gradient values and the vertical gradient values of the candidate samples to determine the texture feature indices corresponding to the candidate samples comprises:
determining the texture feature indices corresponding to the candidate samples using a preset lookup table according to the horizontal gradient values and the vertical gradient values of the candidate samples.

59. The method according to claim 57, wherein performing gradient magnitude calculation according to the horizontal gradient values and the vertical gradient values of the candidate samples to determine the gradient magnitude values corresponding to the candidate samples comprises:
performing addition operations on the absolute values of the horizontal gradient values and the absolute values of the vertical gradient values to determine the gradient magnitude values corresponding to the candidate samples.

60. The method according to claim 50, wherein constructing the texture feature statistics table according to the texture feature indices and the gradient magnitude values corresponding to the candidate samples comprises:
in a case where a number of the candidate samples is at least one, determining at least one texture feature index and at least one corresponding gradient magnitude value;
determining at least one reference texture feature index with mutually distinct characteristics according to the at least one texture feature index, and performing an accumulation calculation on gradient magnitude values belonging to a same reference texture feature index according to the at least one gradient magnitude value to determine an accumulated gradient magnitude value corresponding to the at least one reference texture feature index; and
constructing the texture feature statistics table according to the at least one reference texture feature index and the accumulated gradient magnitude value corresponding to the at least one reference texture feature index.

61. The method according to claim 60, wherein determining the at least two texture feature indices of the current block according to the texture feature statistics table comprises:
sorting the texture feature statistics table in descending order of accumulated gradient magnitude values to determine at least two top-ranked accumulated gradient magnitude values; and
determining reference texture feature indices corresponding to the at least two top-ranked accumulated gradient magnitude values as the at least two texture feature indices of the current block.

62. The method according to claim 45, wherein determining the at least two texture feature indices of the current block comprises:
determining a reference block of the current block; and
determining the at least two texture feature indices of the current block according to at least two texture feature indices of the reference block.

63. The method according to claim 45, wherein determining the at least two texture feature indices of the current block comprises:
constructing a candidate list, wherein the candidate list comprises N candidate texture feature indices, N being an integer greater than 1; and
selecting at least two candidate texture feature indices from the N candidate texture feature indices, and determining the at least two candidate texture feature indices as the at least two texture feature indices of the current block.

64. The method according to claim 63, wherein the method further comprises:
determining at least two feature index numbers of the current block according to the at least two texture feature indices of the current block, wherein the at least two feature index numbers are used to indicate numbers of the at least two texture feature indices of the current block in the candidate list respectively; and
encoding the at least two feature index numbers of the current block, and signalling obtained encoded bits into the bitstream.

65. The method according to claim 63, wherein selecting the at least two candidate texture feature indices from the N candidate texture feature indices comprises:
performing cost value calculation on the N candidate texture feature indices, to determine respective cost results of the N candidate texture feature indices; and
determining at least two target cost values based on the respective cost results of the N candidate texture feature indices, and determining candidate texture feature indices corresponding to the at least two target cost values as the at least two texture feature indices.

66. The method according to claim 63, wherein constructing the candidate list comprises:
sorting a texture feature statistics table in descending order of accumulated gradient magnitude values to determine N reference texture feature indices corresponding to N top-ranked accumulated gradient magnitude values; and
constructing the candidate list according to the N reference texture feature indices.

67. The method according to claim 66, wherein constructing the candidate list comprises:
determining a first texture feature index corresponding to a geometric partitioning mode for the current block, and determining (N-1) reference texture feature indices corresponding to (N-1) top-ranked accumulated gradient magnitude values; and
constructing the candidate list according to the first texture feature index and the (N-1) reference texture feature indices.

68. The method according to claim 64, wherein the method further comprises:
in a case where the current block uses a first transform mode, performing the step of encoding the at least two feature index numbers of the current block, and signalling the obtained encoded bits into the bitstream.

69. The method according to claim 68, wherein the method further comprises:
determining transform mode flag information of the current block, wherein the transform mode flag information is used to indicate whether the current block uses the first transform mode; and
encoding the transform mode flag information of the current block, and signalling obtained encoded bits into the bitstream.

70. The method according to any one of claims 36 to 69, wherein the method further comprises:
determining a value of first syntax flag information, wherein the first syntax flag information is used to indicate whether the current block uses the multiple transform combination mode; and
encoding the value of the first syntax flag information, and signalling obtained encoded bits into the bitstream.

71. The method according to claim 70, wherein the method further comprises:
determining transform coefficients of the current block; and
in a case where non-zero coefficient information in the transform coefficients satisfies a preset condition, performing the step of encoding the value of the first syntax flag information, and signalling the obtained encoded bits into the bitstream.

72. The method according to claim 71, wherein the non-zero coefficient information in the transform coefficients satisfying the preset condition comprises:
a number of coefficients between a first coefficient and a last non-zero coefficient in the transform coefficients not exceeding a first threshold.

73. The method according to any one of claims 36 to 69, wherein the method further comprises:
determining a value of third syntax flag information, wherein the third syntax flag information is used to indicate whether a current sequence is allowed to use the multiple transform combination mode, and the current sequence comprises the current block; and
encoding the value of the third syntax flag information, and signalling obtained encoded bits into the bitstream.

74. The method according to any one of claims 36 to 69, wherein the method further comprises:
determining a value of third syntax flag information and a value of fourth syntax flag information, wherein the third syntax flag information is used to indicate whether a current sequence is allowed to use the multiple transform combination mode, and the fourth syntax flag information is used to indicate whether a current slice is allowed to use the multiple transform combination mode, wherein the current sequence comprises the current slice, and the current slice comprises the current block; and
encoding the value of the third syntax flag information and the value of the fourth syntax flag information, and signalling obtained encoded bits into the bitstream.

75. A bitstream, wherein the bitstream is generated by performing bit encoding on information to be encoded, and the information to be encoded comprises at least one of:
at least two sets of first transform coefficients of a current block, at least two transform kernel indices of the current block, at least two feature index numbers of the current block, transform mode flag information of the current block, a value of first syntax flag information, a value of second syntax flag information, or a value of third syntax flag information;
wherein the value of the first syntax flag information is used to indicate whether a current sequence is allowed to use a multiple transform combination mode, the second syntax flag information is used to indicate an uppermost residual block of at least two first residual blocks, and the value of the third syntax flag information is used to indicate whether a current slice is allowed to use the multiple transform combination mode.

76. An encoder, comprising: a first determination unit, a first transform unit, and an encoding unit; wherein
the first determination unit is configured to: determine a residual block of a current block, and determine at least two first residual blocks of the current block according to the residual block of the current block in a case where the current block uses a multiple transform combination mode;
the first transform unit is configured to: determine at least two transform kernels of the current block, and perform transform on the at least two first residual blocks according to the at least two transform kernels respectively, to determine at least two sets of first transform coefficients of the current block; and
the encoding unit is configured to: encode the at least two sets of first transform coefficients of the current block, and signal obtained encoded bits into a bitstream.

77. An encoder, comprising: a first memory and a first processor; wherein
the first memory is configured to store a computer program executable on the first processor; and
the first processor is configured to perform, when executing the computer program, the method according to any one of claims 36 to 74.

78. A decoder, comprising: a decoding unit, a second determination unit, and a second transform unit; wherein
the decoding unit is configured to: decode a bitstream to determine a value of first syntax flag information;
the second determination unit is configured to: determine at least two sets of first transform coefficients of a current block in a case where the first syntax flag information indicates that the current block uses a multiple transform combination mode;
the second transform unit is configured to: determine at least two transform kernels of the current block, and perform inverse transform on the at least two sets of first transform coefficients according to the at least two transform kernels respectively, to determine at least two first residual blocks of the current block; and
the second determination unit is further configured to: determine a reconstructed block of the current block according to the at least two first residual blocks.

79. A decoder, comprising: a second memory and a second processor; wherein
the second memory is configured to store a computer program executable on the second processor; and
the second processor is configured to perform, when executing the computer program, the method according to any one of claims 1 to 35.

80. A computer-readable storage medium, having a computer program stored thereon, wherein when the computer program is executed by at least one processor, the method according to any one of claims 1 to 35 or the method according to any one of claims 36 to 74 is implemented.
